# EUROPÄISCHE PATENTSCHRIFT

(11) **EP 1 756 248 B1**
(45) Veröffentlichungstag und Bekanntmachung des Hinweises auf die Patenterteilung: **03.12.2008**
(21) Anmeldenummer: 05753002.4
(22) Anmeldetag: 15.06.2005
(51) Int. Cl.: C09K 19/46, C09K 19/12

(54) **FLÜSSIGKRISTALLINES MEDIUM**
LIQUID CRYSTALLINE MEDIUM
SUBSTANCE A CRISTAUX LIQUIDES

(30) Priorität: 18.06.2004 DE 102004029601
(43) Veröffentlichungstag der Anmeldung: 28.02.2007
(73) Patentinhaber: Merck Patent GmbH, 64293 Darmstadt (DE)
(72) Erfinder: MANABE, Atsutaka, 64625 Bensheim (DE); MONTENEGRO, Elvira, 69469 Weinheim (DE); SCHOLZ, Gerald, 64625 Bensheim (DE); PAULUTH, Detlef, 64372 Ober-Ramstadt (DE); SCHOEN, Sabine, 45701 Herten (DE)
(86) Internationale Anmeldenummer: PCT/EP2005/006427
(87) Internationale Veröffentlichungsnummer: WO 2005/123880

(56) Entgegenhaltungen:
- EP-A- 1 302 523
- EP-B- 0 334 911
- WO-A-98/23564
- WO-A-20/04035710
- US-B2- 6 596 350

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic"). Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematische Phasen, relativ niedriger Doppelbrechung, sehr hohem spezifischen Widerstand, guter UV- und Temperaturstabilität und geringerem Dampfdruck erwünscht.

Weiterhin sind auch LCoS^{™}-Anzeigen und Anzeigen, die auf einem Doppelbrechungseffekt beruhen, wie OCB-Anzeigen, interessant.

OCB-Anzeigen ("optically compensated bend") beruhen auf einem Doppelbrechungseffekt und enthalten eine Flüssigkristallschicht mit einer sogenannten "bend"-Struktur. Die "bend"-Zelle, auch bekannt als "pi"-Zelle, wurde erstmals von P. Bos et al., SID 83 Digest, 30 (1983) für eine elektrisch kontrollierbare λ/2-Platte vorgeschlagen, während der OCB-Modus für Anzeigen von Y. Yamaguchi, T. Miyashita und T. Uchida, SID 93 Digest, 277 (1993), und danach in Arbeiten von T. Miyashita et al. in, u.a., Proc. Eurodisplay, 149 (1993), J.Appl.Phys. 34, L177 (1995), SID 95 Digest, 797 (1995), C.-L. Kuo et al., SID 94 Digest, 927 (1994) und M. Suzuki, SID 96 Digest, 618 (1996), beschrieben wurde. Eine OCB-Zelle enthält eine Flüssigkristallzelle mit "bend"-Orientierung und ein Flüssigkristallmedium mit positivem Δε. Darüber hinaus enthalten die aus den oben genannten Dokumenten bekannten OCB-Anzeigen einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber den üblichen Anzeigen, die auf verdrillten nematischen ("twisted nematic", TN) Zellen beruhen, mehrere Vorteile, wie zum Beispiel einen weiteren Blickwinkel und kürzere Schaltzeiten.

Die oben genannten Dokumente haben gezeigt, dass flüssigkristalline Phasen hohe Werte für die optische Anisotropie Δn und einen relativ hohen positiven Wert für die dielektrische Anisotropie Δε sowie vorzugsweise recht niedrige Werte für das Verhältnis der elastischen Konstanten K₃₃/K₁₁ und für die Viskosität aufweisen müssen, um für hochinformative Anzeigeelemente beruhend auf dem OCB-Effekt eingesetzt werden zu können. Für die technische Anwendung des OCB-Effekts in elektrooptischen Anzeigen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich sowie elektrischen Gleich- und Wechselstromfeldern. Ferner wird von technisch verwendbaren FK-Phasen eine flüssigkristalline Mesophase in einem geeigneten Temperaturbereich, eine relativ hohe Doppelbrechung, eine positive dielektrische Anisotropie und eine niedrige Viskosität gefordert.

LCoS^{™} (Liquid Crystal on Silicon)-Anzeigen sind aus dem Stand der Technik bekannt und von Three-Five Systems Inc. (Tempe, Arizona, USA) erhältlich. LCoS^{™}-Mikroanzeigen sind reflektive Anzeigen, die typischerweise eine Flüssigkristallschicht mit verdrillter nematischer Struktur zwischen einer Rückwand aus Silizium und einem Deckglas enthalten. Die Rückwand aus Silizium ist eine Anordnung von Bildpunkten, die jeweils über eine spiegelbildliche Oberfläche verfügen, die gleichzeitig als elektrischer Leiter wirkt. Jeder Bildpunkt enthält einen feststehenden Spiegel, der von einer aktiven Flüssigkristallschicht mit verdrillter nematischer Orientierung bedeckt ist, die durch Anlegen einer Spannung auf homeotrope Orientierung umgeschaltet werden kann. LCoS^{™}-Mikroanzeigen sind klein mit einer Diagonalen von typischerweise weniger als 1,0 Zoll, ermöglichen jedoch hohe Auflösungen von ¼ VGA (78 Tausend Bildpunkte) bis UXGA+ (über 2 Millionen Bildpunkte).

Aufgrund der geringen Bildpunktgröße haben LCoS^{™}-Anzeigen auch eine sehr geringe Zelldicke, die typischerweise etwa 1 Mikrometer beträgt. Die flüssigkristallinen Phasen, die in diesen Anzeigen verwendet werden, müssen daher insbesondere hohe Werte für die optische Anisotropie Δn aufweisen, im Gegensatz zu herkömmlichen FK-Anzeigen des reflektiven Typs, die normalerweise FK-Phasen mit niedrigem Δn erfordern.

OCB-Modus- und LCoS^{™}-Anzeigen können als Matrixanzeigen betrieben werden. Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinern oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfemseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu ereichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Es besteht somit immer noch ein großer Bedarf nach flüssigkristallinen Medien für MFK-, OCB-, IPS-, TN-, LCoS- oder STN-Anzeigen, die eine hohe UV-Stabilität, relativ hohe Δε-Werte, niedrige Schwellen und Klärpunkte ≥ 70 °C aufweisen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)
- höhere optische Anisotropien für schnellere Schaltzeiten aufgrund dünnerer Zelldicken (d · Δn)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde Medien, insbesondere für derartige MFK-, OCB-, IPS-, LCoS-, TN- oder STN-Anzeigen, bereitzustellen, die die oben angegebenen Nachteile nicht oder nur in geringerem Maße, und vorzugsweise gleichzeitig relativ hohe Klärpunkte, niedrige Schwellen und Klärpunkte ≥ 70 °C bereitzustellen. Weiterhin sollten die Mischungen sich durch eine hohe UV-Stabilität auszeichnen.

Es wurde nun gefunden, dass diese Aufgabe gelöst werden kann, wenn man in Anzeigen erfindungsgemäße Medien verwendet. Die erfindungsgemäßen Medien zeichnen sich durch relativ hohe dielektrische Anisotropien und Klärpunkte aus. Gleichzeitig besitzen die Medien sehr niedrige Schwellenspannungen und relativ kleine Rotationsviskositäten γ₁ und eine hervorragende UV-Stabilität.

Gegenstand der Erfindung ist somit ein flüssigkristallines Medium auf der Basis eine Gemisches von polaren Verbindungen, dadurch gekennzeichnet, dass es eine, zwei oder mehr Verbindungen der Formeln I-1 bis I-10, 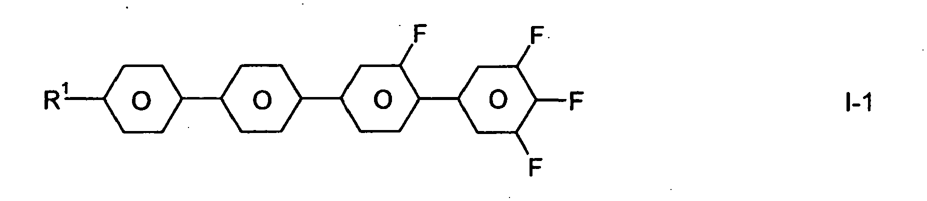 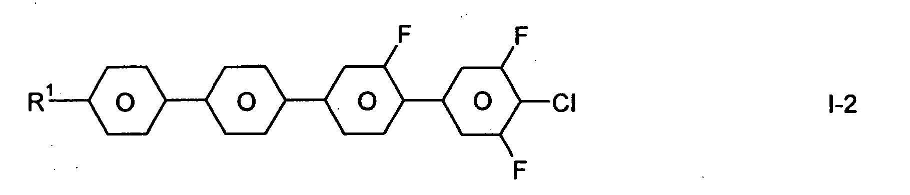 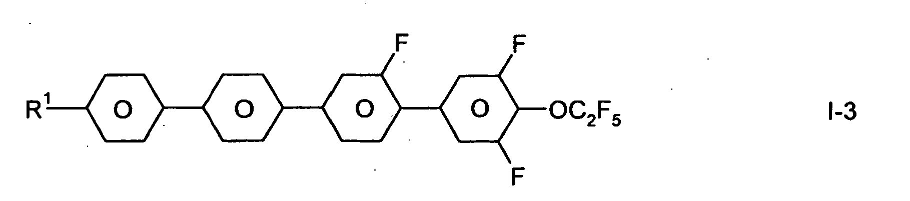 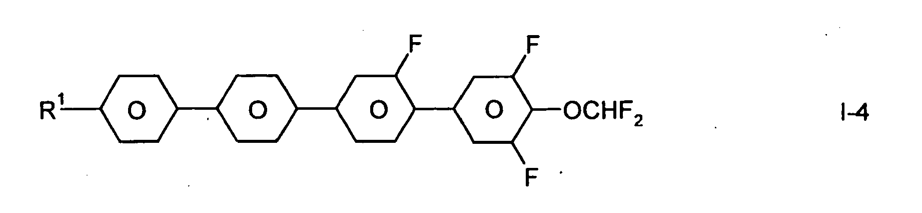 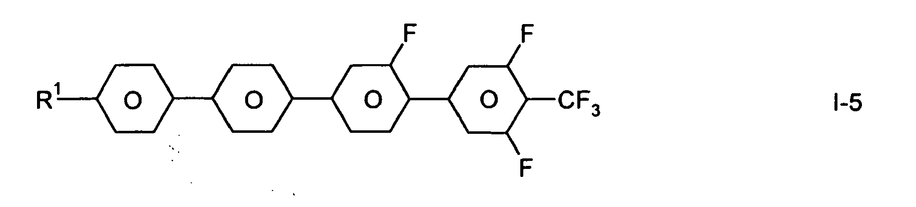 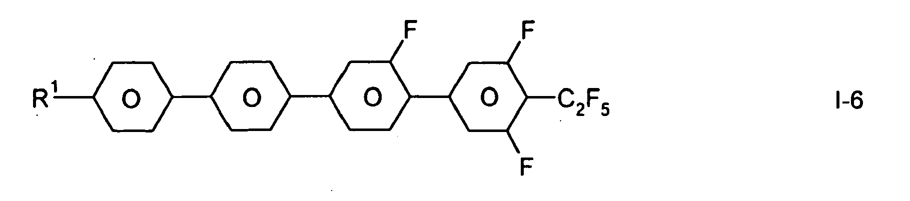 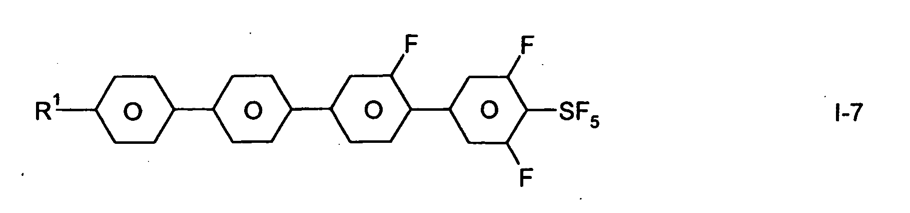 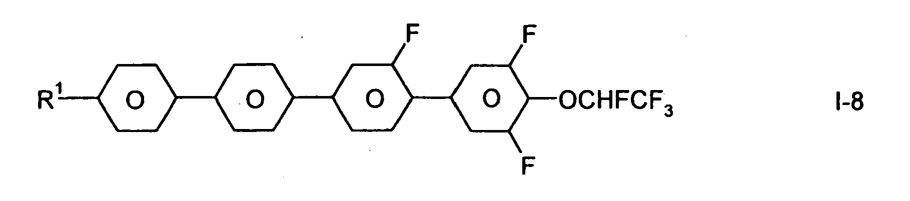 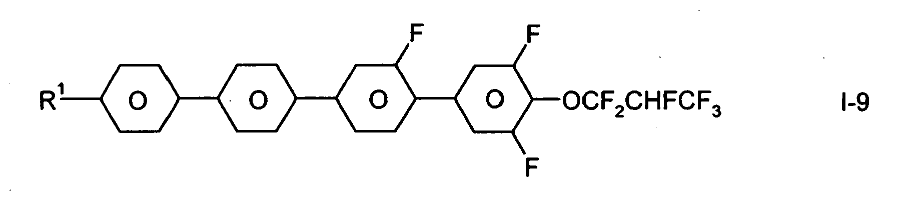 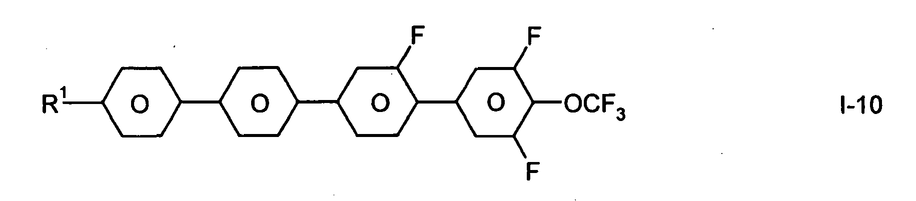 im Folgenden auch als Verbindungen der Formel I bezeichnet,
und
eine oder mehrere Verbindungen der Formel IA, 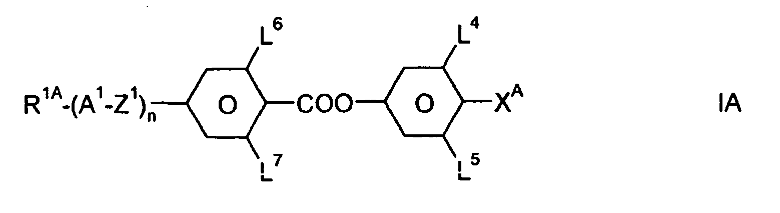 worin
- R¹ und R^{1A}: jeweils unabhängig voneinander einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -OCF₂-, 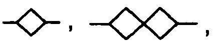 -CH=CH-, -O-, -CO-O- oder -O-CO- so ersetzt sein können, dass O-Atome nicht direkt miteinander verknüpft sind,
- X^{A}: jeweils unabhängig voneinander F, CI, CN, SF₅, SCN, NCS, halogenierter Alkylrest, halogenierter Alkenylrest, halogenierter Alkoxyrest oder halogenierter Alkenyloxyrest mit bis zu 6 C-Atomen,
- A¹: a) einen 1,4-Cyclohexenylen- oder 1,4-Cyclohexylenrest, worin eine ober zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, einen Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
   wobei die Reste a), b) und c) ein oder mehrfach durch Halogenatome substituiert sein können,
- Z¹: -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-; -CH=CF-, -CF=CH-, -CH=CH-, -C≡C- oder eine Einfachbindung,
- L⁴ bis L⁷: jeweils unabhängig voneinander H oder F, und
- n: 0, 1 oder 2
bedeuten,
enthält.

Überraschenderweise wurde gefunden, dass flüssigkristalline Mischungen enthaltend Verbindungen der Formeln I und IA hohe Klärpunkte, relativ niedrige Schwellen und Δn-Werte vorzugsweise von ≥ 0,07, insbesondere von ≥ 0,08, aufweisen.

Besonders bevorzugt sind Verbindungen der Formel I, worin L¹ = F und L² = L³ = H bedeuten. Ganz besonders bevorzugt sind Verbindungen der Formel I, worin L¹= F, L² = L³ = H und X = Cl, CF₃, F, OCF₃ oder OCHF₂ bedeuten. X bedeutet vorzugsweise CN, F, SF₅, OCHF₂, OC₂F₅, OC₃F₇, NCS, OCHFCF₃, OCF₂CHFCF₃, OCF₃. Bevorzugte Verbindungen der Formel IA sind Verbindungen, worin X^{A} = F, OCF₃, CN und mindestens einer der Reste L⁴⁻⁷ Fluor bedeutet. n bedeutet vorzugsweise 1.

Sofern n = 1 oder n = 2 ist, können A¹ bzw. Z¹ jeweils gleiche oder verschiedene Bedeutungen haben.

Im Stand der Technik werden fluorierte Quarterphenyle, z. B. in der U.S. 6,669,998 B2, U.S. 6,565,933 B2, U.S. 6,596,350 A2, WO 89/02 884, WO 90/01 056, WO 91/03 450, EP 0 439 089 B1, DE 44 45 224, WO 98/23 564, EP 1 302 523 A1, EP 1 346 995 beschrieben. Die Verbindungen der Formel I werden dort aber nicht explizit genannt.

Aus der WO 2004/035710 A1 sind Verbindungen der Formel 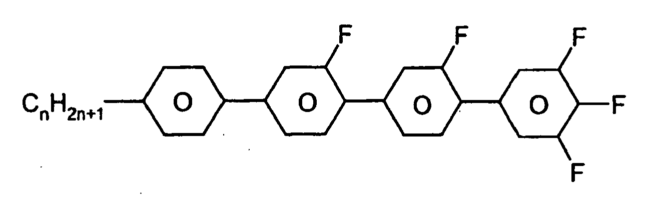 bekannt.

Verbindungen der Formel IA sind beispielsweise bekannt aus der EP0334911.

Die Verbindungen der Formeln I und IA besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Überraschenderweise sind die erfindungsgemäßen Vierkerner sehr gut löslich. So lassen sich erfindungsgemäße Mischungen herstellen, die 0,01-30,0 Gew.% bezogen auf die Mischung an Verbindungen der Formel I enthalten.

Die Verbindungen der Formeln I und IA sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R¹ in Formel I oder R^{1A} in Formel IA einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7-oder 8-Oxanonyl, 2-, 3-, 4-, 5-, 6-, 7-, 8- oder 9-Oxadexyl.

Falls R¹ und/oder R^{1A} einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ und/oder R^{1A} einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxy-carbonyl)-ethyl, 3-(Methoxycarbonyl)-propyl, 3-(Ethoxy-carbonyl)-propyl oder 4-(Methoxycarbonyl)-butyl.

Falls R¹ und/oder R^{1A} einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R¹ und/oder R^{1A} einen einfach durch CN oder CF₃ substituerten Alkyl- oder Alkenylrest bedeutet, so ist dieser Rest vorzugsweise geradkettig. Die Substitution durch CN oder CF₃ ist in beliebiger Position.

Falls R¹ und/oder R^{1A} einen mindestens einfach durch Halogen substituierten Alkyl- oder Alkenylrest bedeutet, so ist dieser Rest vorzugsweise geradkettig und Halogen ist vorzugsweise F oder CI. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Postition sein, vorzugsweise jedoch in ω-Position.

Verbindungen mit verzweigten Flügelgruppen R¹ und/oder R^{1A} können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugte verzweigte Reste R¹ und/oder R^{1A} sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propyl-pentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹ und/oder R^{1A} einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

X^{A} bedeutet in den Verbindungen der Formel IA unabhängig voneinander vorzugsweise F, CI, CN, NCS, CF₃, C₂F₅, C₃F₇, SF₅, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCFHCFHCF₃, OCH₂CF₂CF₃, OCF₂CF₂CF₃, OCF₂CFHCFH₂, OCF₂CH₂CF₂H, OCFHCF₂CFH₂, OCFHCFHCF₂H, OCFHCH₂CF₃, OCH₂CFHCF₃, OCH₂CF₂CF₂H, OCF₂CFHCH₃, OCF₂CH₂CFH₂, OCFHCF₂CH₃, OCFHCFHCFH₂, OCFHCH₂CF₃, OCH₂CF₂CFH₂, OCH₂CFHCF₂H, OCF₂CH₂CH₃, OCFHCFHCH₃, OCFHCH₂CFH₂, OCH₂CF₂CH₃, OCH₂CFHCFH₂, OCH₂CH₂CF₂H, OCHCH₂CH₃, OCH₂CFHCH₃, OCH₂CH₂CF₂H, OCClFCF₃, OCClFCClF₂, OCClFCFH₂, OCFHCCl₂F, OCClFCF₂H, OCClFCClF₂, OCF₂CClH₂, OCF₂CCl₂H, OCF₂CCl₂F, OCF2CCIFH, OCF₂CClF₂, OCF₂CF₂CClF₂, OCF₂CF₂CCl₂F, OCClFCF₂CF₃, OCClFCF₂CF₂H, OCClFCF₂CClF₂, OCClFCFHCF₃, OCClFCClFCF₃, OCCl₂CF₂CF₃, OCClHCF₂CF₃, OCClFCF₂CF₃, OCClFCClFCF₃, OCF₂CClFCFH₂, OCF₂CF₂CCl₂F, OCF₂CCl₂CF₂H, OCF₂CH₂CClF₂, OCClFCF₂CFH₂, OCFHCF₂CCl₂F, OCClFCFHCF₂H, OCClFCClFCF₂H, OCFHCFHCClF₂, OCClFCH₂CF₃, OCFHCCl₂CF₃, OCCl₂CFHCF₃, OCH₂CClFCF₃, OCCl₂CF₂CF₂H , OCH₂CF₂CClF₂, OCF₂CClFCH₃, OCF₂CFHCCl₂H, OCF₂CCl₂CFH₂, OCF₂CH₂CCl₂F, OCClFCF₂CH₃, OCFHCF₂CCl₂H, OCClFCClFCFH₂, OCFHCFHCCl₂F, OCClFCH₂CF₃, OCFHCCl₂CF₃, OCCl₂CF₂CFH₂, OCH₂CF₂CCl₂F, OCCl₂CFHCF₂H, OCClHCClFCF₂H, OCF₂CClHCClH₂, OCF₂CH₂CCl₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CClFCFCl₂, OCH₂CH₂CF₂H, OCClHCClHCF₂H, OCH₂CCl₂CF₂H, OCClFCH₂CH₃, OCFHCH₂CCl₂H, OCClHCFHCClH₂, OCH₂CFHCCl₂H, OCCl₂CH₂CF₂H, OCH₂CCl₂CF₂H, CH=CF₂, CF=CF₂, OCH=CF₂, OCF=CF₂, CH=CHF, OCH=CHF, CF=CHF, OCF=CHF, insbesondere F, Cl, CN, NCS, CF₃, SF₅, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H. OCF₂CF₂CF₃ oder OCF₂CHFCF₃.

Die Verbindungen der Formeln I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Verbindungen der Formel I können beispielsweise wie folgt hergestellt werden, wobei die Substituenten L¹, L², L³ und X analog zu den Verbindungen der Formeln I-1 bis I-10 definiert sind:

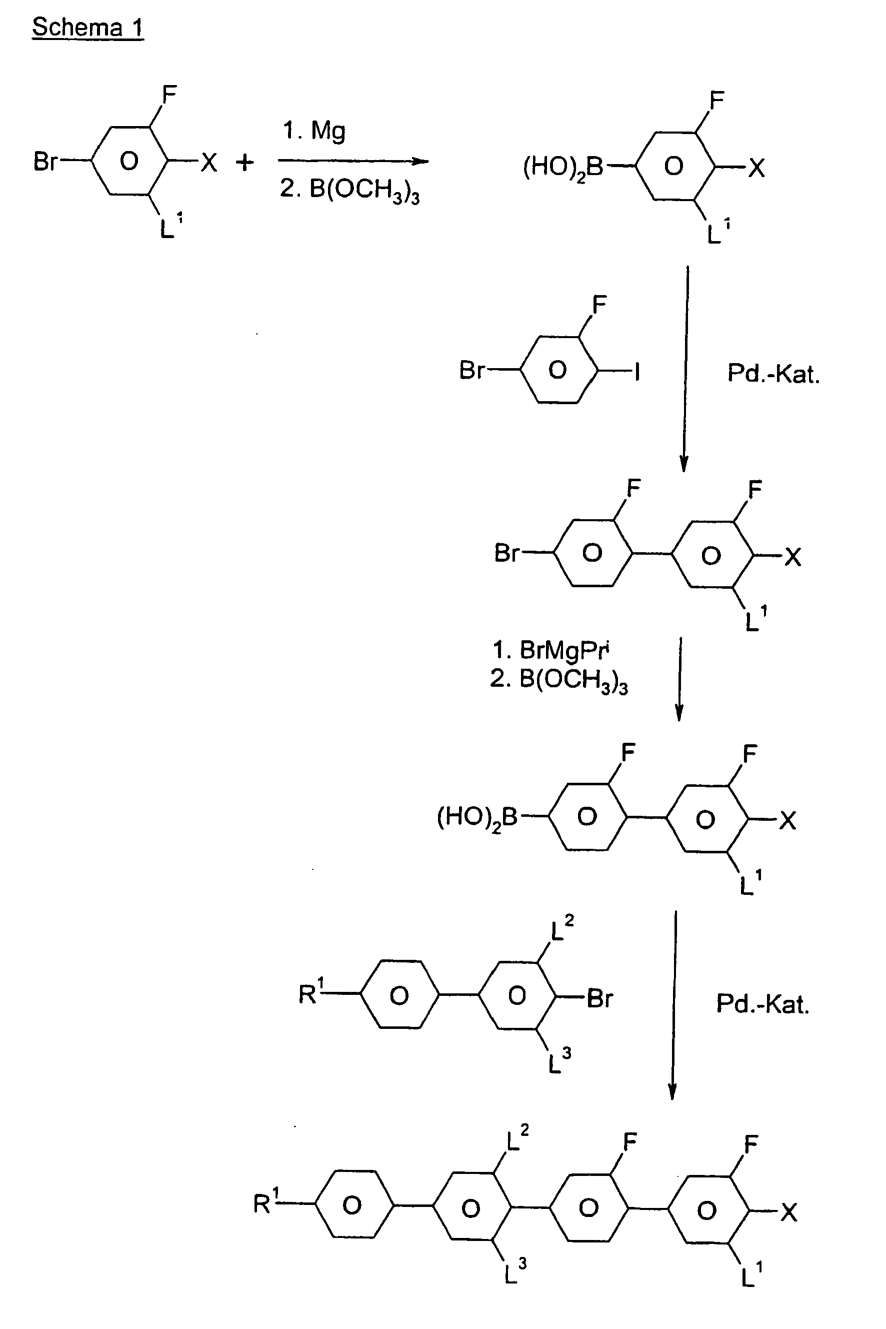

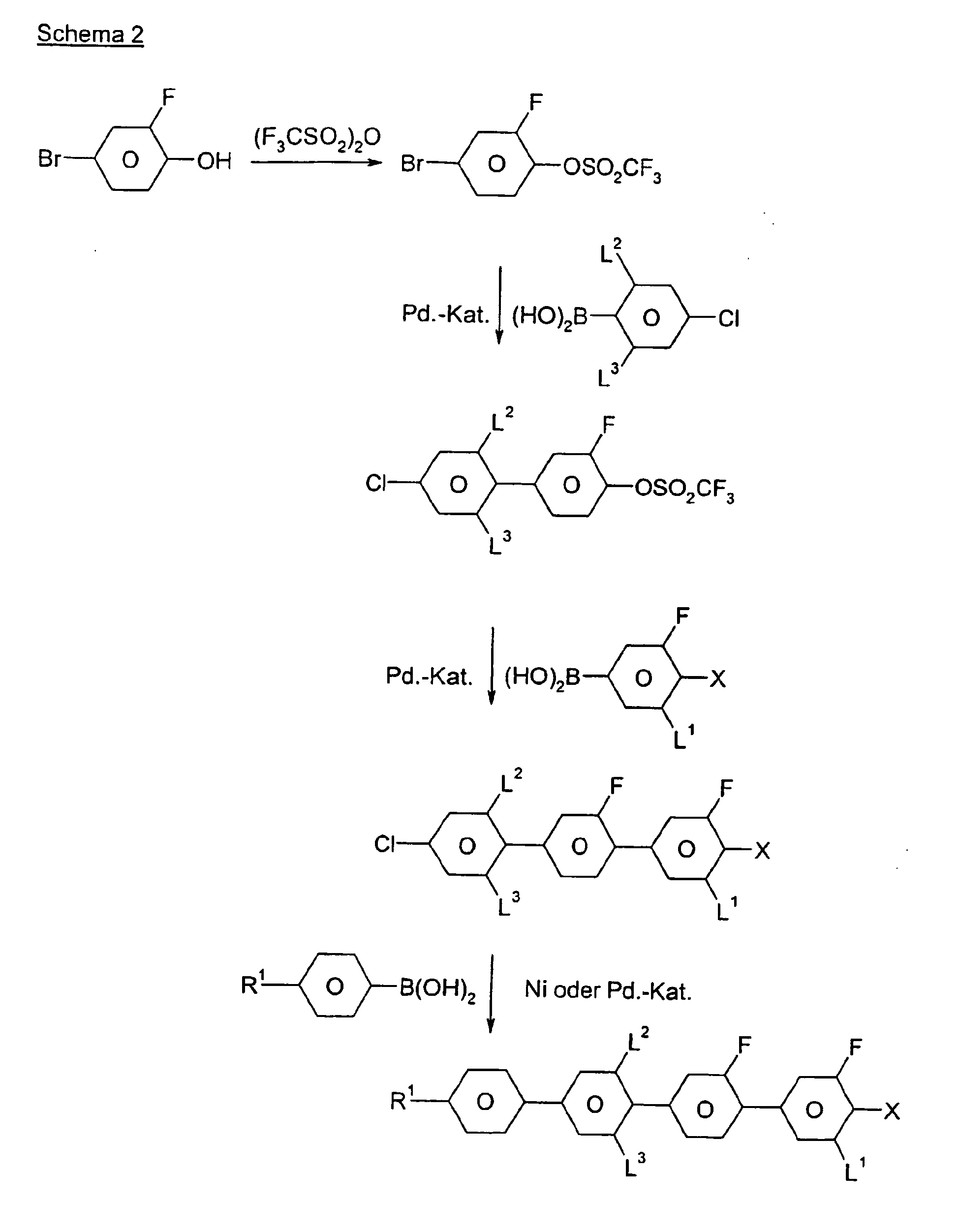

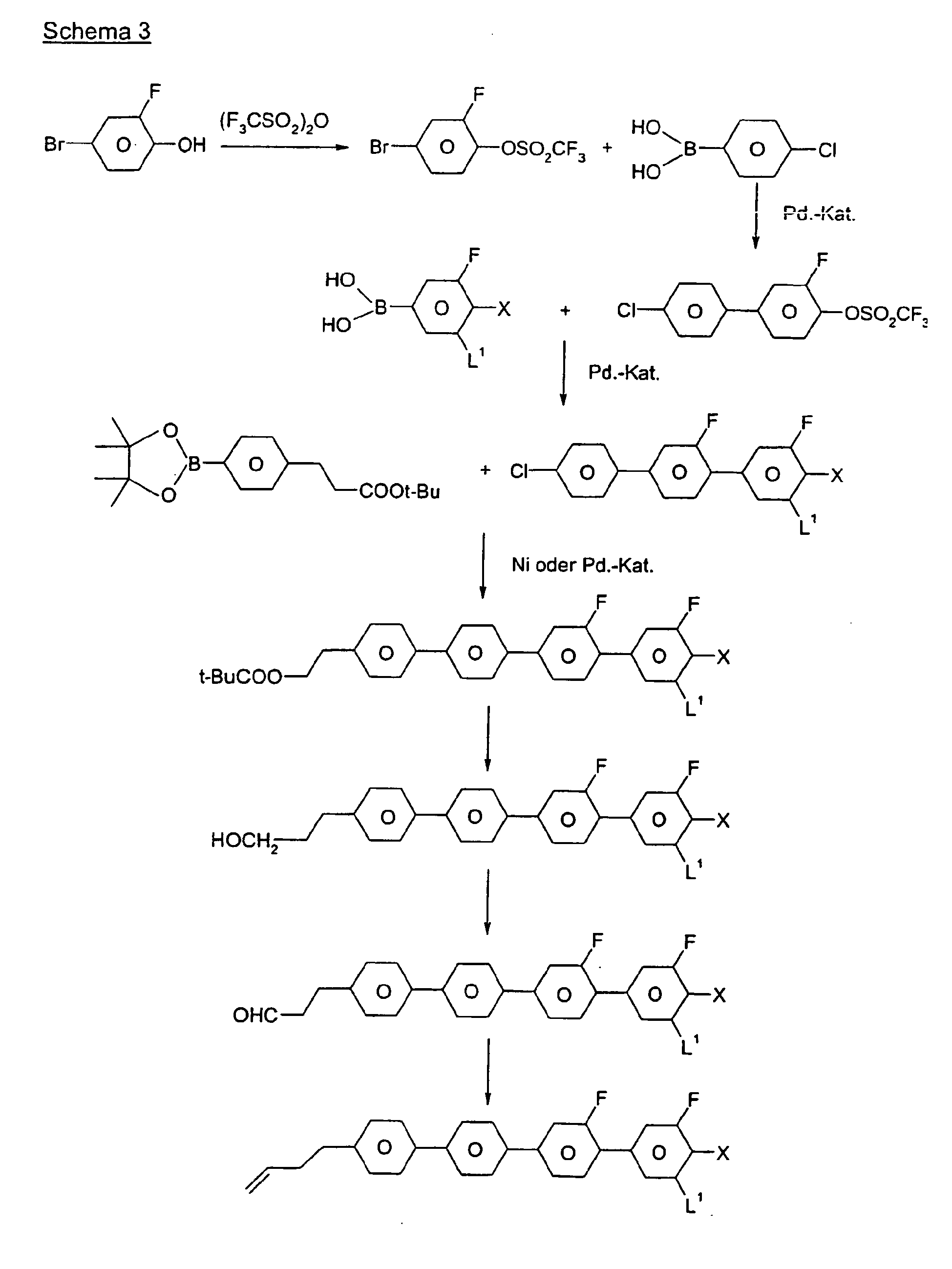

Gegenstand der Erfindung sind auch elektrooptische Anzeigen, wie z. B. STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für schnell schaltende Monitore, TV-Geräte, TV-Monitor-Kombigeräte und high Δn-TFT-Anwendungen, wie z. B. Projektionsfernseher, LCoS und OCB, geeignet.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkte oberhalb 60 °C, vorzugsweise oberhalb 70 °C, besonders bevorzugt oberhalb 80 °C, gleichzeitig dielektrische Anisotropiewerte Δε≥ 4, vorzugsweise ≥ 5 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb 2,5 V, vorzugsweise unterhalb 2,0 V, besonders bevorzugt < 1,8 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm²·s⁻¹, besonders bevorzugt < 50 mm²·s⁻¹. Die Rotationsviskosität γ₁ der erfindungsgemäßen Mischungen bei 20 °C ist vorzugsweise < 150 mPa·s, besonders bevorzugt < 120 mPa·s. Der nematische Phasenbereich ist vorzugsweise mindestens 90°, insbesondere mindestens 100°. Vorzugsweise erstreckt sich dieser Bereich mindestens von -20° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 25 ms benötigt. Die Obergrenze der Schaltzeit wird durch die Bildwiederholfrequenz bestimmt. Neben der Rotationsviskosität γ₁ beeinflusst auch der Tiltwinkel die Schaltzeit.

Messungen des "Voltage Holding-ratio" (HR) [S. Matsumoto et al., Liquid Crystals 5, 1320 (1989); K. Niwa et al., Proc. SID Conference, San Francisco, June 1984; p. 304 (1984); G. Weber et al., Liquid Crystals 5, 1381 (1989)] haben ergeben, dass erfindungsgemäße Mischungen enthaltend Verbindungen der Formeln I und IA eine deutlich kleinere Abnahme des HR unter UV-Belastung aufweisen als analoge Mischungen enthaltend anstelle den Verbindungen der Formeln I und IA Cyanophenylcyclohexane der Formel 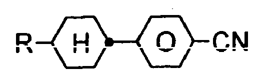 oder Ester der Formel

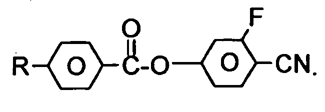

Die UV-Stabilität der erfindungsgemäßen Mischungen ist erheblich besser, d.h. sie zeigen eine deutlich kleinere Abnahme des HR unter UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Wie oben angedeutet bedeutet Verbindung(en) der Formel I eine, zwei oder mehr Verbindungen der Formeln I-1 bis I-10: 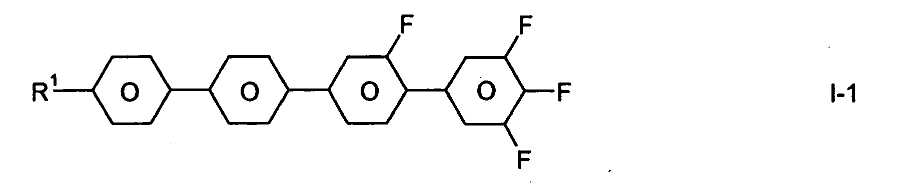 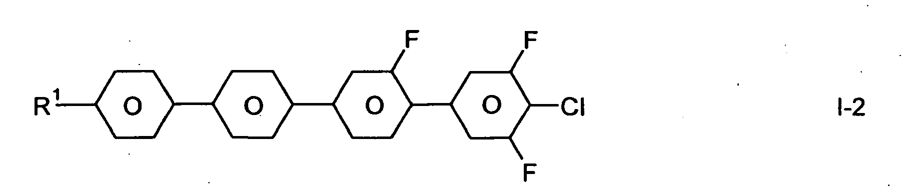 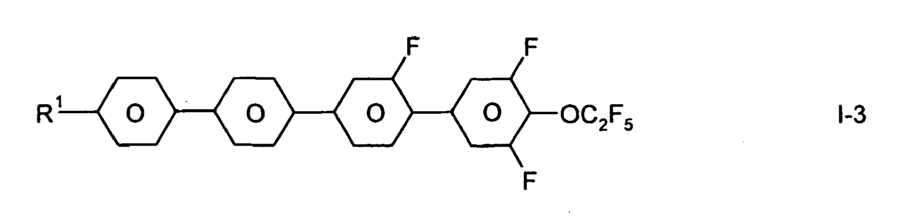 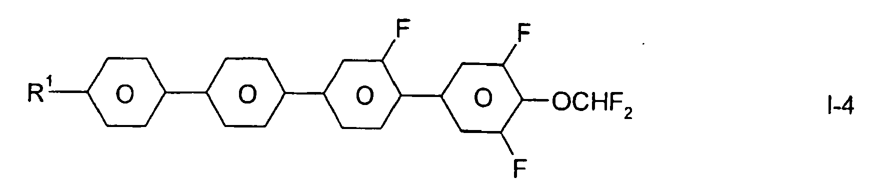 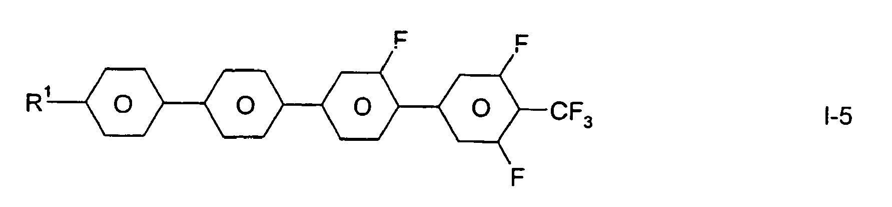 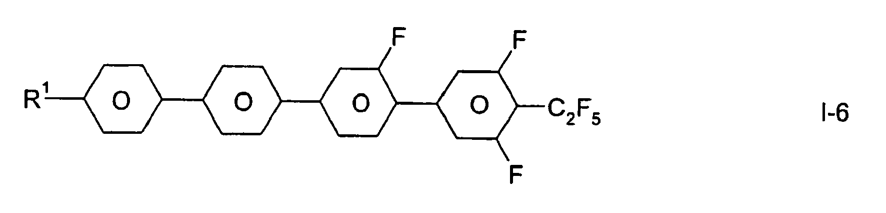 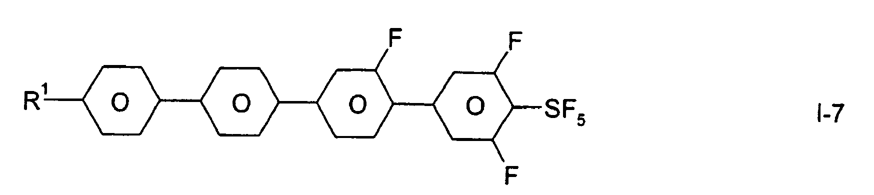 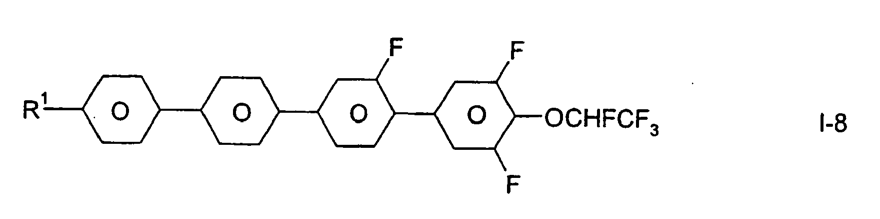 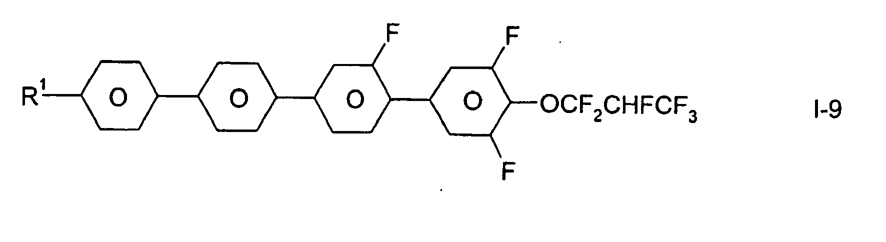 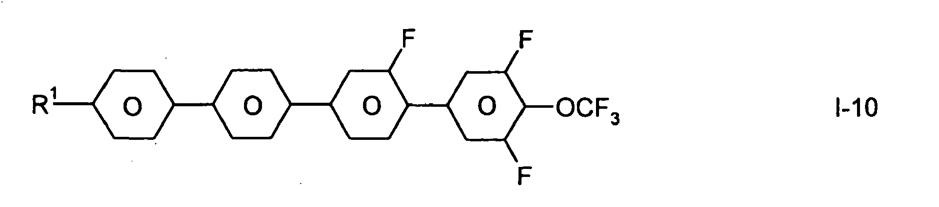 worin R¹ die oben angegebene Bedeutung hat. Vorzugsweise bedeutet R¹ Alkyl, ferner Alkenyl.

Von diesen Verbindungen sind besonders bevorzugt solche der Formeln I-1, I-4, I-7 und I-10, insbesondere die der Formeln I-1 und I-10.

R¹ bedeutet in den Unterformeln I-1 bis I-10 vorzugsweise C₂H₅, n-C₃H₇, n-C₅H₁₁, ferner CH₃, n-C₄H₉, n-C₆H₁₃, n-C₇H₁₅, CH₂=CH, CH₃CH=CH, CH₂=CHCH₂CH₂ oder CH₃CH=CHCH₂CH₂. Ganz besonders bevorzugt bedeutet R¹ n-C₃H₇.

Bevorzugte Ausführungsformen sind im folgenden angegeben:
- Das Medium enthält vorzugsweise mindestens eine der folgenden Verbindungen 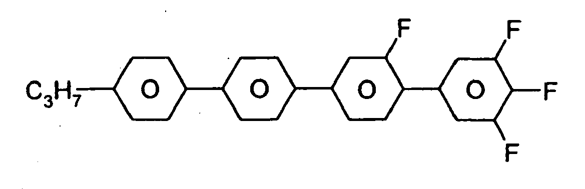 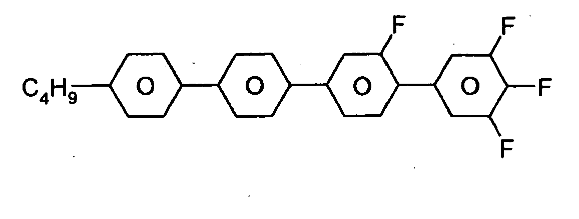 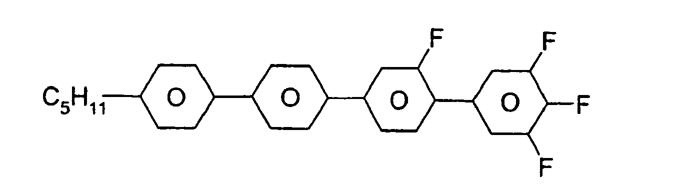 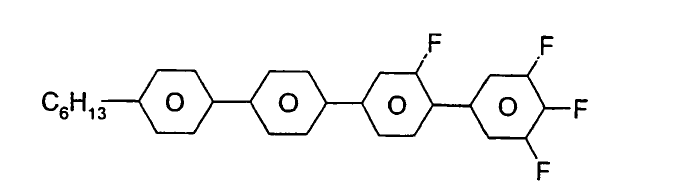 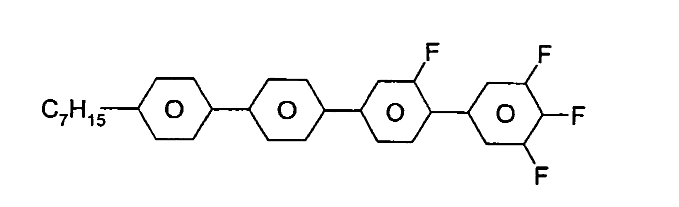 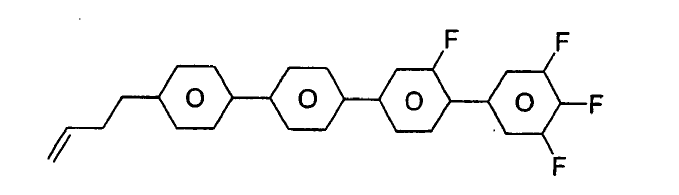 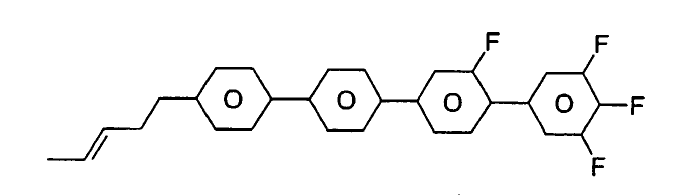 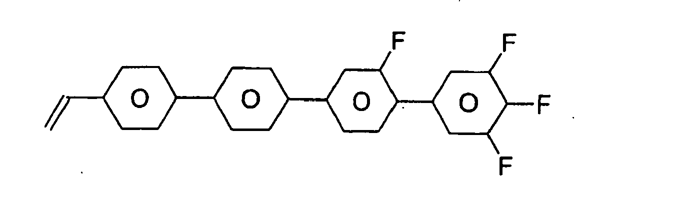 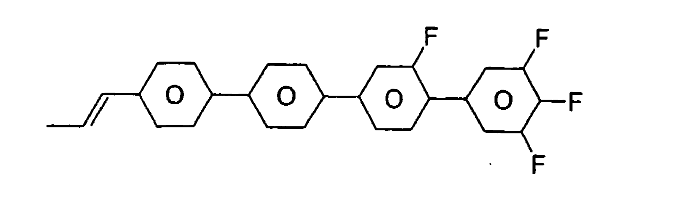 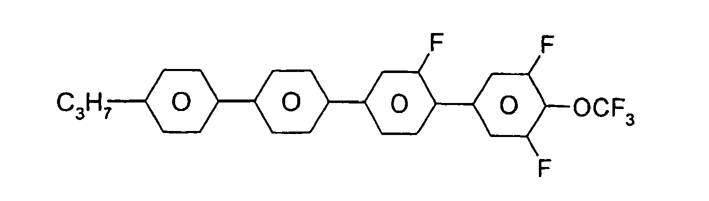 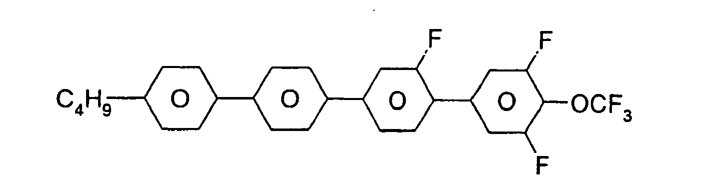 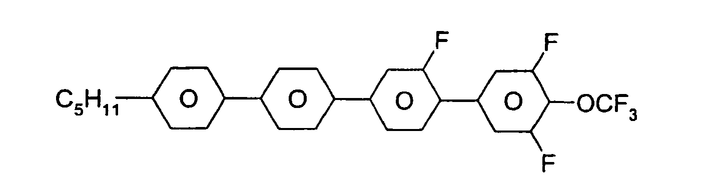 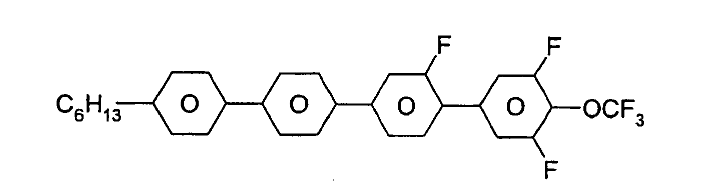 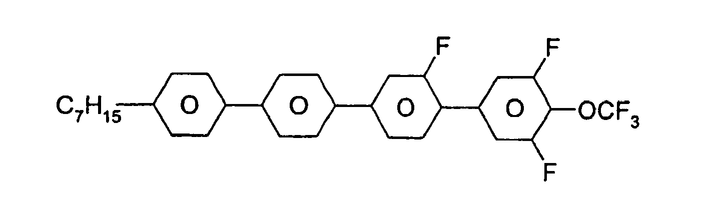 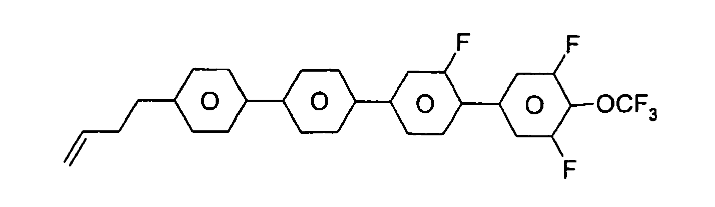 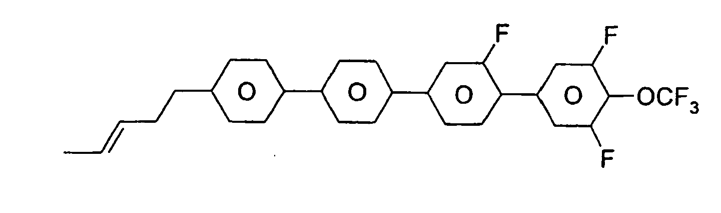 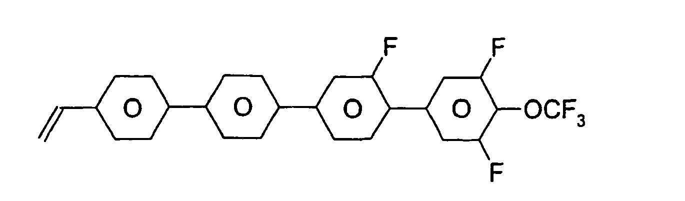 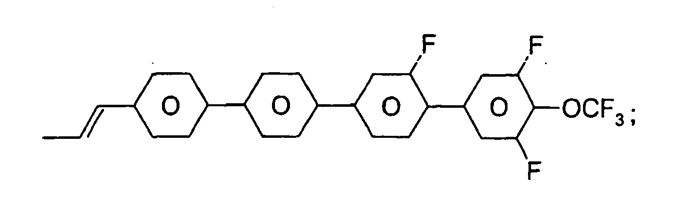
- Das Medium enthält vorzugsweise die Verbindung 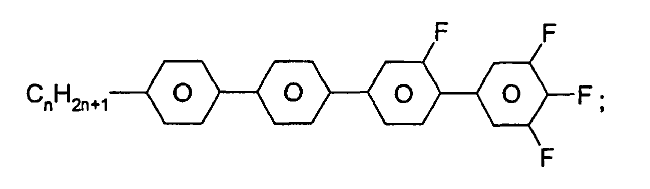
worin n = 3 oder 5 ist. Bevorzugt sind ebenfalls Medien, die eine Verbindung mit n = 3 und eine Verbindung mit n = 5 enthalten.
- Das Medium enthält vorzugsweise eine oder mehrere Verbindungen der Formel IA-1 bis IA-16,

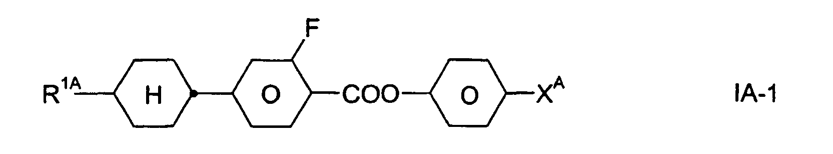

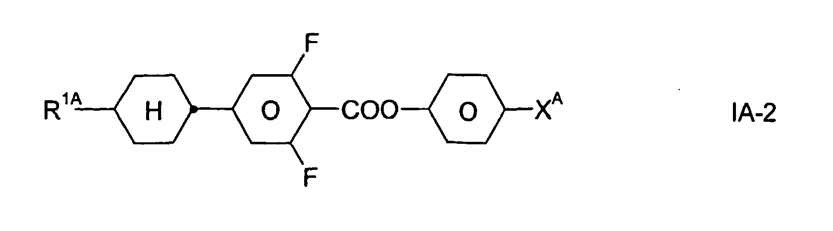

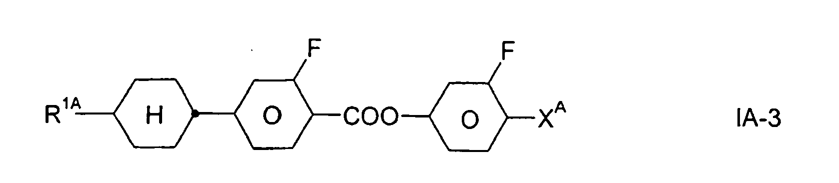

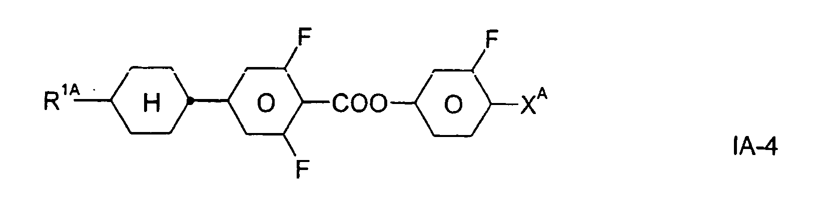

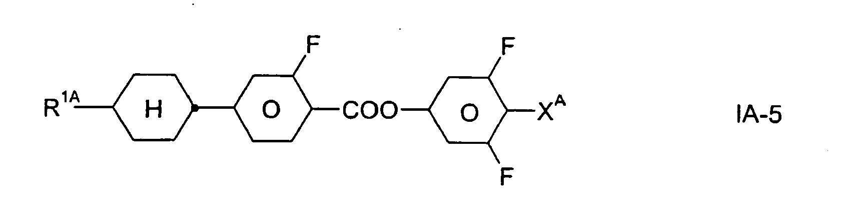

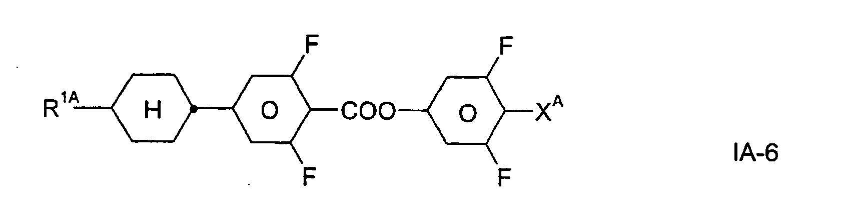

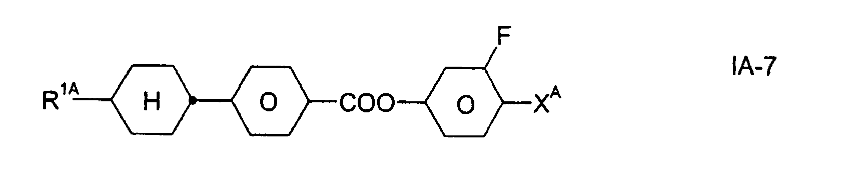

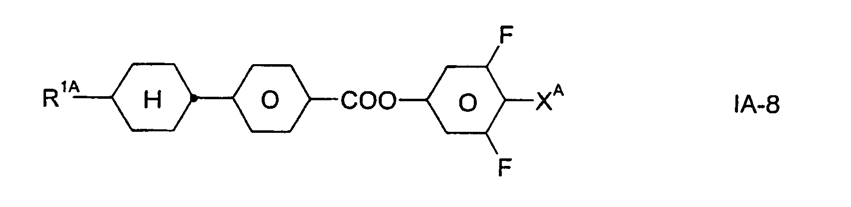

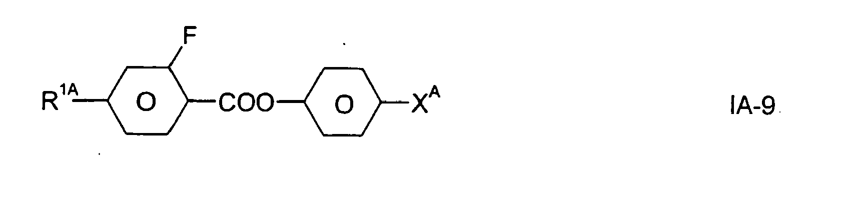

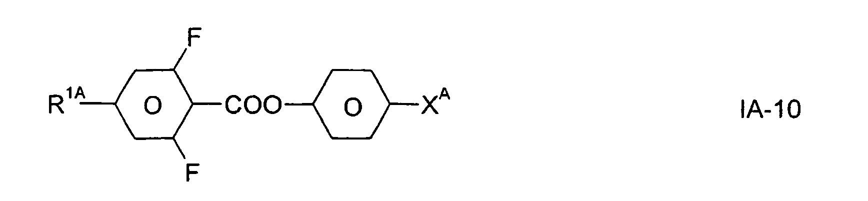

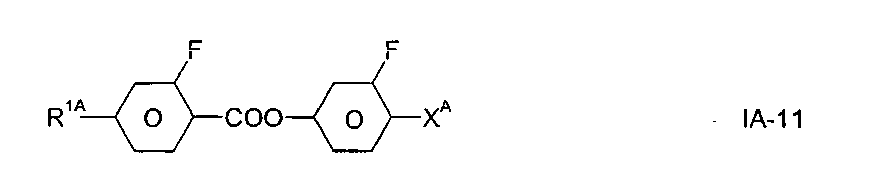

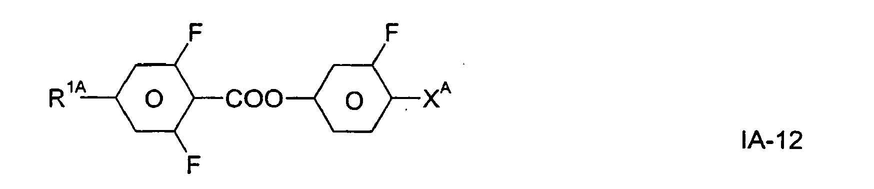

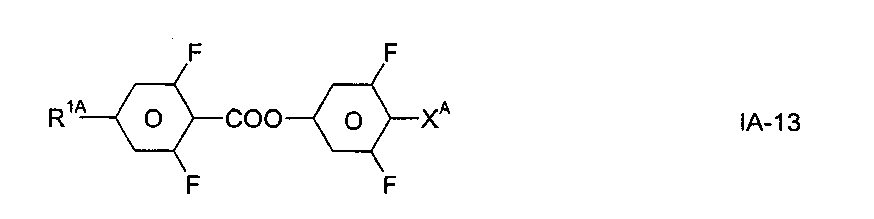

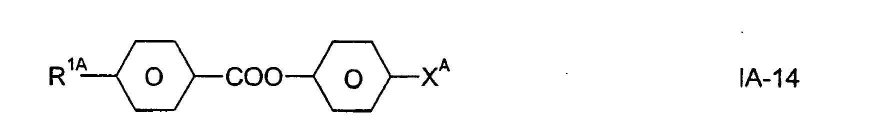

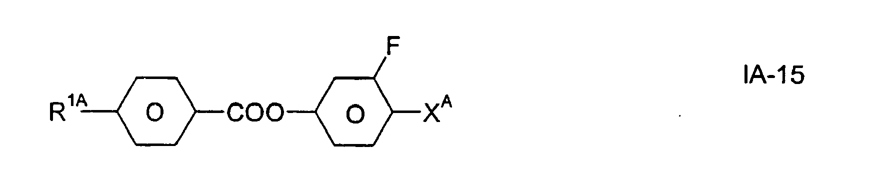

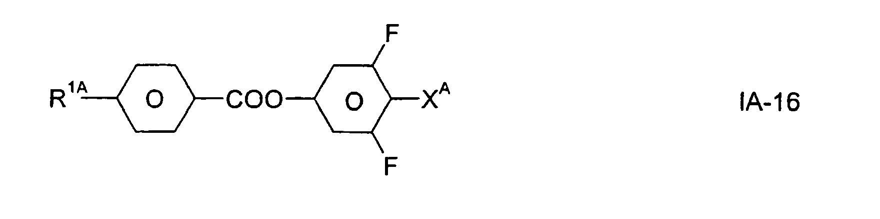

Vorzugsweise bedeutet R^{1A} Alkyl oder Alkenyl, insbesondere CH₃, C₂H₅, n-C₃H₇, n-C₄H₉, n-C₅H₁₁, n-C₆H₁₃, CH₂=CH, CH₃CH=CH, CH₂=CHC₂H₄ und CH₃CH=CHC₂H₄,
X^{A} bedeutet vorzugsweise F, CI, CF₃ oder OCF₃, ferner CN; Besonders bevorzugt sind die Verbindungen IA-1. IA-3. IA-5 und IA-8;
- Das Medium enthält ein, zwei, drei oder vier Verbindungen der Formel IA. Die Konzentration der Verbindung(en) der Fomel IA in der erfindungsgemäßen Mischung beträgt 2-50 Gew.%, vorzugsweise 2-40 Gew.%, insbesondere 5-40 Gew.%.
- Das Medium enthält zusätzlich eine oder mehrere Verbindungen ausgewählt aus der Gruppe bestehend aus den allgemeinen Formeln II bis VI: 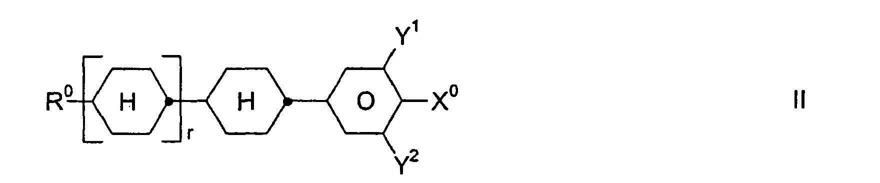 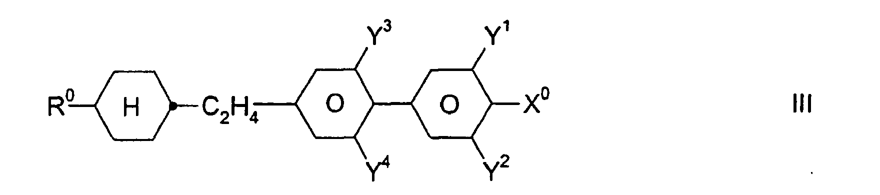 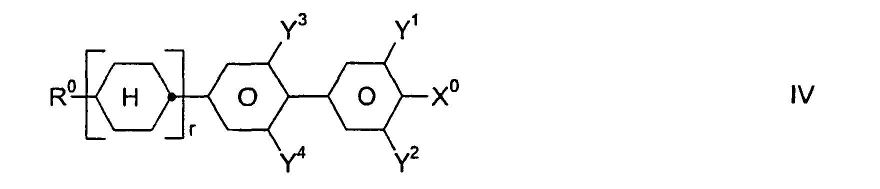 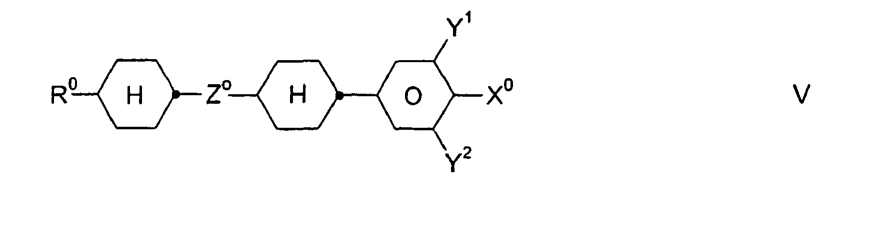 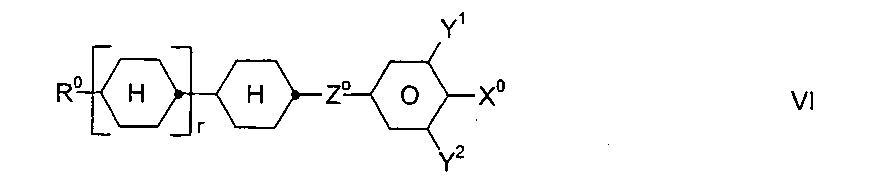
worin die einzelnen Reste die folgenden Bedeutungen haben:
- R⁰: Alkyl, Alkoxy, Oxaalkyl, Fluoralkyl oder Alkenyl mit jeweils bis zu 9 C-Atomen,
- X⁰: F, Cl, halogeniertes Alkyl, halogeniertes Alkenyl, halogeniertes Oxaalkyl, halogeniertes Alkenyloxy oder halogeniertes Alkoxy mit bis zu 6 C-Atomen,
- Z⁰: -C₂F₄-, -CF=CF, -CH=CH-, -C₂H₄-, -(CH₂)₄-, -OCH₂-, -CH₂O-, -CF₂O- oder -OCF₂-,
- Y¹ bis Y⁴: jeweils unabhängig voneinander H oder F,
- r: 0 oder 1.

Die Verbindung der Formel IV ist vorzugsweise 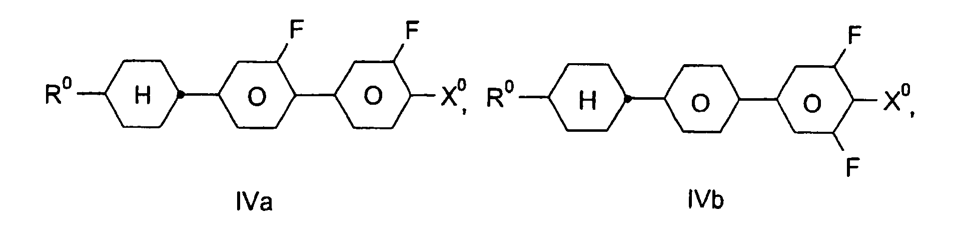 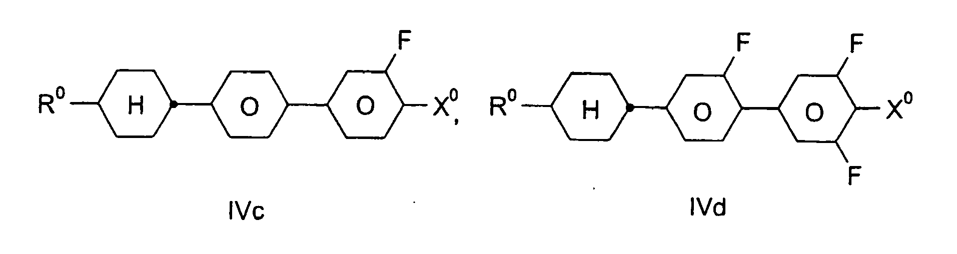 oder 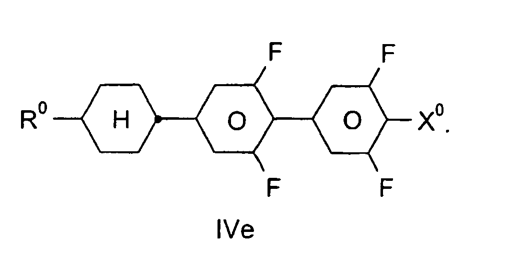
- Das Medium enthält zusätzlich eine oder mehrere Verbindungen ausgewählt aus der Gruppe bestehend aus den allgemeinen Formeln VII bis XII: 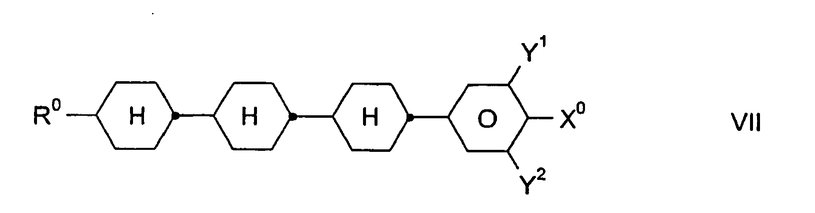 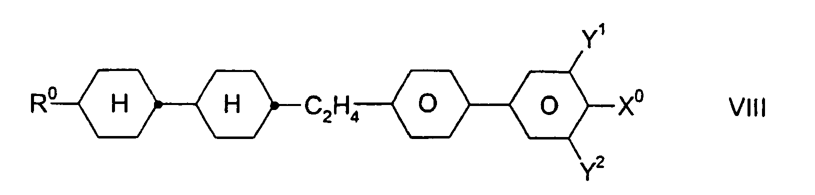 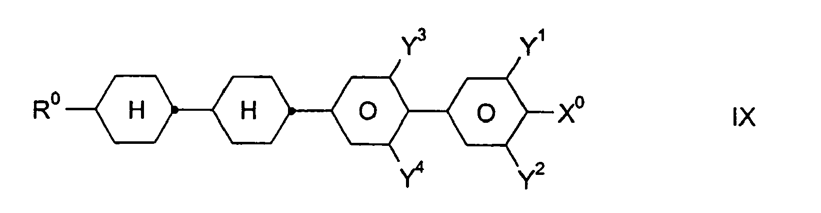 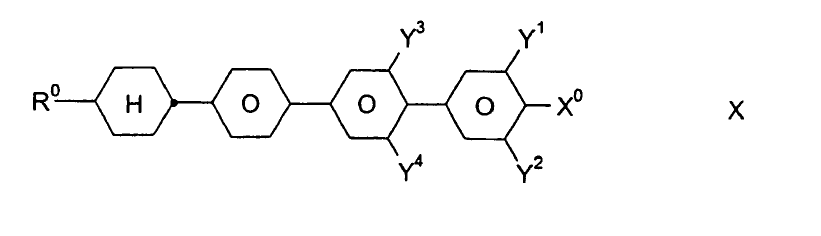 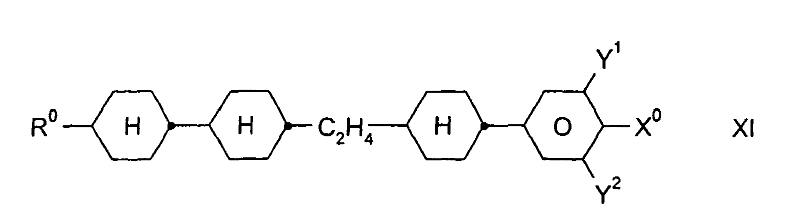 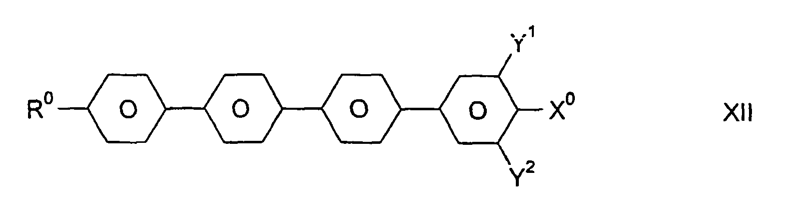 worin R⁰, X⁰ und Y¹⁻⁴ jeweils unabhängig voneinander eine der in Anspruch 4 angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 6 C-Atomen.
- Das Medium enthält zusätzlich eine oder mehrere Verbindungen der Formel E, 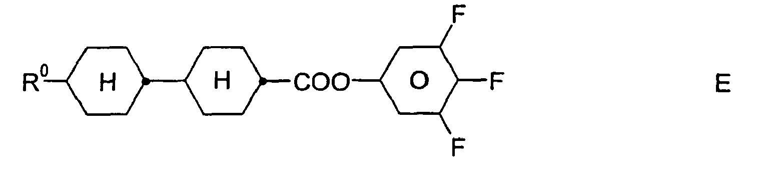 worin R⁰ die in Anspruch 4 angegebenen Bedeutungen hat;
- Der Anteil der Verbindungen der Formel E ist vorzugsweise 5-30 Gew.%, insbesondere 10-25 Gew.%;
- Der Anteil an Verbindungen der Formeln I und IA zusammen beträgt im Gesamtgemisch mindestens 10 Gew.%, vorzugsweise ≥ 15 Gew.% und insbesondere ≥ 20 Gew.%;
- Der Anteil an Verbindungen der Formel I beträgt im Gesamtgemisch 0,01 bis 50, besonders bevorzugt 0,1 bis 40 Gew.%;
- Der Anteil an Verbindungen der Formeln II bis VI im Gesamtgemisch beträgt 10 bis 80 Gew.%;
- 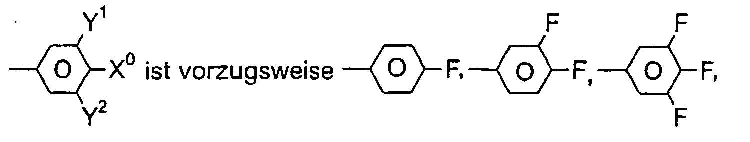 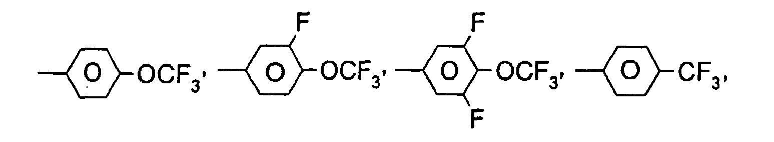 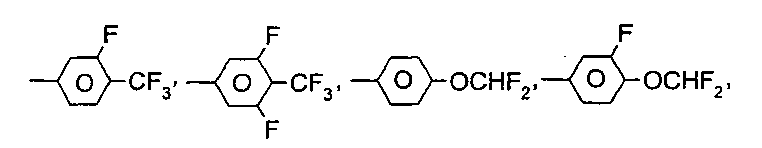 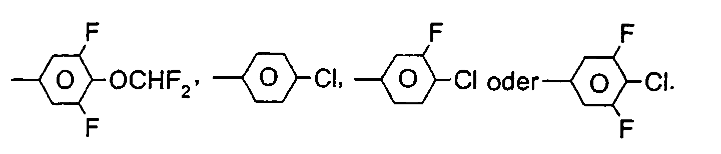
- Das Medium enthält Verbindungen der Formeln II, III, IV, V und/oder VI;
- R⁰ ist geradkettiges Alkyl oder Alkenyl mit 2 bis 7 C-Atomen;
- Das Medium besteht im wesentlichen aus Verbindungen der Formeln I, IA, II-VI, wobei im wesentlichen ≥ 50 Gew.% bedeutet.
- Das Medium enthält weitere Verbindungen, vorzugsweise ausgewählt aus der folgenden Gruppe bestehend aus den allgemeinen Formeln XIII bis XIX: 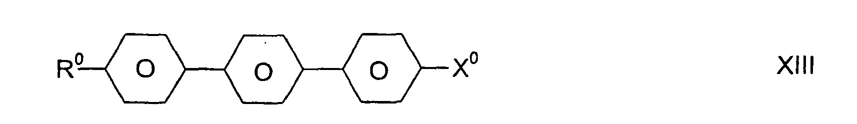 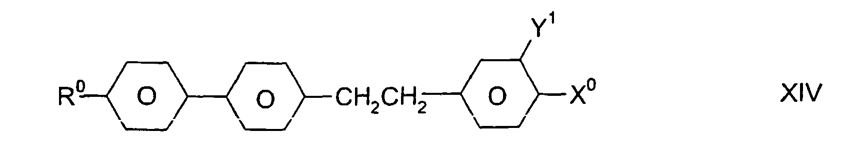 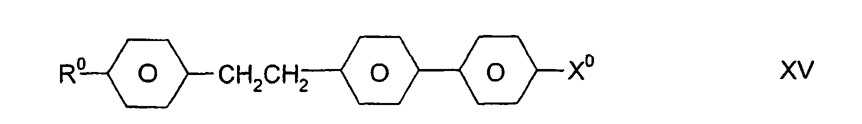 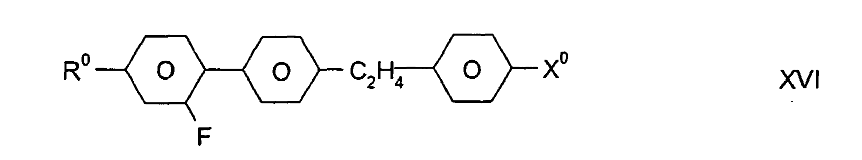 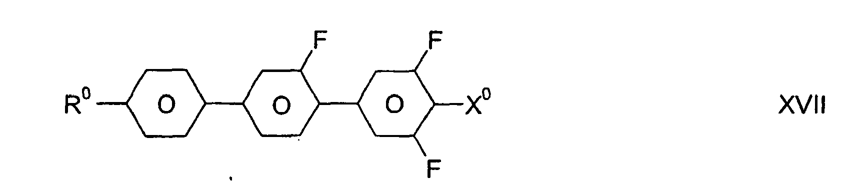 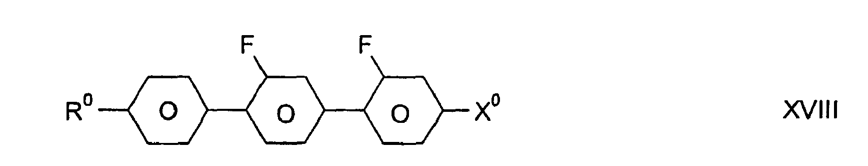 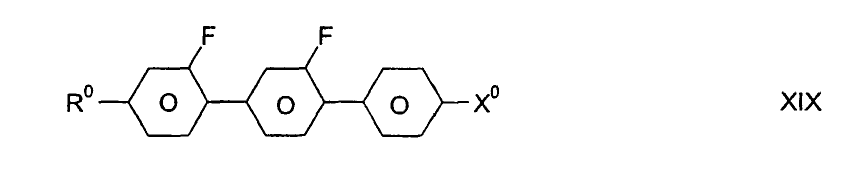 worin R⁰ und X⁰ die oben an gegebenen Bedeutungen haben. X⁰ bedeutet vorzugsweise F oder Cl. Die Konzentration der Verbindungen der Formeln XIII bis XIX beträgt vorzugsweise 0,05-30 Gew.%, insbesondere 1-25 Gew.%.
- Das Medium enthält vorzugsweise 5-35 Gew.% der Verbindung IVa.
- Das Medium enthält vorzugsweise eine, zwei oder drei Verbindungen der Formel IVa, worin X^{o} F oder OCF₃ bedeutet.
- Das Medium enthält vorzugsweise eine oder mehrere Verbindungen der Formeln IIa bis IIg, 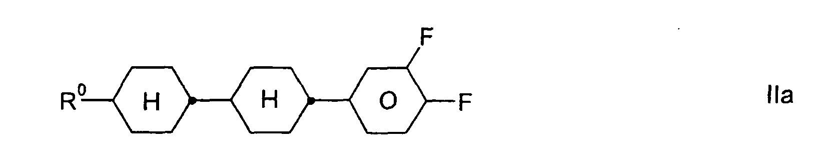 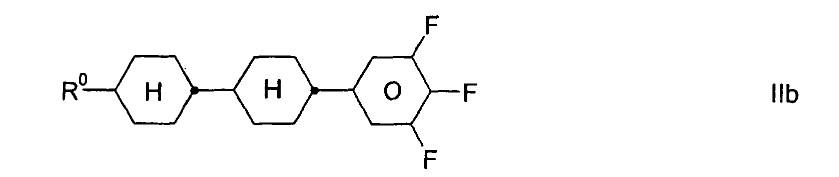 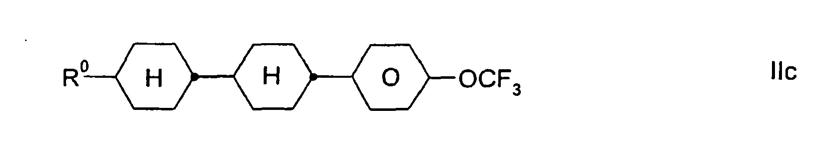 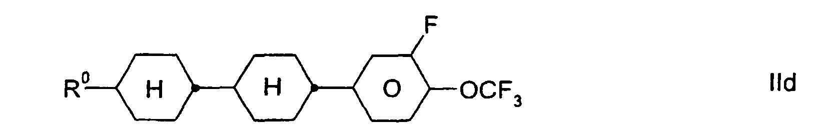 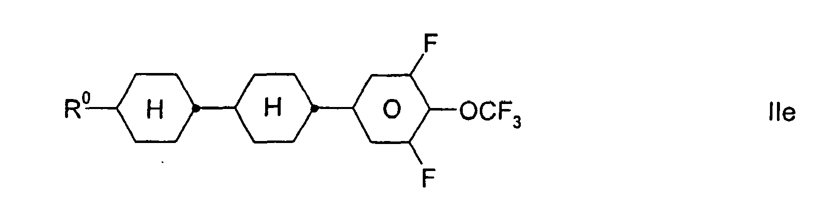 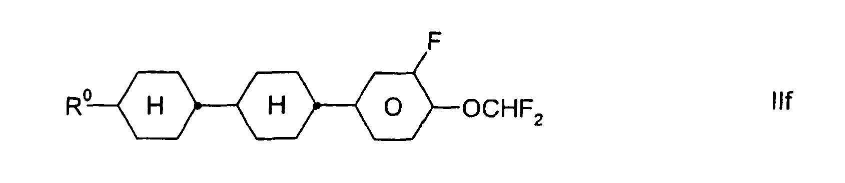 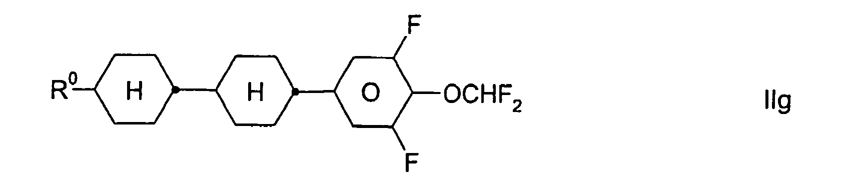 worin R⁰ die oben angegebenen Bedeutungen hat. In den Verbindungen der Formeln IIa-IIg bedeutet R⁰ vorzugsweise Methyl, Ethyl, n-Propyl, n-Butyl und n-Pentyl.
- Das Gewichtsverhältnis I bzw. I + IA : (II + III + IV + V + VI) ist vorzugsweise 1 : 10 bis 10 : 1.
- Das Medium besteht im wesentlichen aus Verbindungen ausgewählt aus der Gruppe bestehend aus den allgemeinen Formeln IA und I bis XIX.
- Der Anteil der Verbindungen der Formel IVb, IVc und/oder IVd, worin X⁰ Fluor und R⁰ CH₃, C₂H₅, n-C₃H₇, n-C₄H₉ oder n-C₅H₁₁ bedeutet, beträgt im Gesamtgemisch 2 bis 25 Gew.%, insbesondere 2 bis 20 Gew.%.
- Das Medium enthält vorzugsweise Verbindungen der Formeln II bis VI, worin R⁰ Methyl bedeutet. Insbesondere bevorzugt enthält das erfindungsgemäße Medium Verbindungen der Formeln 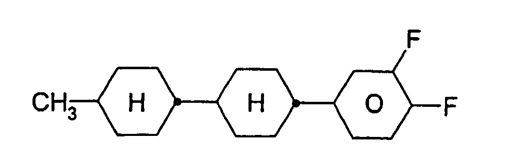 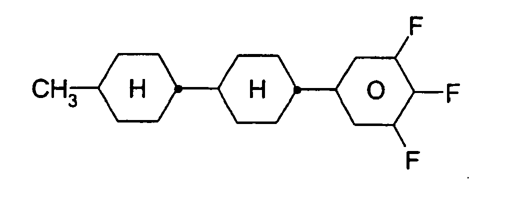 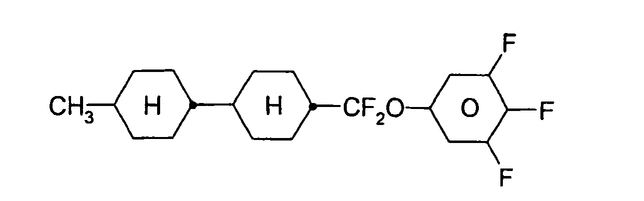 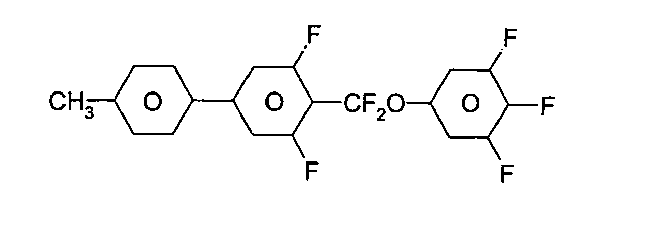
- Das Medium enthält vorzugsweise ein, zwei oder mehr, vorzugsweise ein, zwei oder mehr Dioxan-Verbindungen der Formeln D-1 bis D-4, 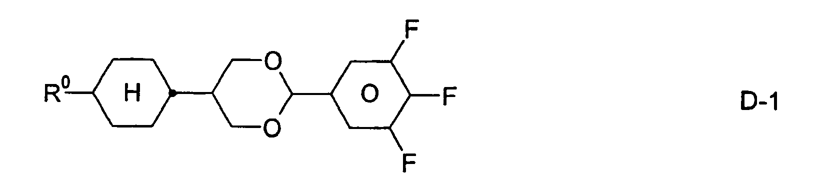 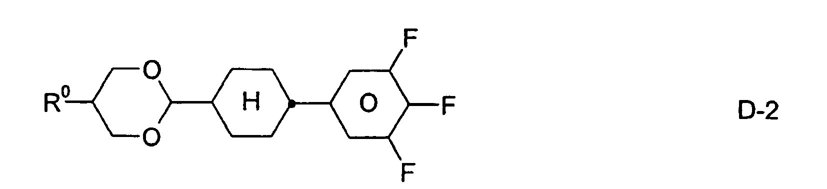 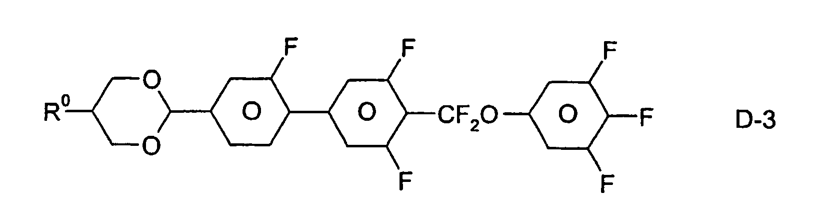 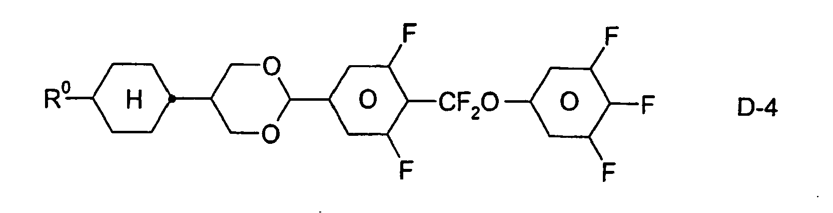 worin R⁰ die oben angegebenen Bedeutungen hat.
   Der Anteil der Dioxan-Verbindungen D-1 bis D-4 in den erfindungsgemäßen Mischungen beträgt vorzugsweise 0-40 Gew.%, insbesondere 5-35 Gew.% und ganz besonders bevorzugt 8-30 Gew.%.
- Das Medium enthält zusätzlich ein, zwei oder mehr Zweikern-Verbindungen der Formeln Z-1 bis Z-10, 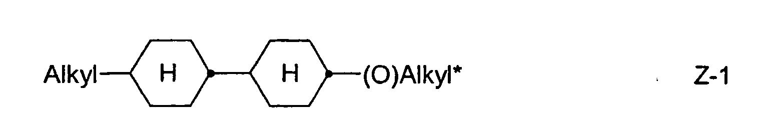 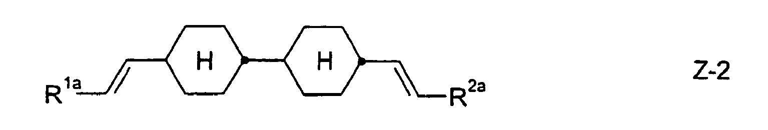 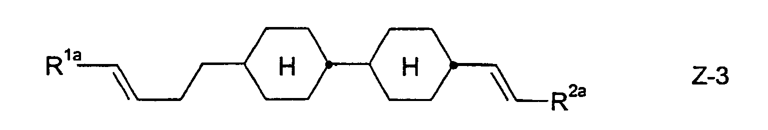 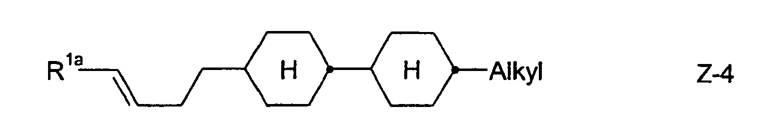 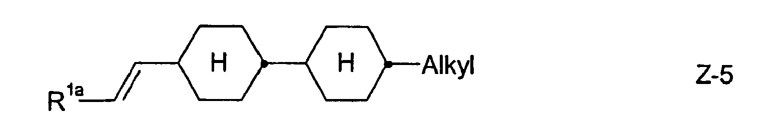 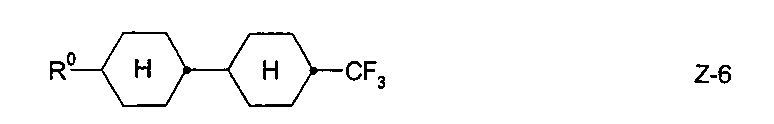 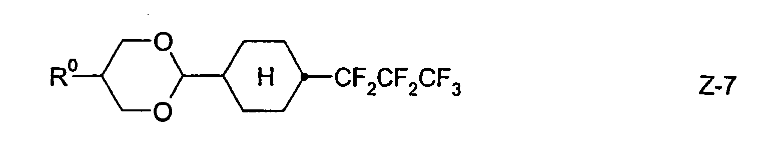 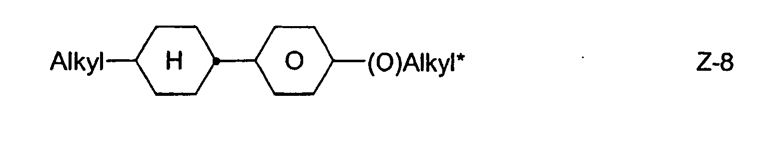 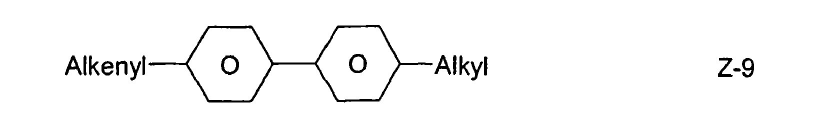 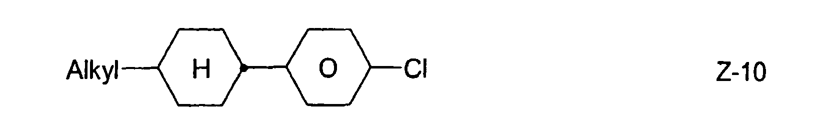 worin R^{1a} und R^{2a} jeweils unabhängig voneinander H, CH₃, C₂H₅ oder n-C₃H₇ bedeuten. Alkyl und Alkyl* bedeuten jeweils unabhängig voneinander eine geradkettige oder verzweigte Alkylkette mit 1-7 C-Atomen. Alkenyl bedeutet geradkettiges Alkenyl mit 2-7 C-Atomen. R⁰ hat die oben angegebenen Bedeutungen. In den Verbindungen Z-6 und Z-7 bedeutet R⁰ vorzugsweise geradkettiges Alkyl oder Alkenyl.
   Von den genannten Zweikern-Verbindungen sind besonders bevorzugt die Verbindungen der Formeln Z-1, Z-2, Z-5, Z-6 und Z-8.
- Das Medium enthält zusätzlich ein, zwei oder mehr Verbindungen mit einem Pyranring der Formeln P-1 bis P-4: 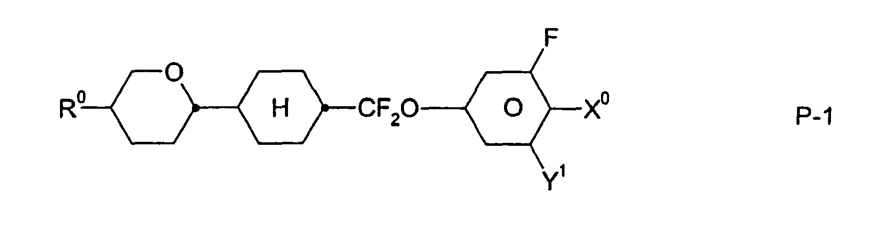 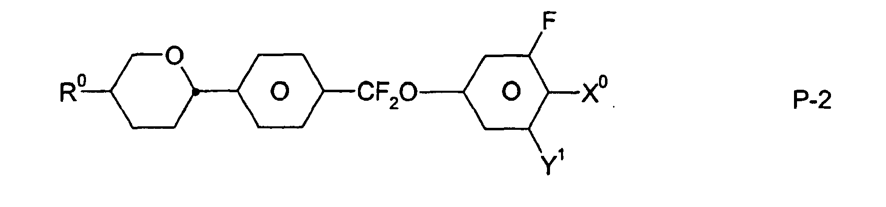 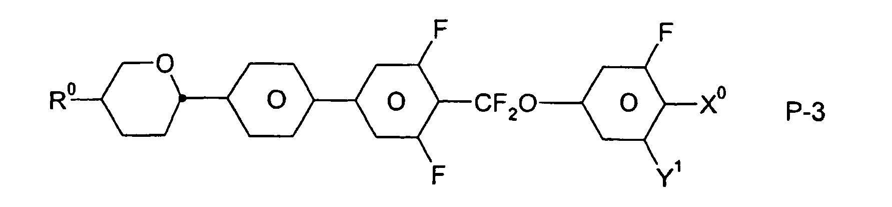 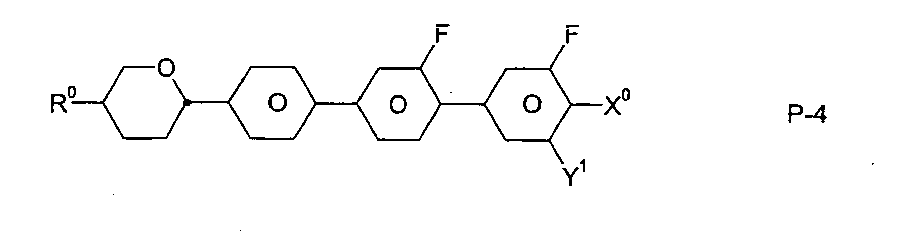 worin R⁰, X⁰ und Y¹ die in Anspruch 4 angegebenen Bedeutungen haben.
   Der Anteil einer oder mehrerer Pyranverbindungen der Formeln P-1 bis P-4 beträgt vorzugsweise in den erfindungsgemäßen Mischungen 2-30 Gew.%, insbesondere 5-20 Gew.%.
- Das Medium enthält zusätzlich eine, zwei oder mehr Verbindungen mit annellierten Ringen der Formeln AN1 bis AN11: 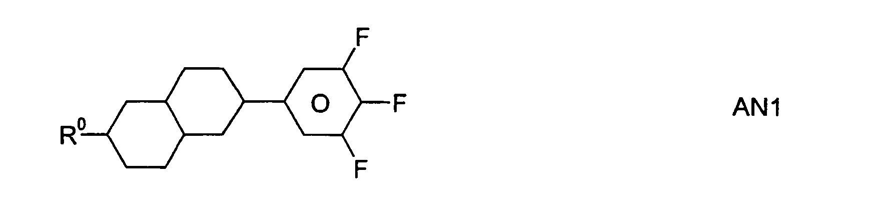 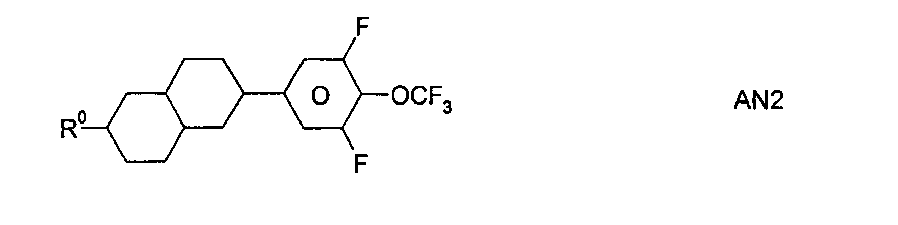 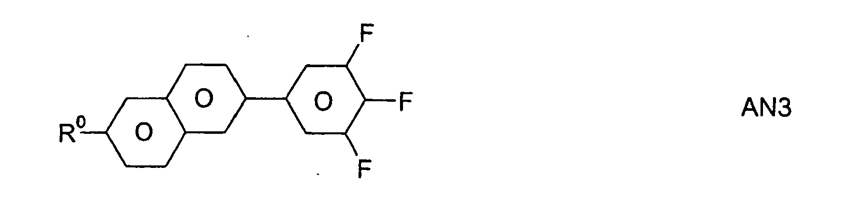 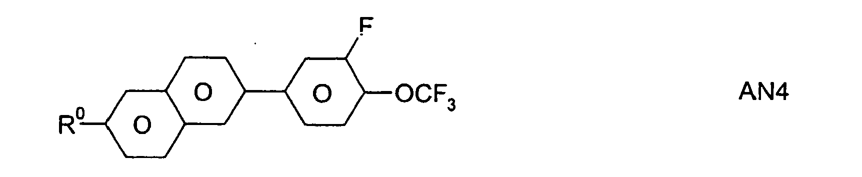 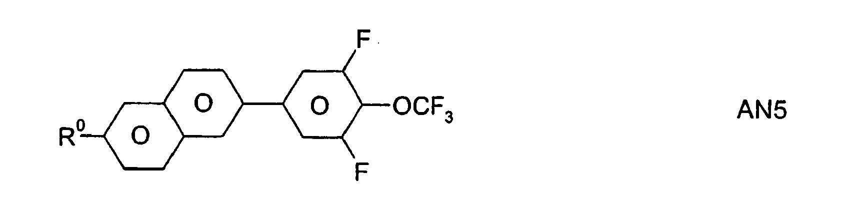 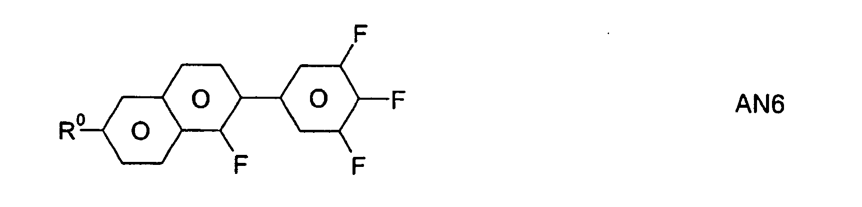 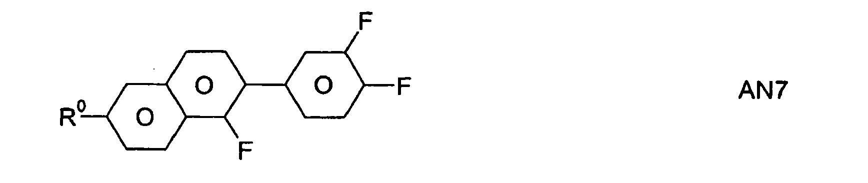 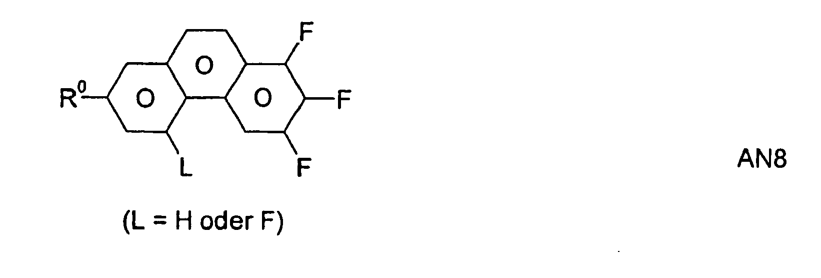 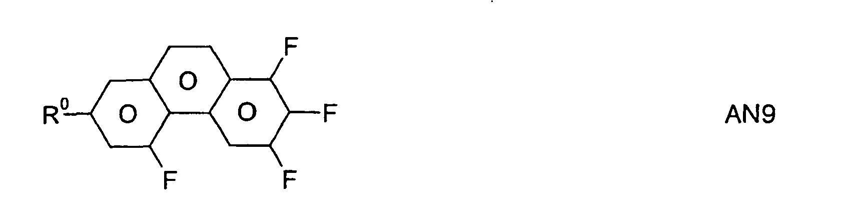 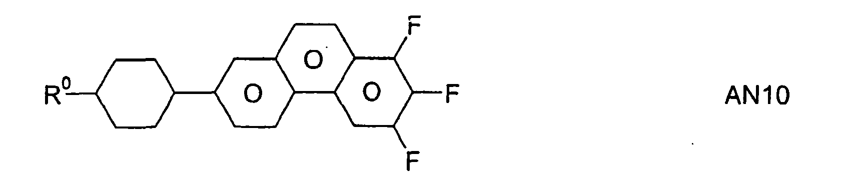 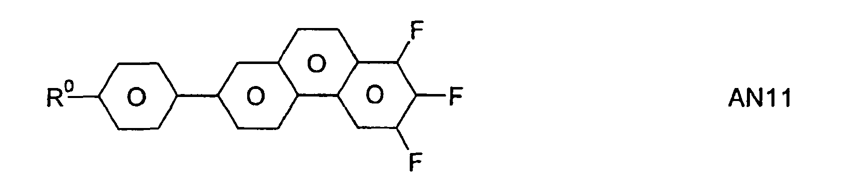 worin R⁰ die oben angegebenen Bedeutungen hat.
   Der Anteil an Verbindungen der Formeln AN1 bis AN11 in den erfindungsgemäßen Mischungen ist vorzugsweise 1-20 Gew.%.
- Die erfindungsgemäßen Mischungen zeichnen sich insbesondere dadurch aus, dass sie Klärpunkte von > 75 °C und Schwellen von < 2,5 V aufweisen.

Es wurde gefunden, dass bereits ein relativ geringer Anteil an Verbindungen der Formeln I und IA im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr gute Werte für die VHR bei UV-Belastung.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt Höhere Werte für K₁ ermöglichen schnellere Schsitzeiten_{.}

Das optimale Mengenverhältnis der Verbindungen der Formeln I, IA und II + III + IV + V + VI hängt weitgehend von den gewünschten Eigenschaften, von der Wahl der Komponenten der Formeln I, IA, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA, I bis XII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln IA, I bis XIX sind.

In einer besonders bevorzugten Ausführungsform enthalten die erfindungsgemäßen Medien Verbindungen der Formel II bis VI (vorzugsweise II, III und/oder IV, worin X⁰ F, OCF₃, OCHF₂, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formeln I, IA, II-VI und D-1, D-2, D-3 und D-4 zeichnen sich durch ihre niedrige Schwellenspannung aus.

Die einzelnen Verbindungen der Formeln I, IA und II bis XIX und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®} der Fa. Ciba, Antioxidantien, Radikalfänger, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₋₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F | H |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| |
|---|
| 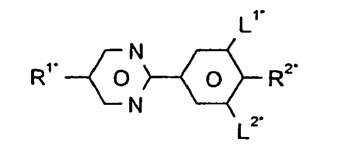 |
| **PYP** |
| 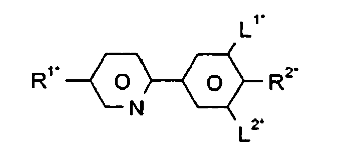 |
| **PYRP** |
| 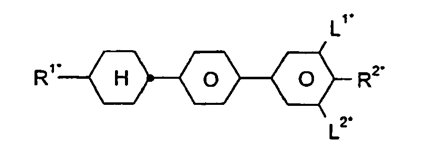 |
| **BCH** |
| 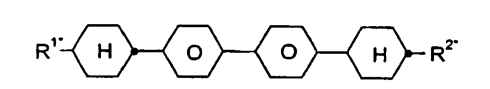 |
| **CBC** |
| 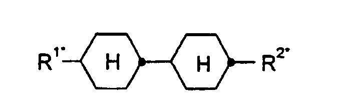 |
| **CCH** |
| 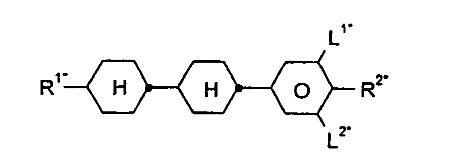 |
| **CCP** |
| 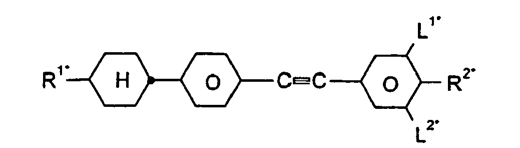 |
| **CPTP** |
| 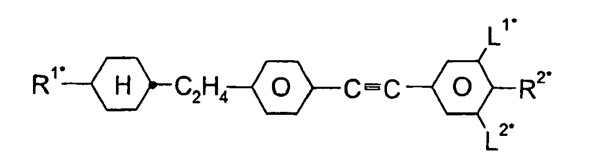 |
| **CEPTP** |
| 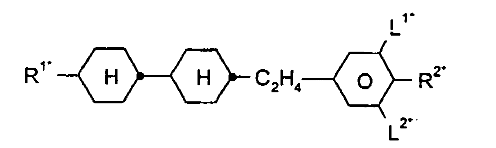 |
| **ECCP** |
| 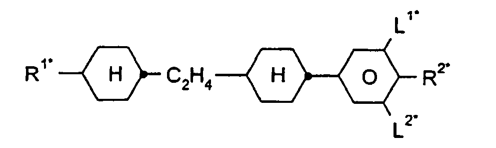 |
| **CECP** |
| 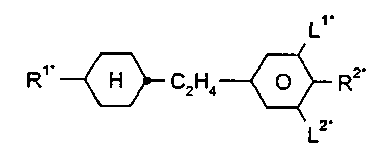 |
| **EPCH** |
| 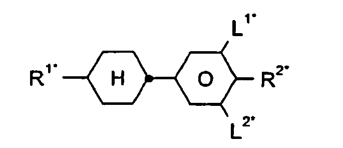 |
| **PCH** |
| 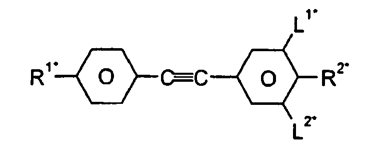 |
| **PTP** |
| 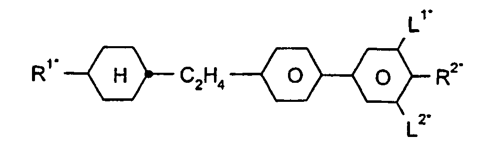 |
| **BECH** |
| 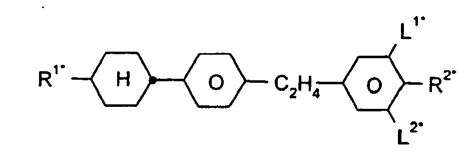 |
| **EBCH** |
| 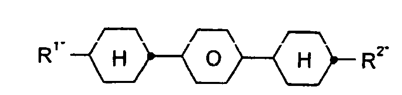 |
| **CPC** |
| 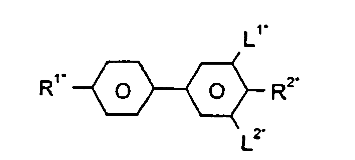 |
| **B** |
| 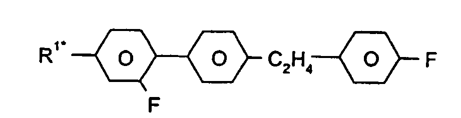 |
| **FET-nF** |
| 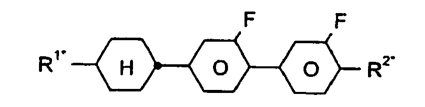 |
| **CGG** |
| 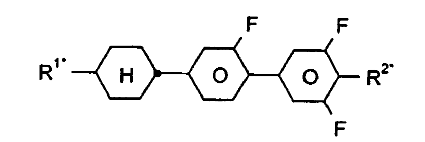 |
| **CGU** |
| 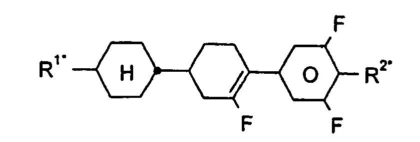 |
| **CFU** |

**Tabelle B**

| |
|---|
| 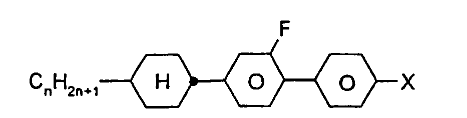 |
| **BCH-n.Fm** |
| 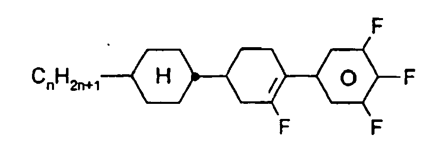 |
| **CFU-n-F** |
| 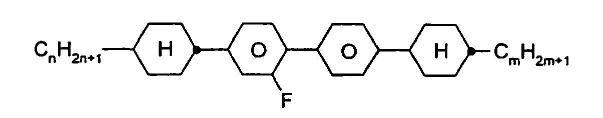 |
| **CBC-nmF** |
| 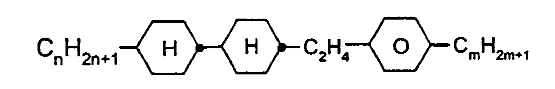 |
| **ECCP-nm** |
| 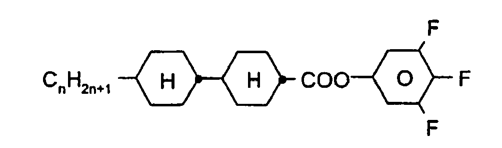 |
| **CCZU-n-F** |
| 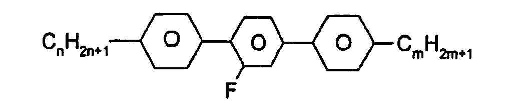 |
| **T-nFm** |
| 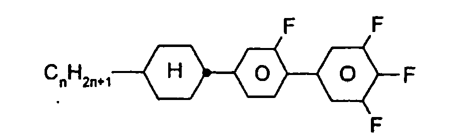 |
| **CGU-n-F** |
| 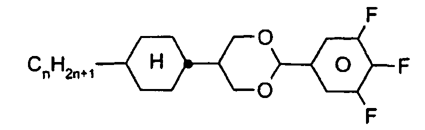 |
| **CDU-n-F** |
| 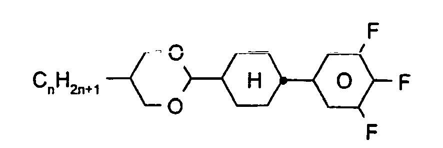 |
| **DCU-n-F** |
| 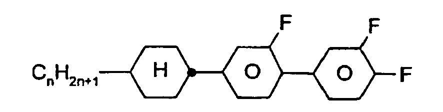 |
| **CGG-n-F** |
| 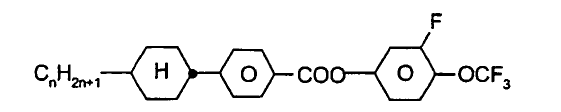 |
| **CPZG-n-OT** |
| 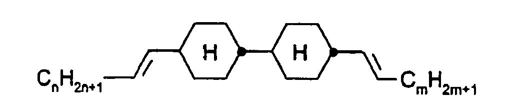 |
| **CC-nV-Vm** |
| 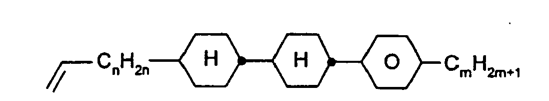 |
| **CCP-Vn-m** |
| 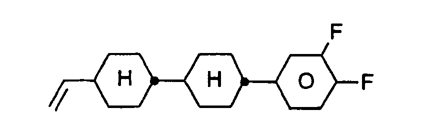 |
| **CCG-V-F** |
| 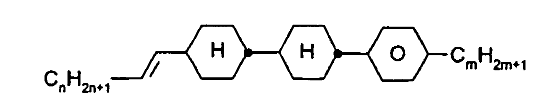 |
| **CCP-nV-m** |
| 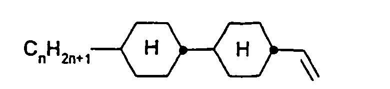 |
| **CC-n-V** |
| 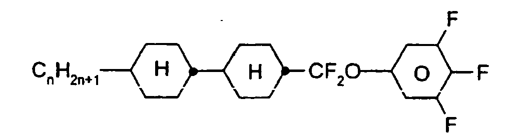 |
| **CCQU-n-F** |
| 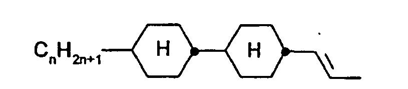 |
| **CC-n-V1** |
| 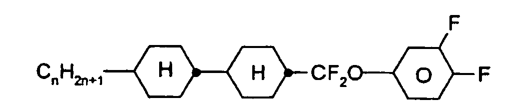 |
| **CCQG-n-F** |
| 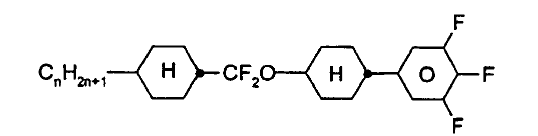 |
| **CQCU-n-F** |
| 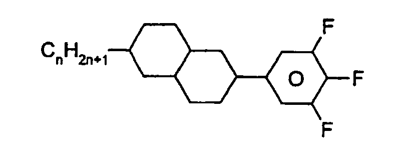 |
| **Dec-U-n-F** |
| 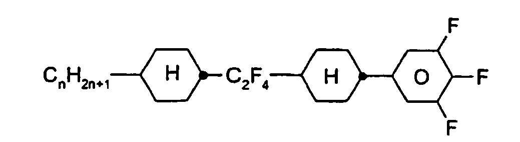 |
| **CWCU-n-F** |
| 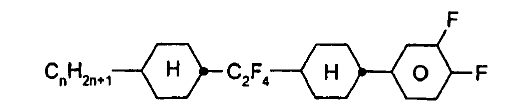 |
| **CWCG-n-F** |
| 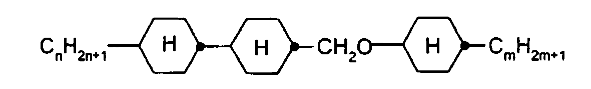 |
| **CCOC-n-m** |
| 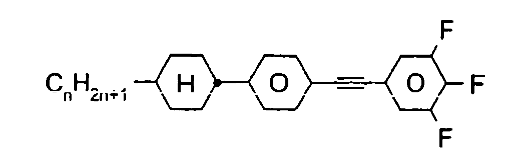 |
| **CPTU-n-F** |
| 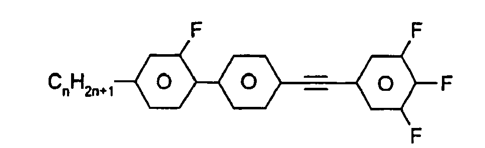 |
| **GPTU-n-F** |
| 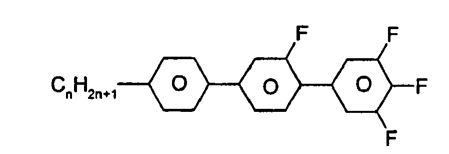 |
| **PGU-n-F** |
| 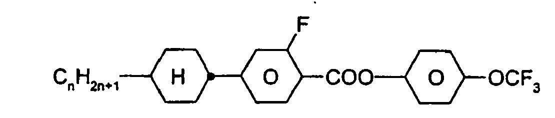 |
| **CGZP-n-OT** |
| 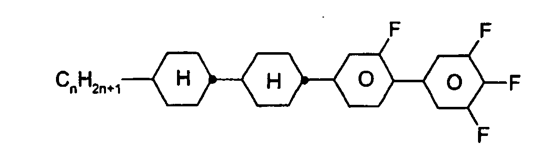 |
| **CCGU-n-F** |
| 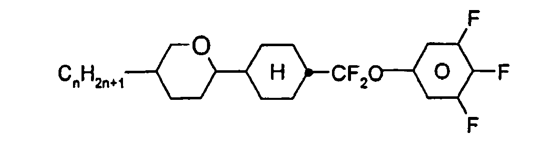 |
| **CUQU-n-F** |
| 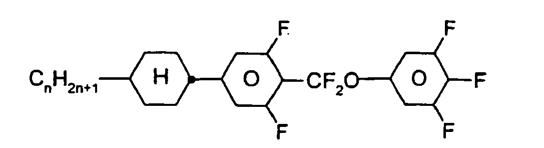 |
| **ACQU-n-F** |
| 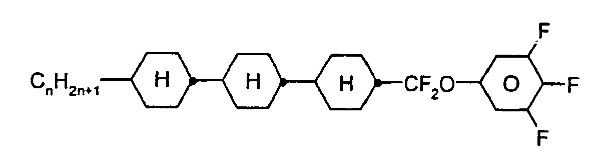 |
| **CCCQU-n-F** |
| 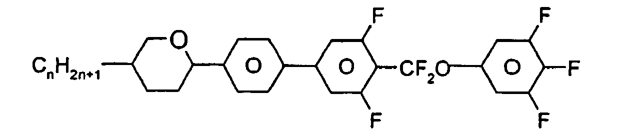 |
| **APUQU-n-F** |
| 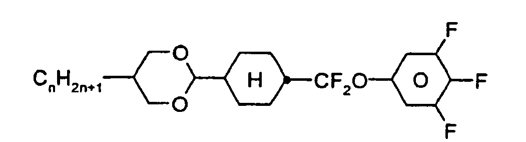 |
| **DCQU-n-F** |
| 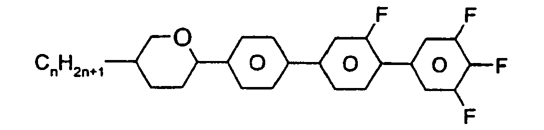 |
| **APG U-n-F** |
| 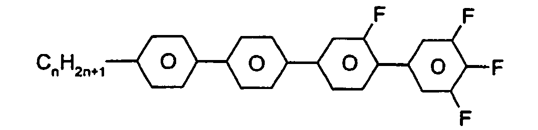 |
| **PPGU-n-F** |
| 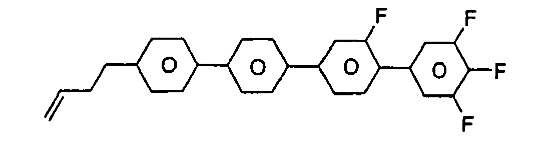 |
| **PPGU-V2-F** |
| 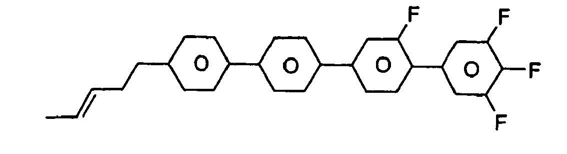 |
| **PPGU-1V2-F** |
| 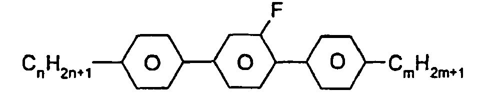 |
| **PGP-n-m** |
| 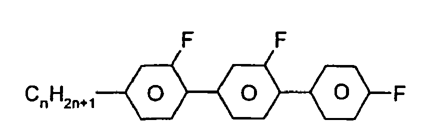 |
| **GGP-n-F** |

Besonders bevorzugt sind flüssigkristalline Mischungen, die neben den Verbindungen der Formeln I und IA mindestens ein, zwei, drei, vier oder mehr Verbindungen aus der Tabelle B enthalten.

**Tabelle C**

| |
|---|
| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. |
| 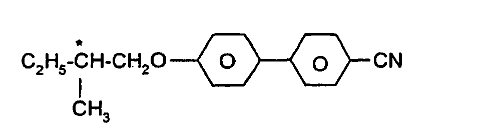 |
| **C15** |
| 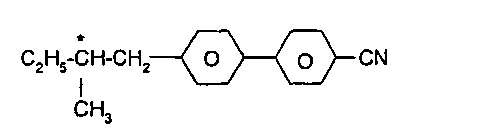 |
| **CB 15** |
| 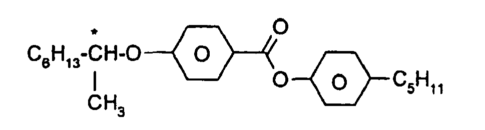 |
| **CM 21** |
| 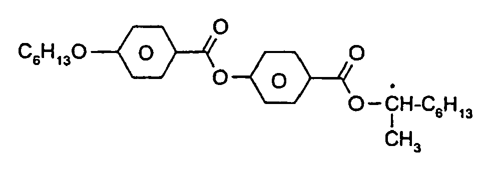 |
| **R/S-811** |
| 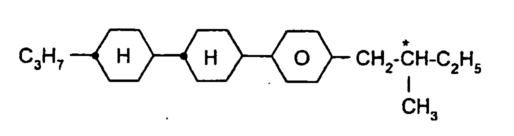 |
| **CM 44** |
| 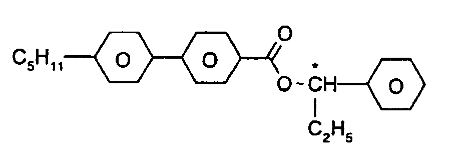 |
| **CM 45** |
| 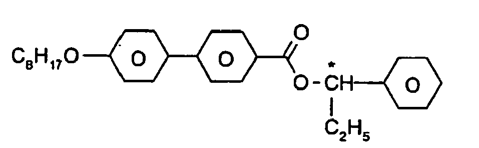 |
| **CM 47** |
| 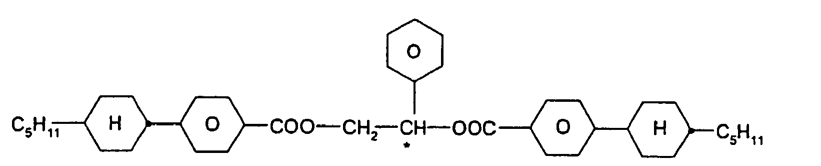 |
| **R/S-1011** |
| 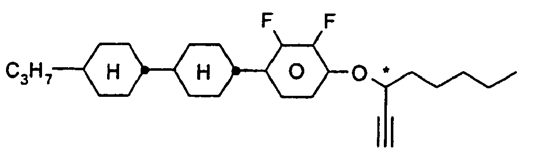 |
| **R/S-3011** |
| 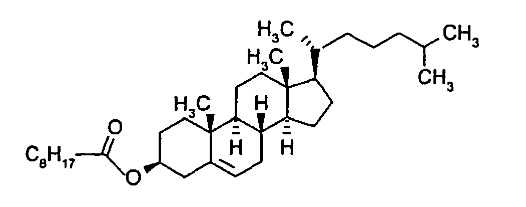 |
| **CN** |
| 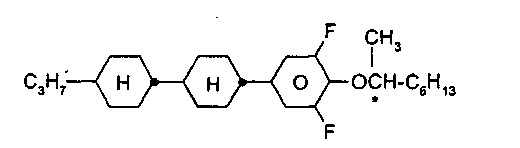 |
| **R/S-2011** |
| 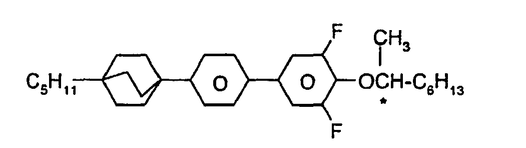 |
| **R/S-4011** |
| 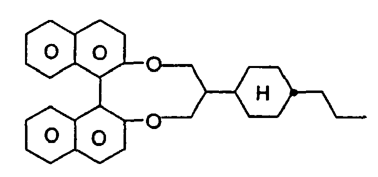 |
| **R/S-5011** |

**Tabelle D**

| | |
|---|---|
| Stabilisatoren, die beispielsweise den erfindungsgemäßen Mischungen in Mengen von 0-10 Gew.% zugesetzt werden können, werden nachfolgend genannt. | |
| 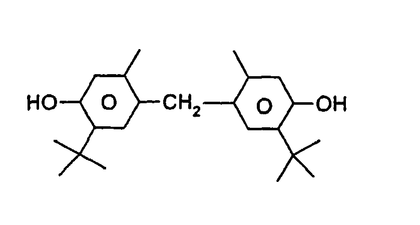 | 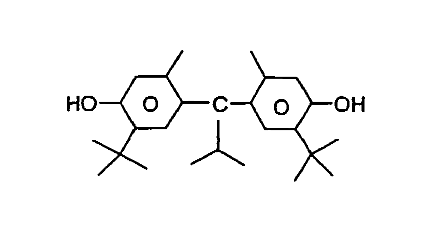 |
| 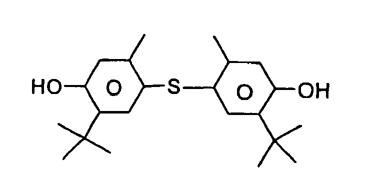 | 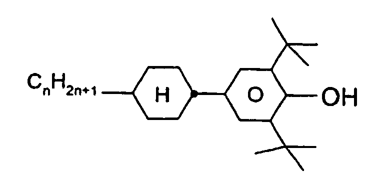 |
| 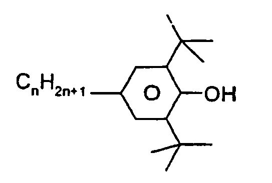 | 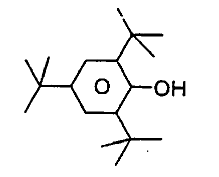 |
| 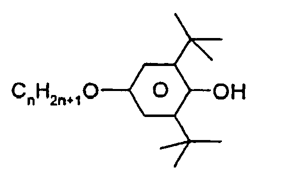 | 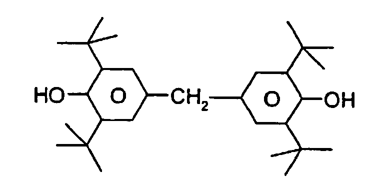 |
| 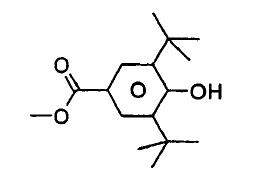 | 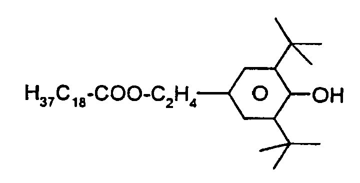 |
| 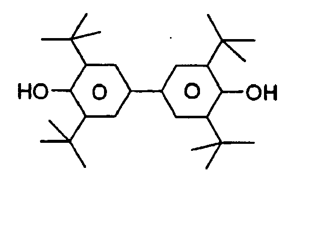 | 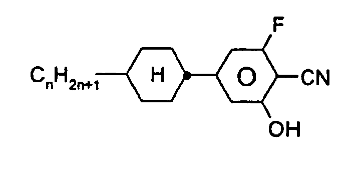 |
| 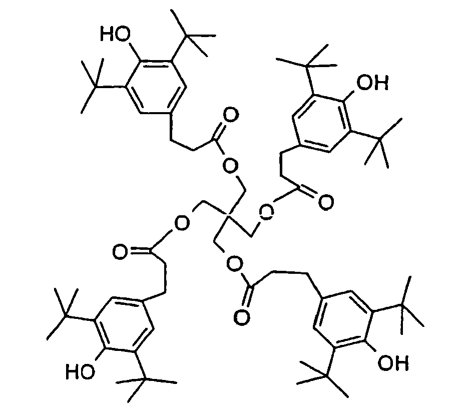 | 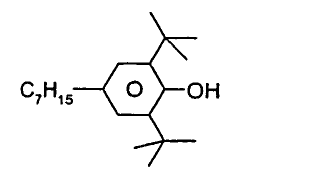 |
| 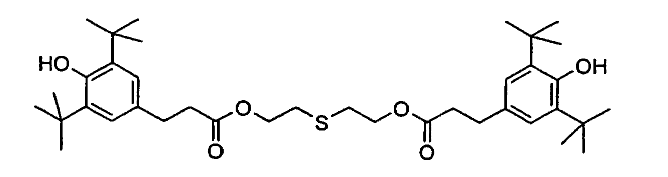 | |
| 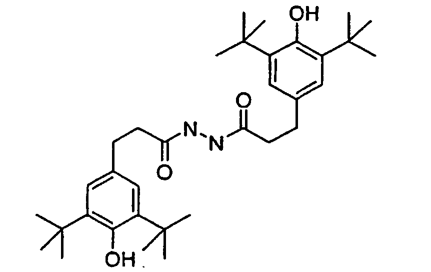 | |
| 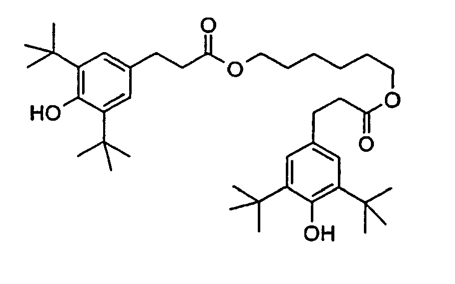 | |
| 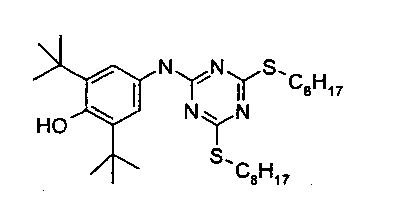 | 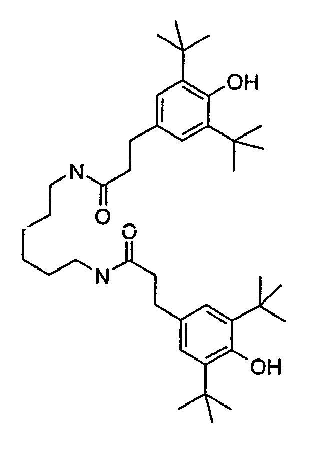 |
| 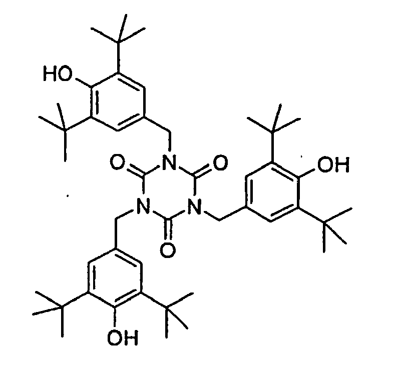 | 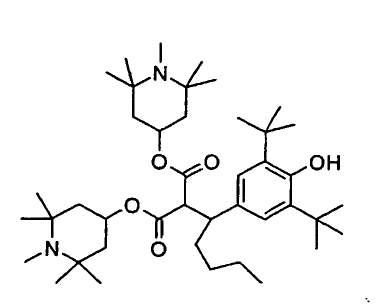 |
| 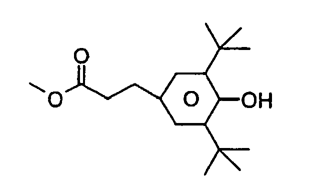 | 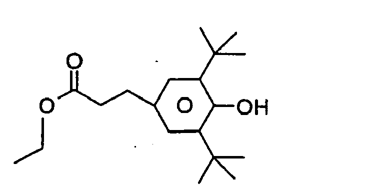 |
| 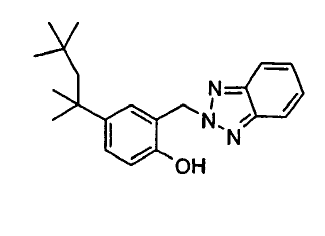 | 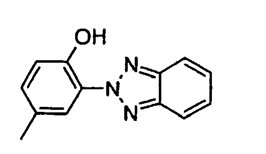 |
| 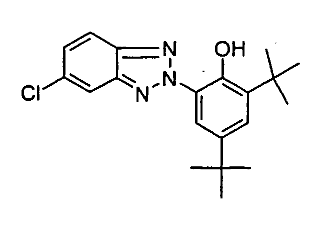 | 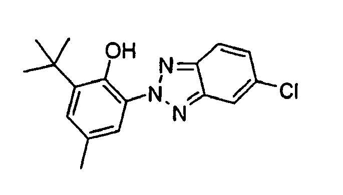 |
| 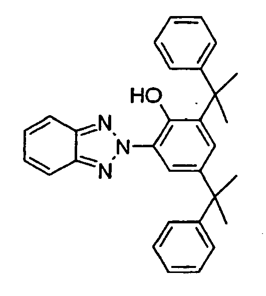 | 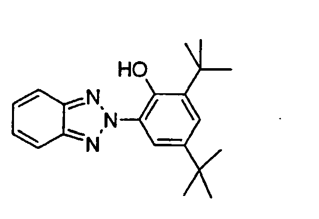 |
| 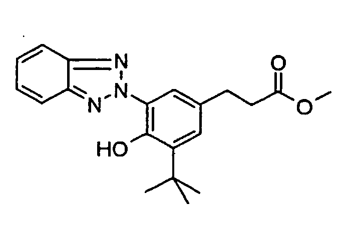 | 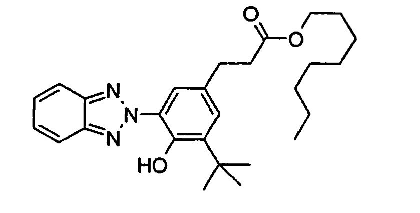 |
| 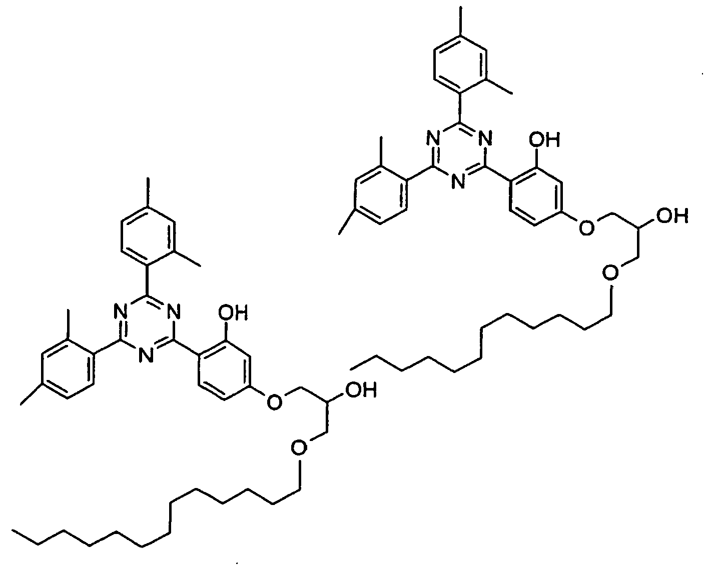 | |
| 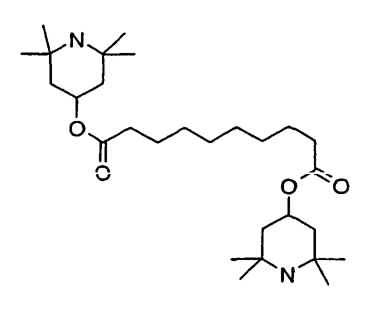 | 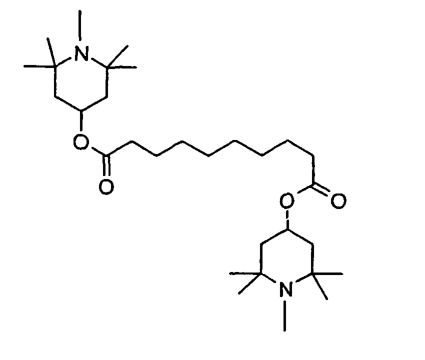 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität ν₂₀ (mm²/sec) und die Rotationsviskosität γ₁ (mPa·s) werden jeweils bei 20 °C bestimmt.

Alle Konzentrationen in dieser Anmeldung, soweit nicht explizit anders vermerkt, sind in Massenprozent angegeben und beziehen sich auf die entsprechende Mischung oder Mischungskomponente. Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben. Δn wird bei 589 nm und Δε bei 1 kHz bestimmt.

### Mischungsbeispiele

### Beispiel M1

| | | | |
|---|---|---|---|
| CCP-1F.F.F | 7,00 % | S→N [°C]: | <-30,0 |
| CCP-2F.F.F | 3,50 % | Klärpunkt [°C]: | 80,5 |
| CCP-20CF₃ | 5,00 % | Δn [589 nm, 20°C]: | 0,0814 |
| CCP-30CF₃ | 3,00 % | Δε [kHz, 20°C]: | 9,9 |
| CCZU-2-F | 4,00% | K₁ [pN, 20°C]: | 12,4 |
| CCZU-3-F | 5,00 % | γ₁ [mPa·s, 20°C]: | 100 |
| CGZP-2-OT | 8,00% | V₀[V]: | 1,18 |
| CGZP-2-OT | 6,00% | | |
| CDU-2-F | 8,50 % | | |
| CDU-3-F | 9,50 % | | |
| CDU-5-F | 7,00 % | | |
| CC-3-V1 | 13,00 % | | |
| CC-5-V | 13,00 % | | |
| CCH-35 | 4,50 % | | |
| PPGU-3-F | 3,00% | | |

### Beispiel M2

| | | | |
|---|---|---|---|
| CCP-1F.F.F | 3,00 % | Klärpunkt [°C]: | 80,0 |
| CCP-2F.F.F | 5,50 % | Δn [589 nm, 20°C]: | 0,0758 |
| CCP-20CF₃ | 3,50 % | Δε [kHz, 20 °C]: | 10,3 |
| CCP-30CF₃ | 4,00 % | K₁ [pN, 20 °C]: | 11,7 |
| CCZU-2-F | 5,00 % | γ₁ [mPa·s, 20°C]: | 104 |
| CCZU-3-F | 10,00 % | V₀[V]: | 1,13 |
| CGZP-2-OT | 8,00 % | | |
| CGZP-3-OT | 6,00 % | | |
| CDU-2-F | 10,50 % | | |
| CDU-3-F | 10,00 % | | |
| CDU-5-F | 7,00 % | | |
| CC-3-V1 | 12,00 % | | |
| CC-5-V | 12,00 % | | |
| CCH-35 | 3,00 % | | |
| PPGU-3-F | 0,50 % | | |

### Beispiel M3

| | | | |
|---|---|---|---|
| CCP-1F.F.F | 3,00 % | Klärpunkt [°C]: | 80,0 |
| CCP-2F.F.F | 4,50 % | Δn[589nm, 20 °C]: | 0,0766 |
| CCP-20CF₃ | 3,00 % | Δε [kHz, 20 °C]: | 10,0 |
| CCP-30CF₃ | 3,00 % | K₁ [pN, 20 °C]: K₁[pN,20°C]: | 12,0 |
| CCZU-2-F | 5,00 % | γ₁ [mPa·s, 20 °C]: | 99 |
| CCZU-3-F | 10,00 % | V₀[V]: | 1,16 |
| CGZP-2-OT | 8,00 % | | |
| CGZP-3-OT | 6,00 % | | |
| CDU-2-F | 10,00 % | | |
| CDU-3-F | 10,00 % | | |
| CDU-5-F | 7,00 % | | |
| CC-3-V1 | 13,00 % | | |
| CC-5-V | 13,50 % | | |
| CCH-35 | 3,00 % | | |
| PPGU-3-F | 1,00 % | | |

### Beispiel M4

| | | | |
|---|---|---|---|
| CCP-1F.F.F | 6,00 % | S → N [°C]: | <-30 |
| CCP-2F.F.F | 7,00 % | Δn [589 nm, 20 °C]: | 0,0850 |
| CCP-20CF₃ | 4,00 % | | |
| CCP-30CF₃ | 4,00 % | | |
| CCZU-3-F | 6,00 % | | |
| CGZP-2-OT | 8,00 % | | |
| CDU-2-F | 10,00 % | | |
| CDU-3-F | 10,00 % | | |
| CDU-5-F | 8,00 % | | |
| CC-3-V1 | 13,00 % | | |
| CC-5-V | 13,00 % | | |
| CCH-35 | 5,00 % | | |
| PPGU-3-F | 3,00 % | | |
| PPGU-5-F | 3,00 % | | |

### Beispiel M5

| | | | |
|---|---|---|---|
| CCP-2F.F.F | 8,00 % | S→ N [°C]: | <-30 |
| CCZU-2-F | 7,00 % | Klärpunkt [°C]: | 82,0 |
| CCZU-3-F | 9,00 % | Δn [589 nm, 20 °C]: | 0,0834 |
| CGZP-2-OT | 4,00 % | Δε [kHz, 20 °C]: | 9,7 |
| CGZP-3-OT | 4,00 % | γ₁ [mPa·s, 20 °C]: | 94 |
| CDU-2-F | 9,00 % | V₀ [V]: | 1,29 |
| CDU-3-F | 8,00 % | | |
| CDU-5-F | 5,00 % | | |
| CC-3-V1 | 10,00 % | | |
| CC-4-V | 18,00 % | | |
| CCP-V-1 | 11,00 % | | |
| PPGU-3-F | 3,00 % | | |
| PUQU-3-F | 4,00 % | | |

### Beispiel V1

| | | | |
|---|---|---|---|
| CCP-1 F.F.F | 2,00% | S → N [°C]: | <-30 |
| CCP-2F.F.F | 4,50% | Klärpunkt [°C]: | 80,0 |
| CCP-20CF₃ | 5,00 % | Δn [589 nm, 20 °C]: | 0,0790 |
| CCP-3OCF₃ | 3,50 % | Δε [kHz, 20 °C]: | 10,1 |
| CCZU-2-F | 4,00% | γ₁ [mPa·s, 20 °C]: | 105 |
| CCZU-3-F | 10,00 % | V₀[V]: | 1,11 |
| CGZP-2-OT | 8,00 % | VHR (UV, 2 h): | 76,2 % |
| CGZP-3-OT | 6,00% | | |
| CDU-2-F | 8,50 % | | |
| CDU-3-F | 9,50% | | |
| CDU-5-F | 7,00% | | |
| PGU-2-F | 3,00 % | | |
| CC-3-V1 | 13,00 % | | |
| CC-5-V | 13,00 % | | |
| CCH-35 | 3,00 % | | |

### Beispiele M6-M8

| | | | |
|---|---|---|---|
| M6: V1 + 0,20 % PPGU-3-F | | VHR (UV, 2 h): | 78,2 % |
| M7: V1 + 0,29 % PPGU-3-F | | VHR (UV, 2 h): | 82,1 % |
| M8: V1 + 0,40 % PPGU-3-F | | VHR (UV, 2 h): | 85,1 % |

## Patentansprüche

1. Flüssigkristallines Medium auf der Basis eines Gemisches von polaren Verbindungen, **dadurch gekennzeichnet, dass** es eine, zwei oder mehr Verbindungen der Formeln I-1 bis I-10 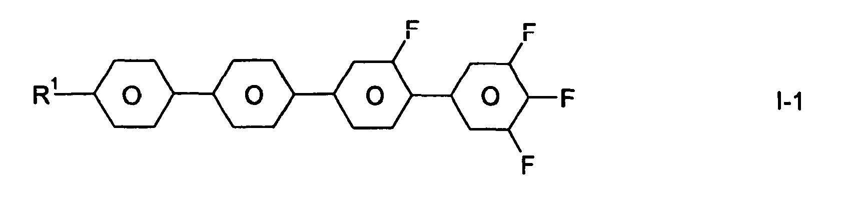 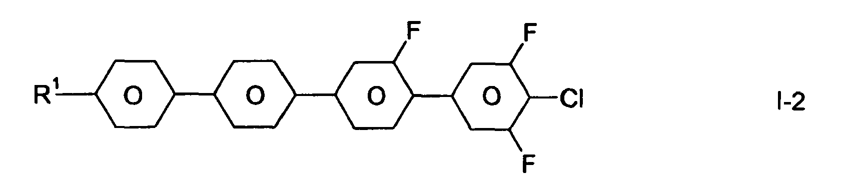 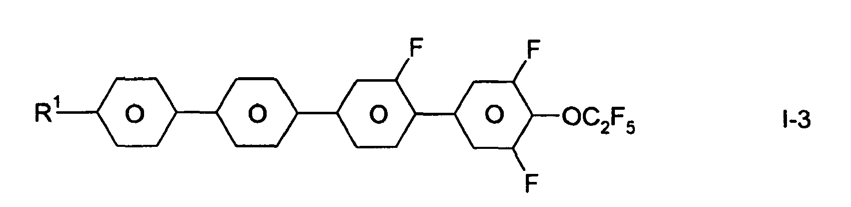 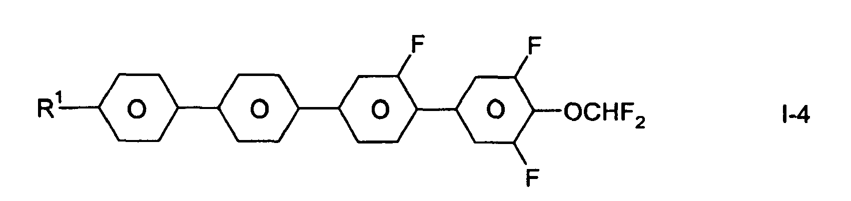 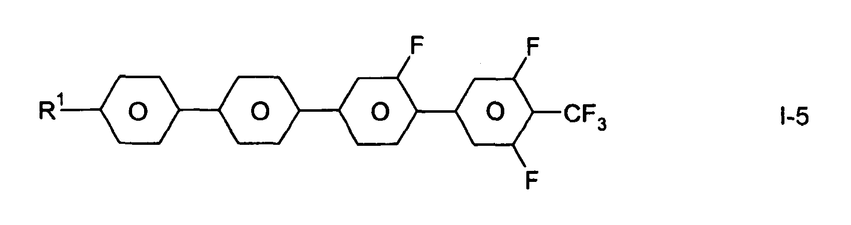 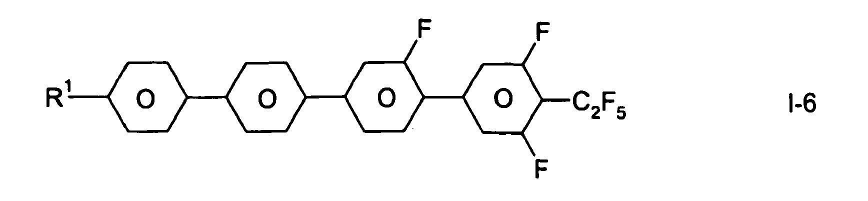 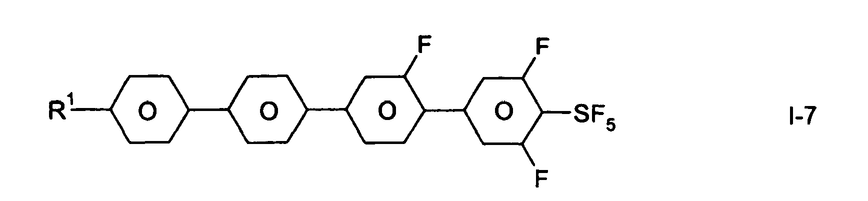 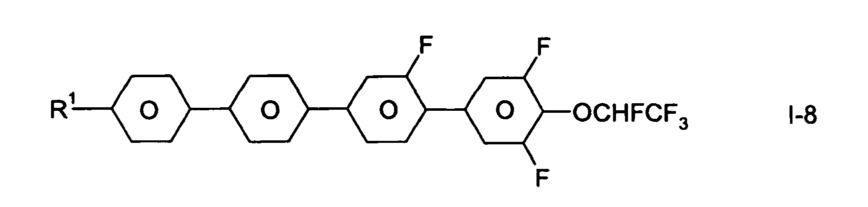 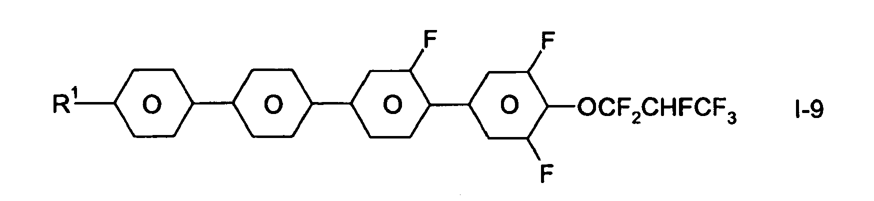 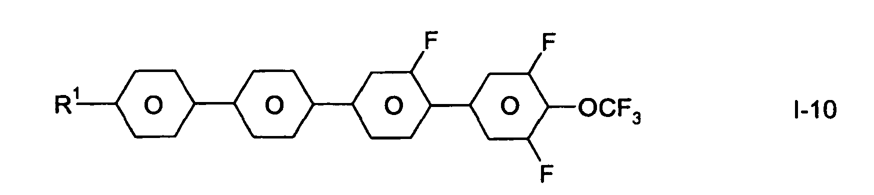 und
eine oder mehrere Verbindungen der Formel IA 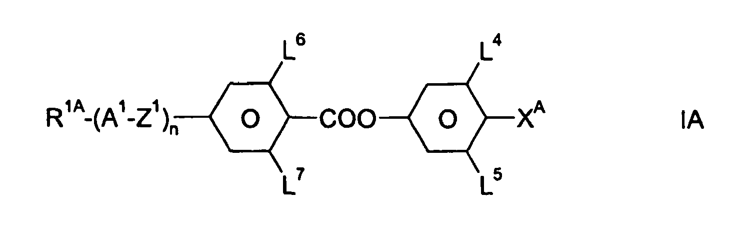 worin
R¹ und R^{1A} jeweils unabhängig voneinander einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, 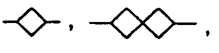 -CH=CH-, -O-, -CO-O-, -CF₂O-, -OCF₂-, oder -O-CO- so ersetzt sein können, dass O-Atome nicht direkt miteinander verknüpft sind,
X^{A} jeweils unabhängig voneinander F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen,
A¹
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, einen Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
wobei die Reste a), b) und c) ein oder mehrfach durch Halogenatome substituiert sein können,
Z¹ -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CF-, -CF=CH-, -CH=CH-, -C≡C- oder eine Einfachbindung,
L⁴ bis L⁷ jeweils unabhängig voneinander H oder F, und
n 0, 1 oder 2
bedeuten,
enthält.

2. Flüssigkristallines Medium nach Anspruch 1, **dadurch gekennzeichnet, dass** es eine oder mehrere Verbindungen der Formeln IA-1 bis IA-16, 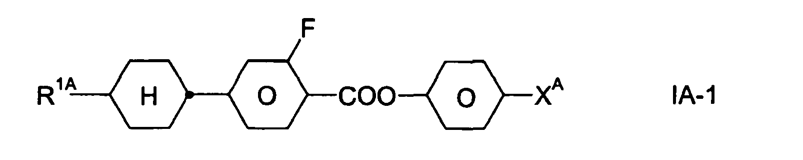 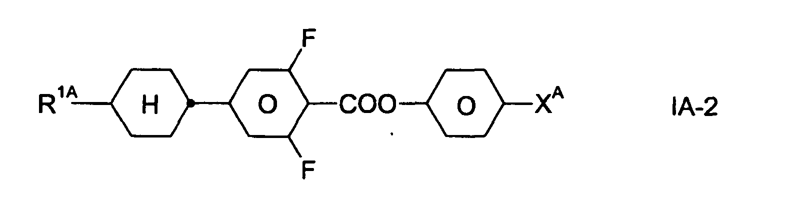 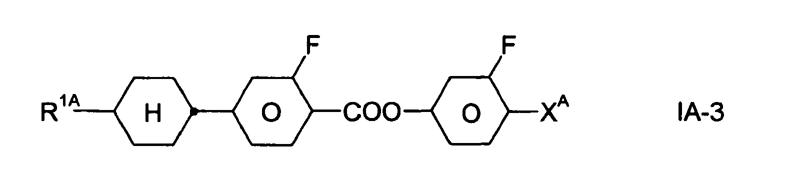 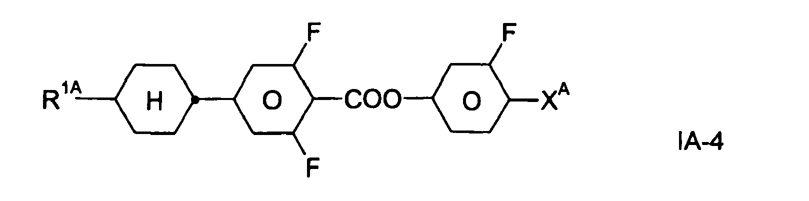 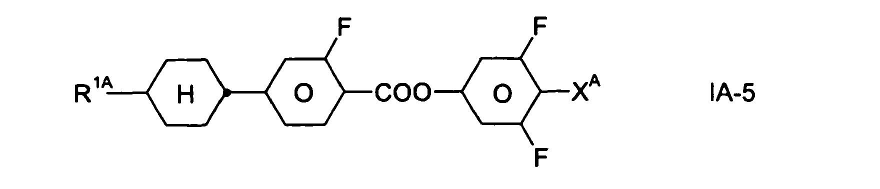 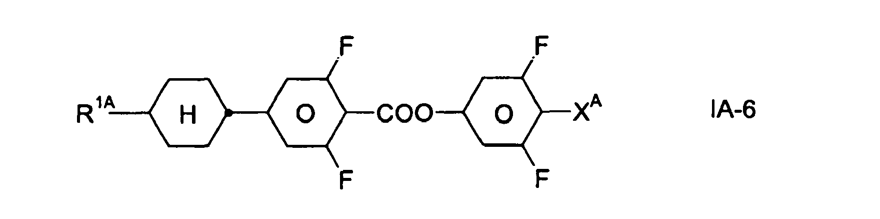 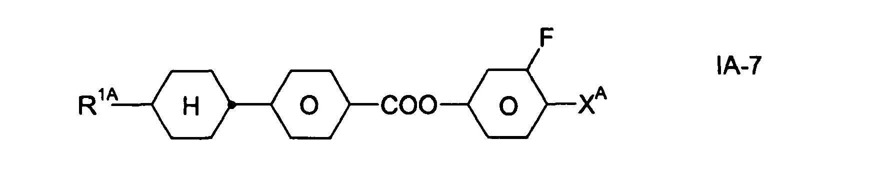 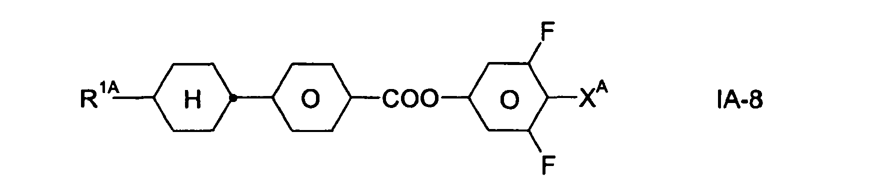 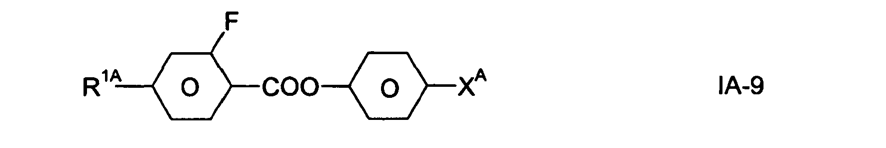 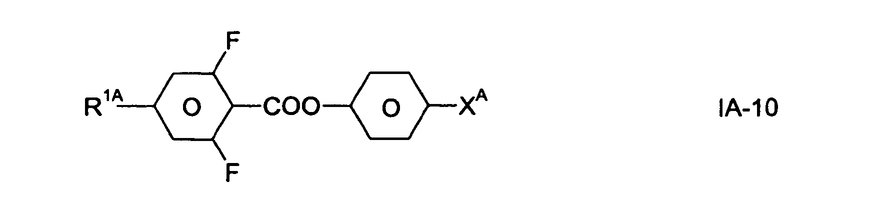 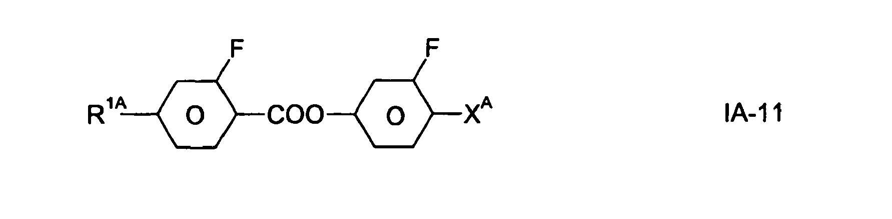 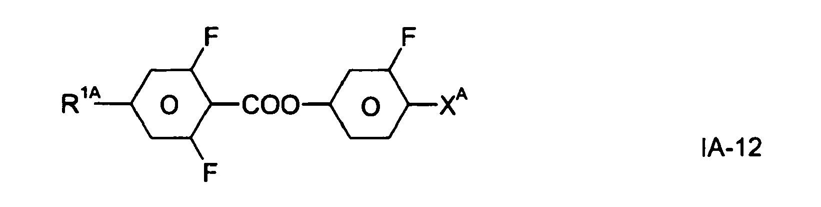 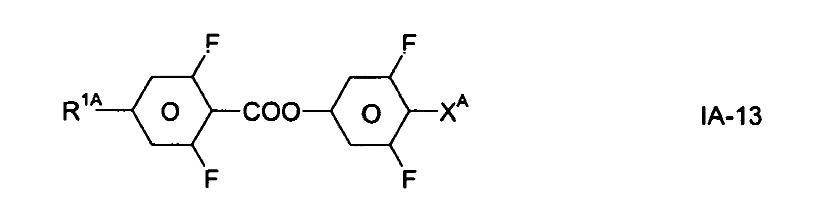 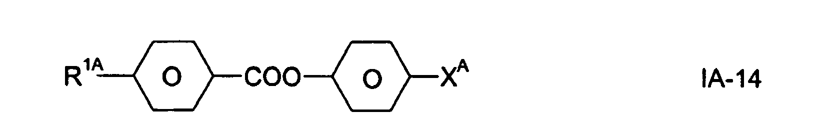 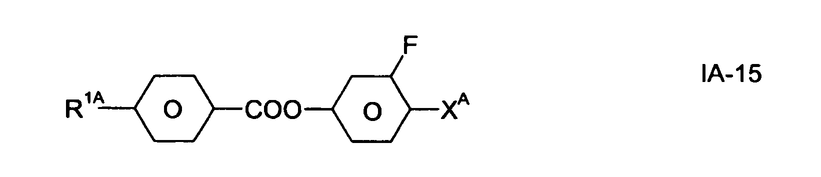 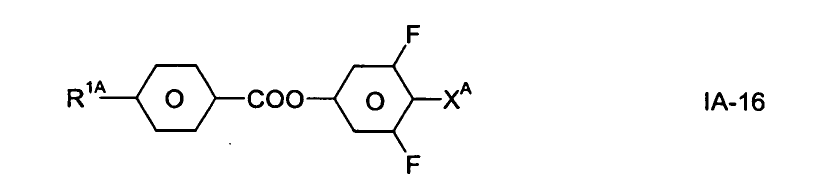 worin
R^{1A} und X^{A} die in Anspruch 1 angegebenen Bedeutungen haben.

3. Flüssigkristallines Medium nach mindestens einem der Ansprüche 1 bis 2, **dadurch gekennzeichnet, dass** es zusätzlich eine oder mehrere Verbindungen ausgewählt aus der Gruppe bestehend aus den allgemeinen Formeln II bis VI, 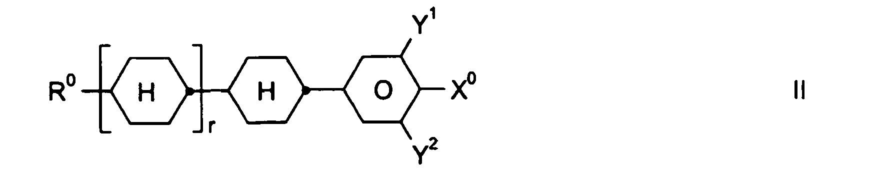 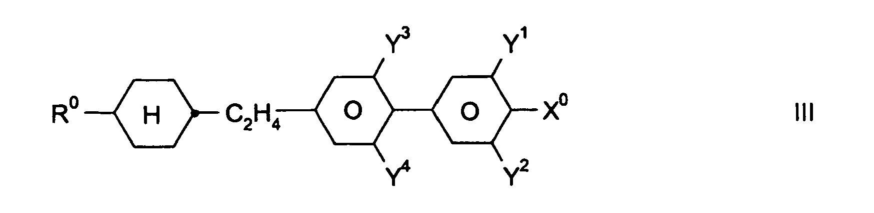 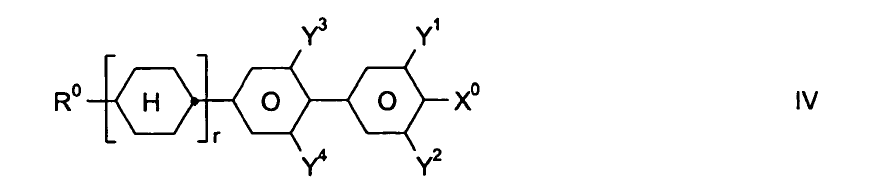 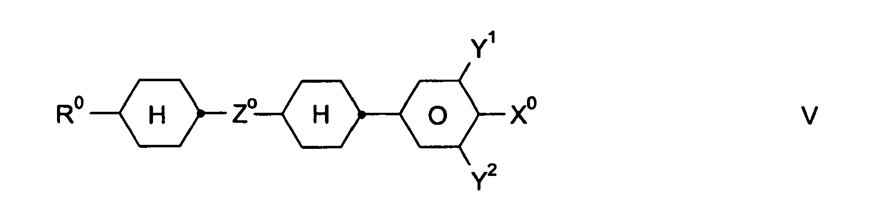 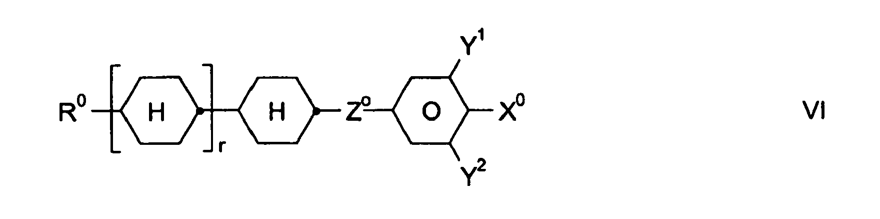 worin
R⁰ Alkyl, Alkoxy, Oxaalkyl, Fluoralkyl oder Alkenyl mit jeweils bis zu 9 C-Atomen,
X⁰ F, Cl, halogeniertes Alkyl, halogeniertes Alkenyl, halogeniertes Oxaalkyl, halogeniertes Alkenyloxy oder halogeniertes Alkoxy mit bis zu 6 C-Atomen,
Z⁰ -C₂F₄-, -CF=CF, -CH=CH-, -C₂H₄-, -(CH₂)₄-, -OCH₂-, -CH₂O-, -CF₂O- oder -OCF₂-,
Y¹ bis Y⁴ jeweils unabhängig voneinander H oder F,
r 0 oder 1.
bedeuten,
enthält.

4. Flüssigkristallines Medium nach mindestens einem der Ansprüche 1 bis 3, **dadurch gekennzeichnet, dass** es zusätzlich eine oder mehrere Verbindungen der Formel E, 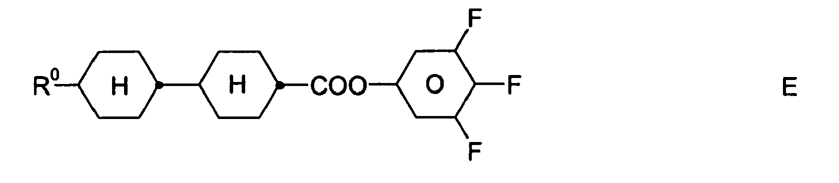 worin R⁰ die in Anspruch 3 angegebenen Bedeutungen hat,
enthält.

5. Flüssigkristallines Medium nach mindestens einem der Ansprüche 1 bis 4, **dadurch gekennzeichnet, dass** es eine oder mehrere Verbindungen der Formeln IIa bis IIg, 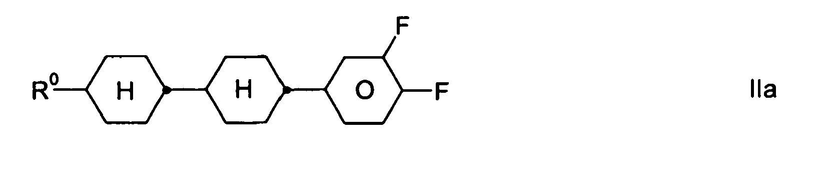 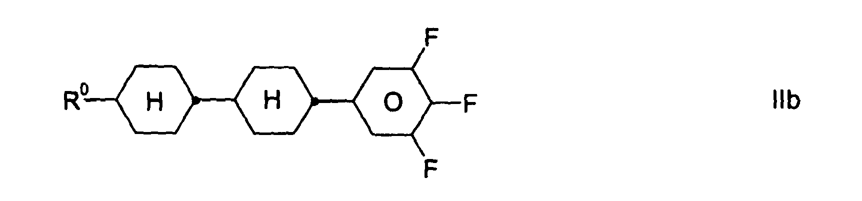 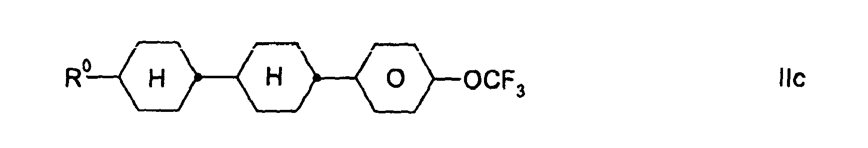 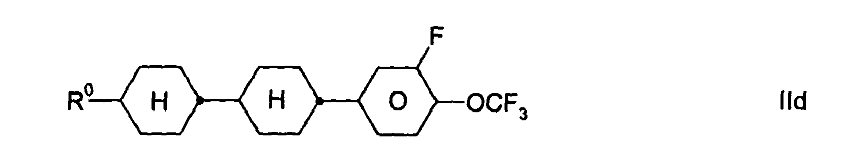 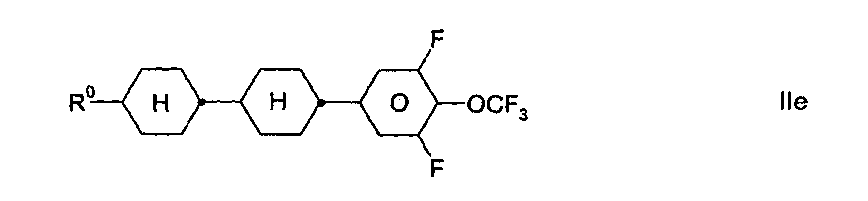 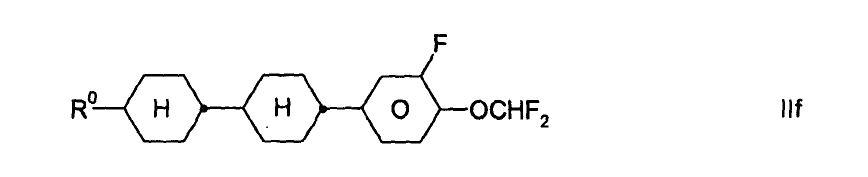 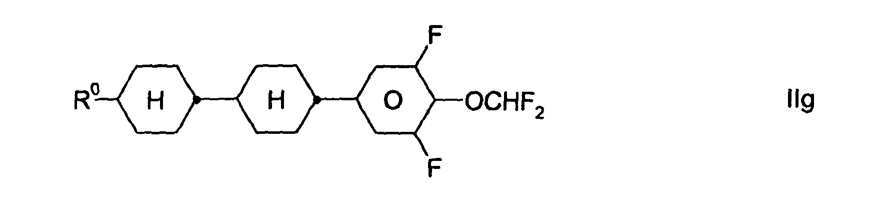 worin R⁰ die in Anspruch 3 angegebenen Bedeutungen hat,
enthält.

6. Flüssigkristallines Medium nach einem der Ansprüche 1 bis 5, **dadurch gekennzeichnet, dass** es zusätzlich eine oder mehrere Dioxan-Verbindungen der Formeln D-1 bis D-4, 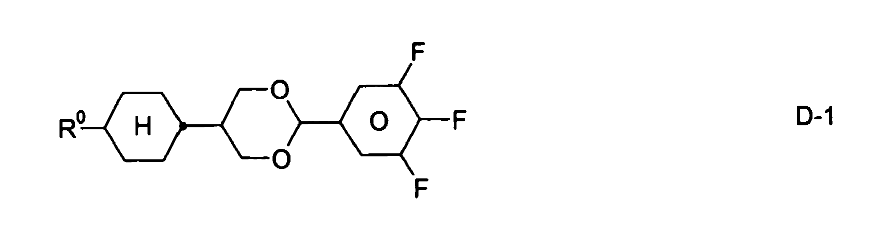 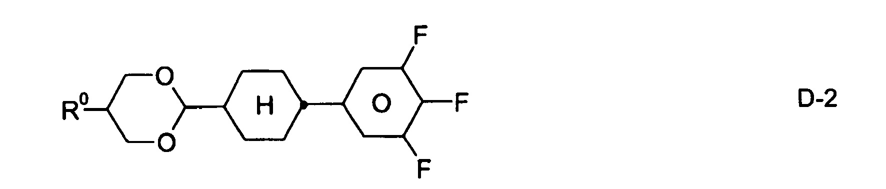 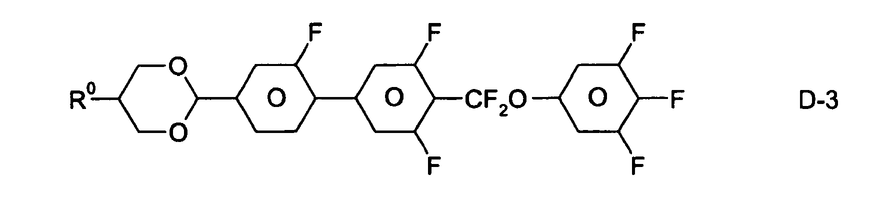 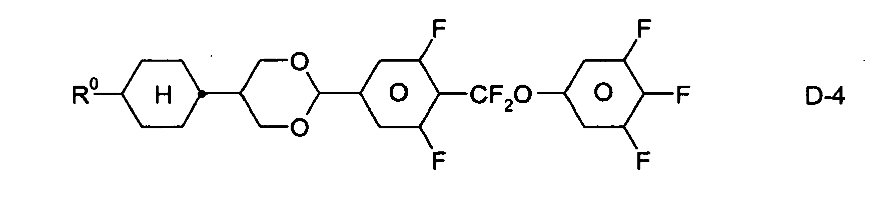 worin
R⁰ die in Anspruch 3 angegebenen Bedeutungen hat,
enthält.

7. Flüssigkristallines Medium nach mindestens einem der Ansprüche 1 bis 6, **dadurch gekennzeichnet, dass** der Anteil an Verbindungen der Formeln I-1 bis I-10 im Gesamtgemisch 0,01 bis 30 Gew.% beträgt.

8. Flüssigkristallines Medium nach einem der Ansprüche 1 bis 7, **dadurch gekennzeichnet, dass** der Anteil an Verbindungen der Formeln I-1 bis I-10 und IA im Gesamtgemisch mindestens 10 Gew.% beträgt.

9. Verwendung des flüssigkristallinen Mediums nach mindestens einem der Ansprüche 1 bis 8 für elektrooptische Zwecke.

10. Elektrooptische Flüssigkristallanzeige enthaltend ein flüssigkristallines Medium nach mindestens einem der Ansprüche 1 bis 8.

## Claims

1. Liquid-crystalline medium based on a mixture of polar compounds,
**characterised in that** it comprises one, two or more compounds of the formulae I-1 to I-10 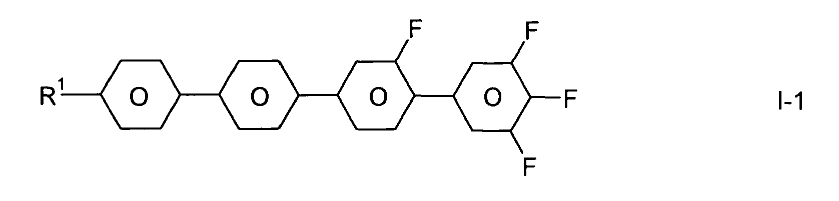 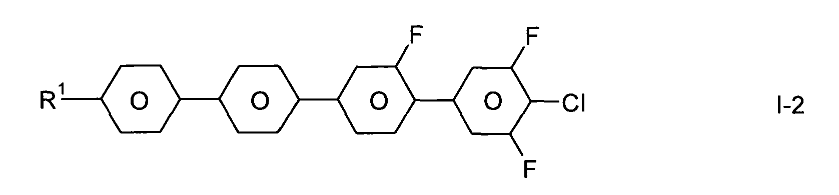 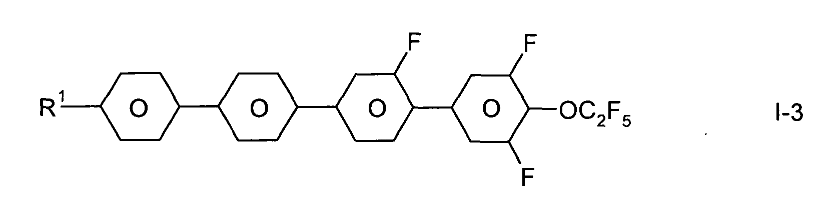 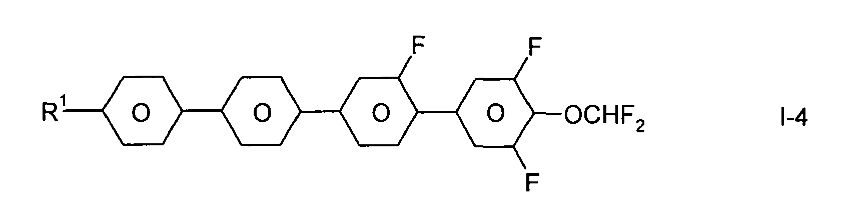 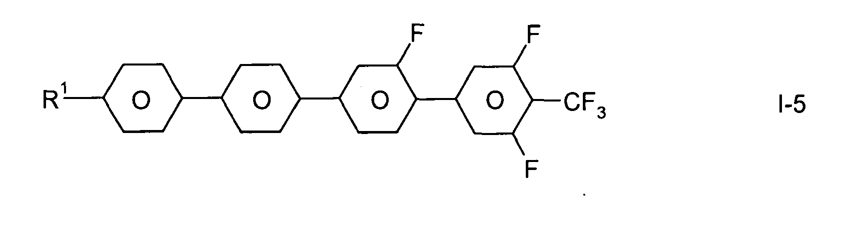 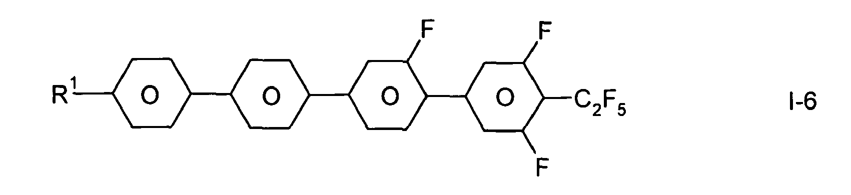 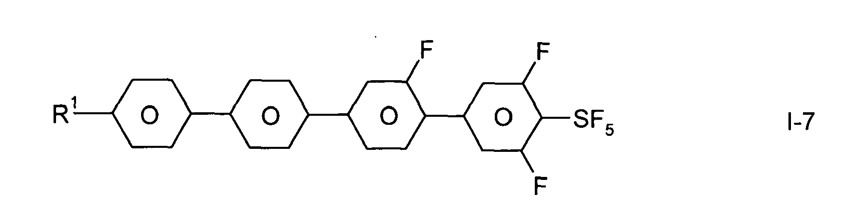 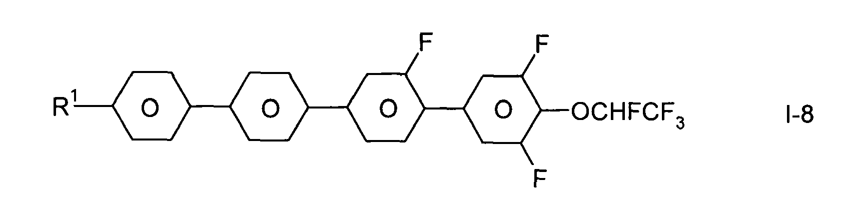 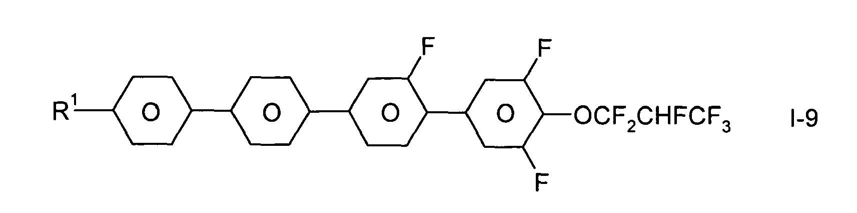 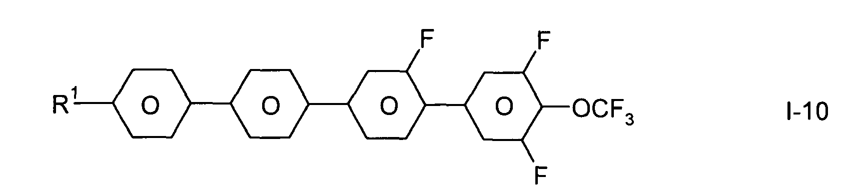 and
one or more compounds of the formula IA 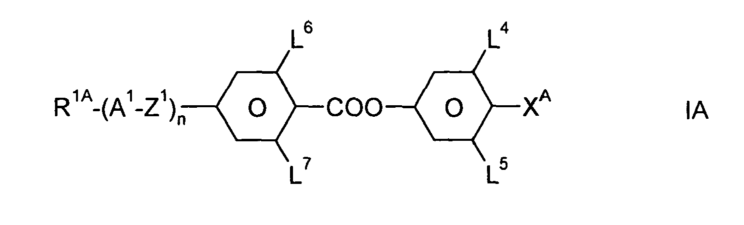 in which
R¹ and R^{1A} each, independently of one another, denote a halogenated or unsubstituted alkyl or alkoxy radical having 1 to 15 C atoms, where, in addition, one or more CH₂ groups in these radicals may each, independently of one another, be replaced by -C≡C-, 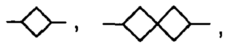 -CH=CH-, -O-, -CO-O-, -CF₂O-, -OCF₂-, or -O-CO- in such a way that O atoms are not linked directly to one another,
X^{A} in each case, independently of one another, denotes F, CI, CN, SF₅, SCN, NCS, halogenated alkyl radical, halogenated alkenyl radical, halogenated alkoxy radical or halogenated alkenyloxy radical having up to 6 C atoms,
A¹ denotes
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl, fluorene-2,7-diyl,
where the radicals a), b) and c) may be mono- or polysubstituted by halogen atoms,
Z¹ denotes -CO-O-, -O-CO-, -CF₂O- -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CF-, -CF=CH-, -CH=CH-, -C≡C- or a single bond,
L⁴ to L⁷ each, independently of one another, denote H or F, and
n denotes 0, 1 or 2.

2. Liquid-crystalline medium according to Claim 1, **characterised in that** it comprises one or more compounds of the formulae IA-1 to IA-16 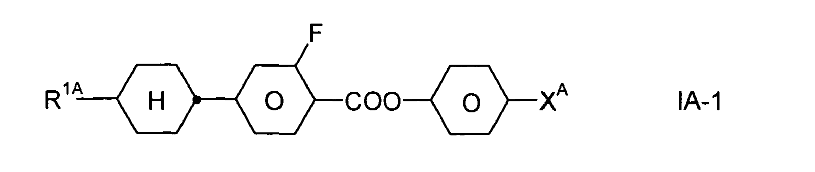 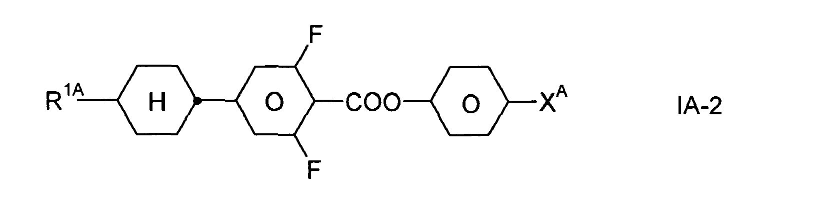 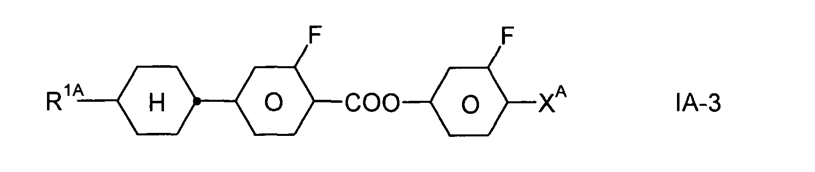 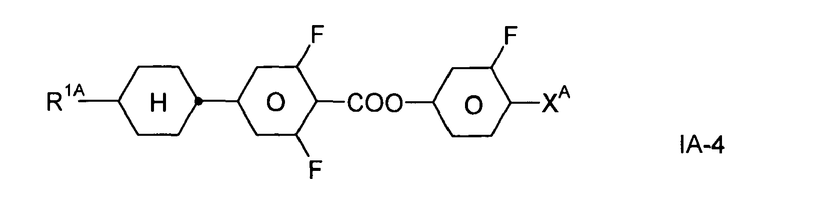 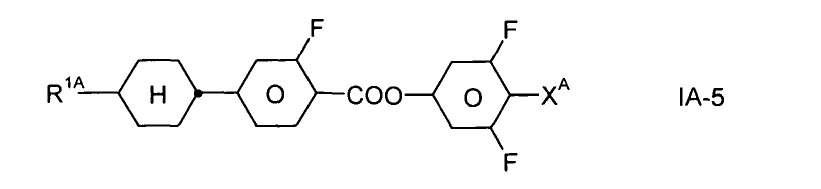 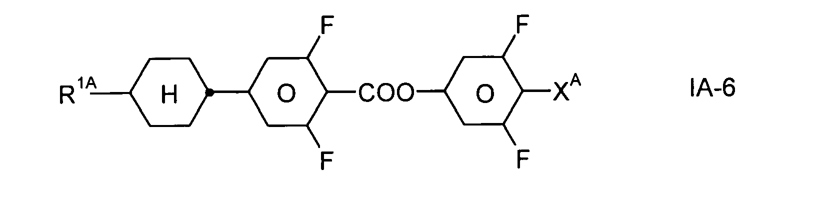 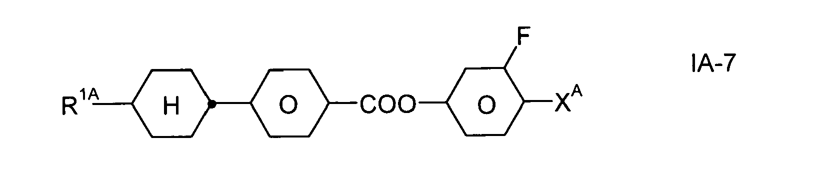 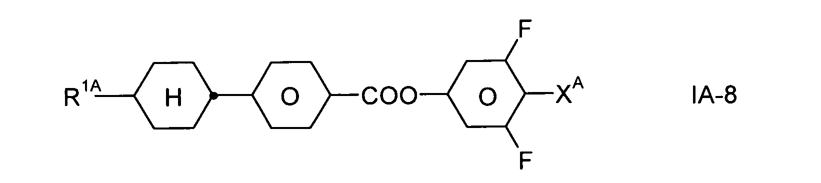 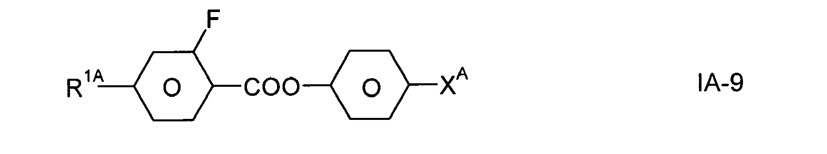 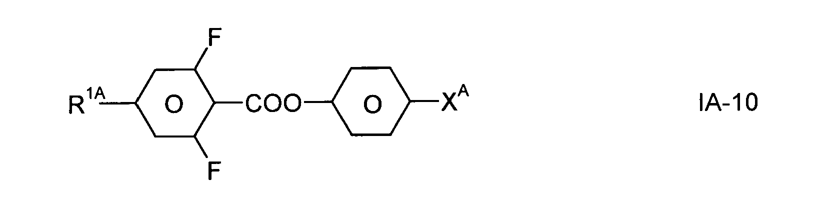 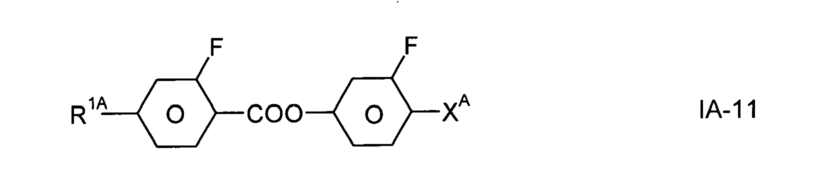 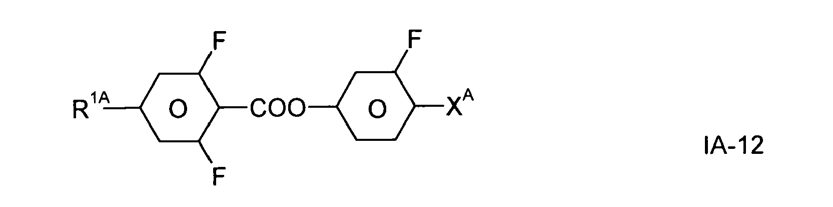 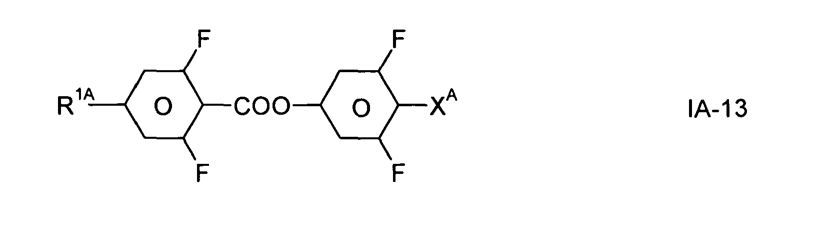 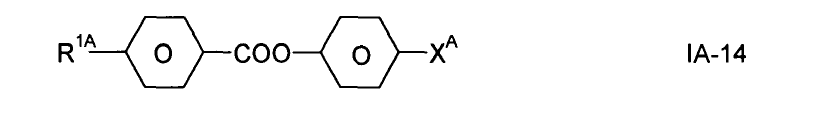 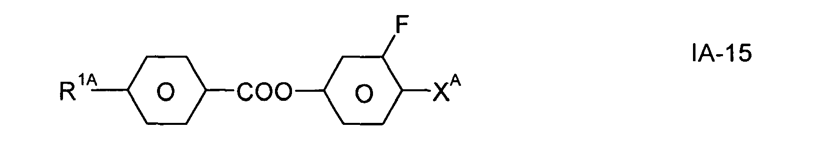 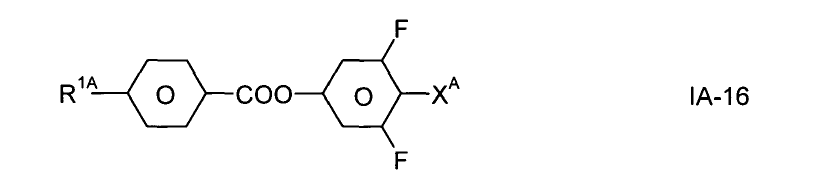 in which
R^{1A} and X^{A} have the meanings indicated in Claim 1.

3. Liquid-crystalline medium according to at least one of Claims 1 to 2,
**characterised in that** it additionally comprises one or more compounds selected from the group consisting of the general formulae II to VI 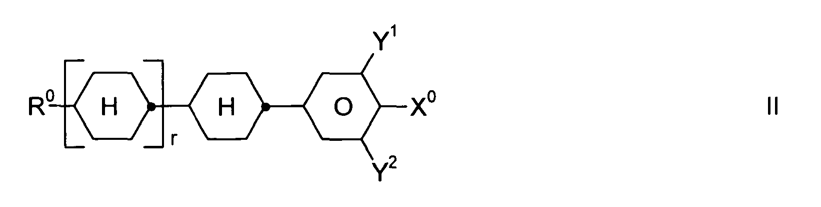 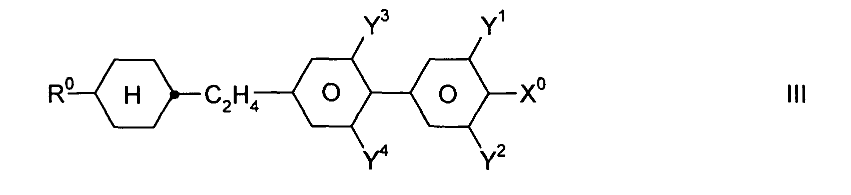 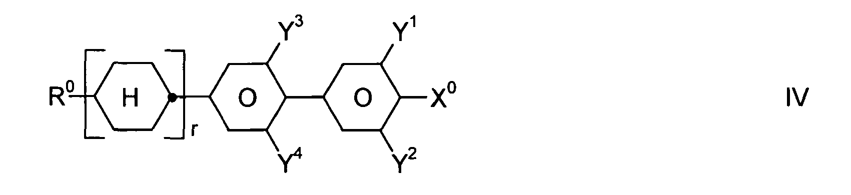 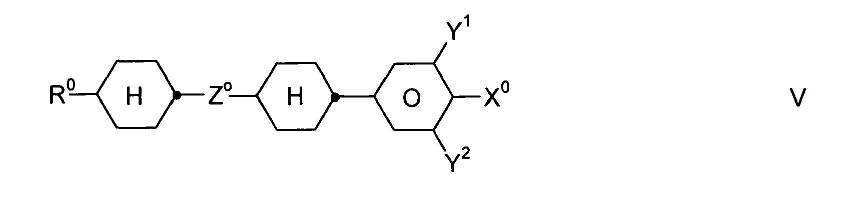 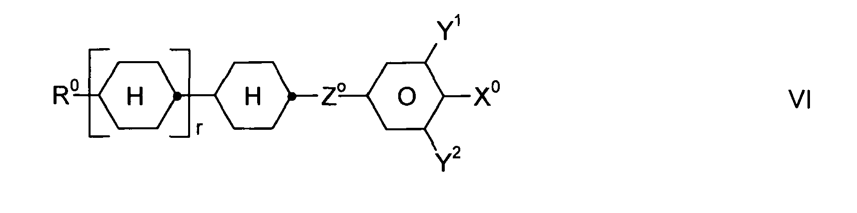 in which
R⁰ denotes alkyl, alkoxy, oxaalkyl, fluoroalkyl or alkenyl, each having up to 9 C atoms,
X⁰ denotes F, Cl, halogenated alkyl, halogenated alkenyl, halogenated oxaalkyl, halogenated alkenyloxy or halogenated alkoxy having up to 6 C atoms,
Z⁰ denotes -C₂F₄-, -CF=CF-, -CH=CH-, -C₂H₄-, -(CH₂)₄-, -OCH₂-, -CH₂O-, -CF₂O- or -OCF₂-,
Y¹ to Y⁴ each, independently of one another, denote H or F,
r denotes 0 or 1.

4. Liquid-crystalline medium according to at least one of Claims 1 to 3,
**characterised in that** it additionally comprises one or more compounds of the formula E 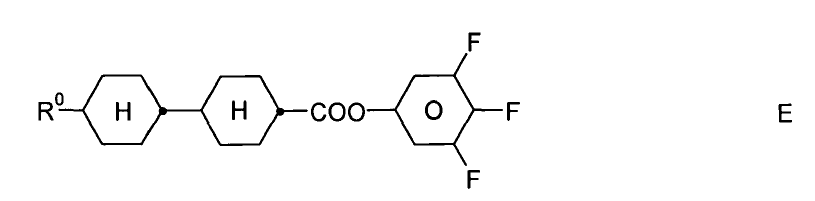 in which R⁰ has the meanings indicated in Claim 3.

5. Liquid-crystalline medium according to at least one of Claims 1 to 4,
**characterised in that** it comprises one or more compounds of the formulae IIa to IIg 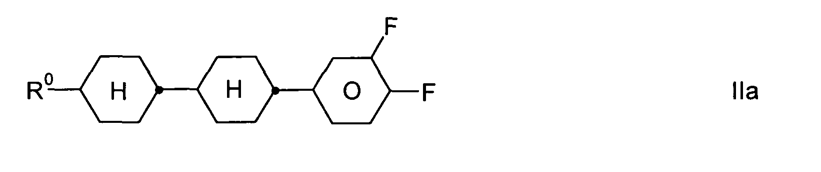 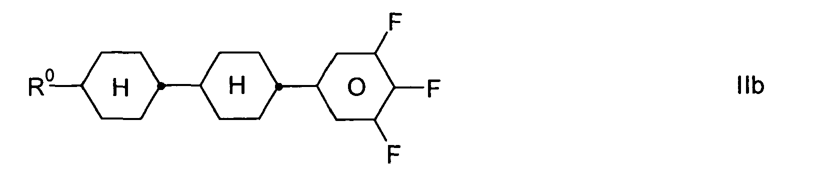 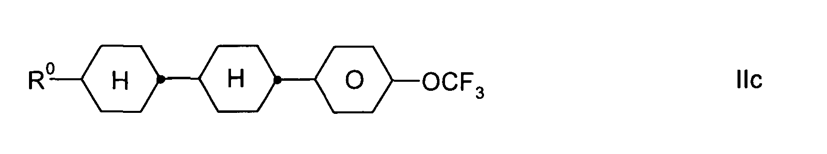 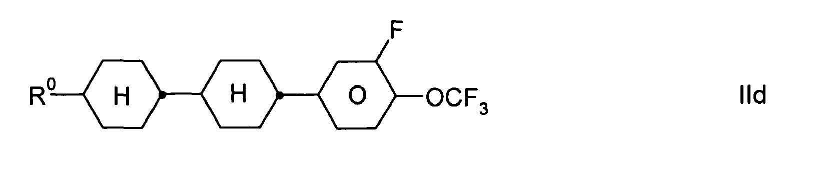 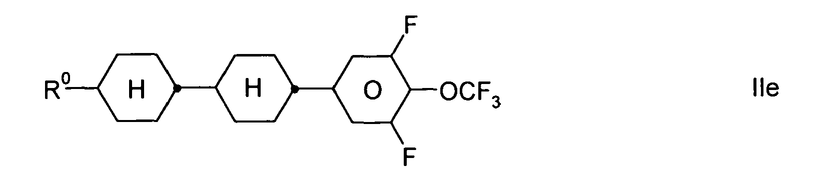 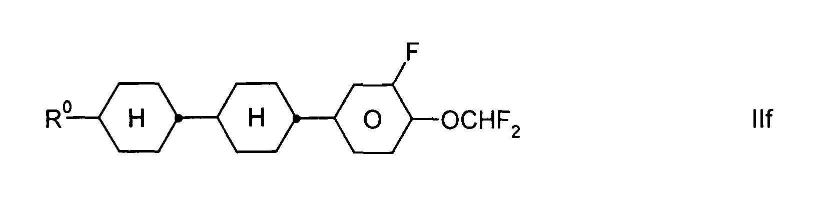 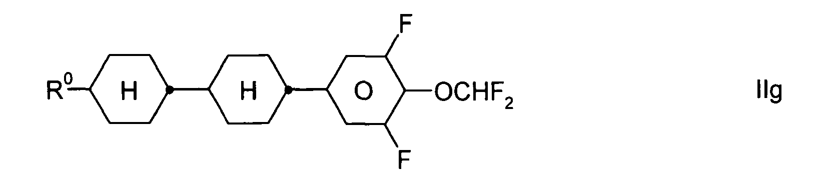 in which R⁰ has the meanings indicated in Claim 3.

6. Liquid-crystalline medium according to one of Claims 1 to 5,
**characterised in that** it additionally comprises one or more dioxane compounds of the formulae D-1 to D-4 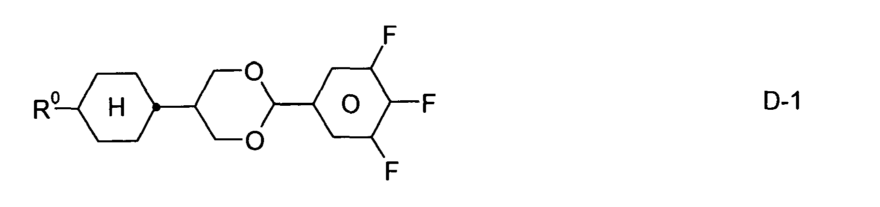 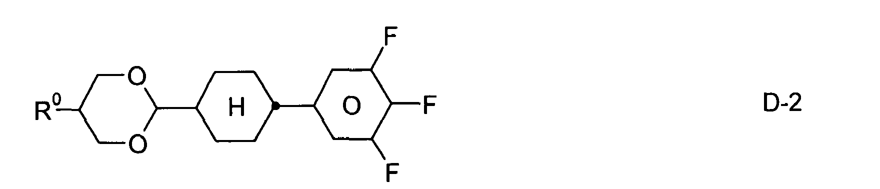 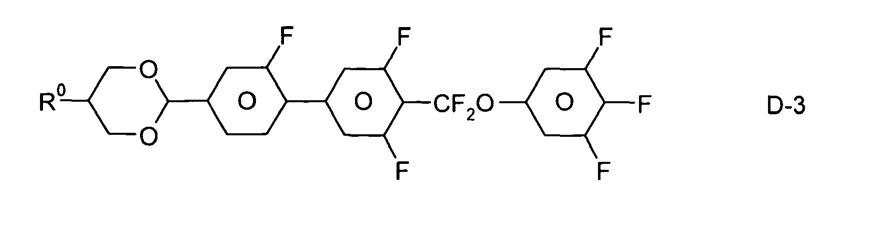 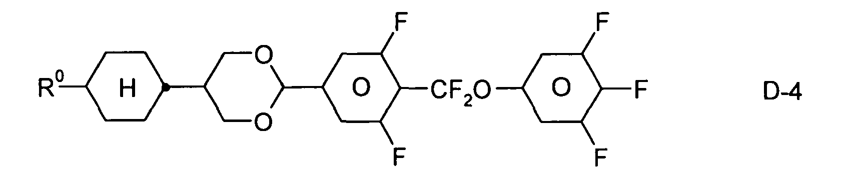 in which
R⁰ has the meanings indicated in Claim 3.

7. Liquid-crystalline medium according to at least one of Claims 1 to 6,
**characterised in that** the proportion of compounds of the formulae I-1 to I-10 in the mixture as a whole is 0.01 to 30% by weight.

8. Liquid-crystalline medium according to one of Claims 1 to 7,
**characterised in that** the proportion of compounds of the formulae I-1 to I-10 and IA in the mixture as a whole is at least 10% by weight.

9. Use of the liquid-crystalline medium according to at least one of Claims 1 to 8 for electro-optical purposes.

10. Electro-optical liquid-crystal display containing a liquid-crystalline medium according to at least one of Claims 1 to 8.

## Revendications

1. Milieu cristallin liquide à base d'un mélange de composés polaires, **caractérisé en ce qu'**il comprend un, deux ou plus de deux composés des formules I-1 à I-10 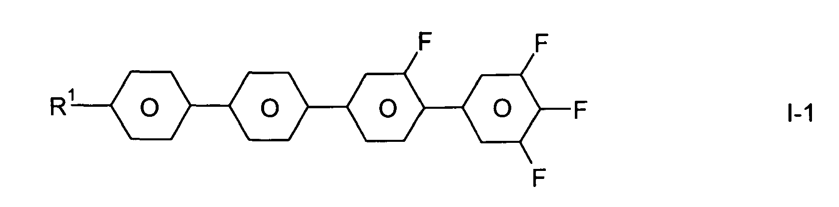 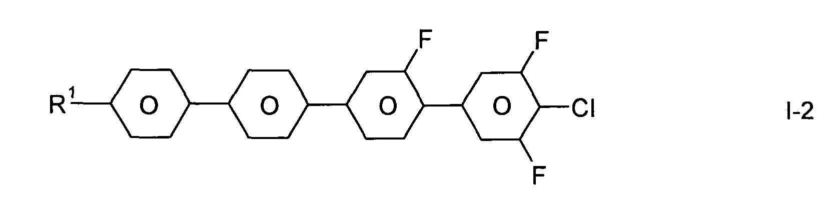 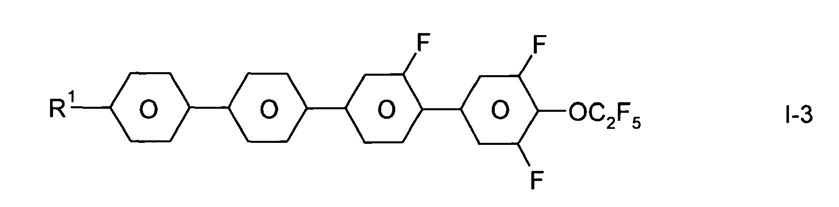 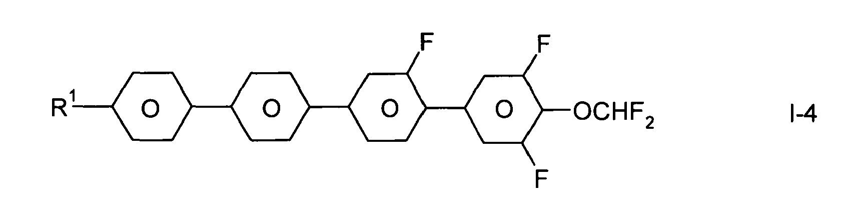 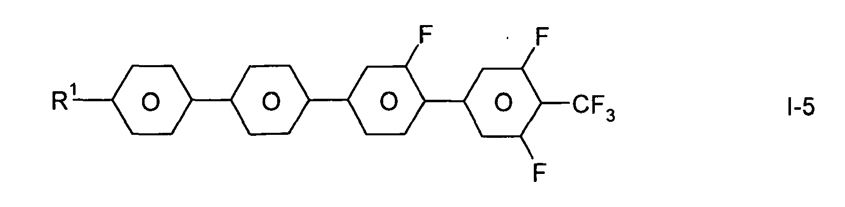 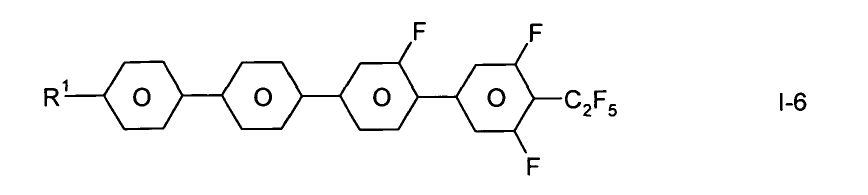 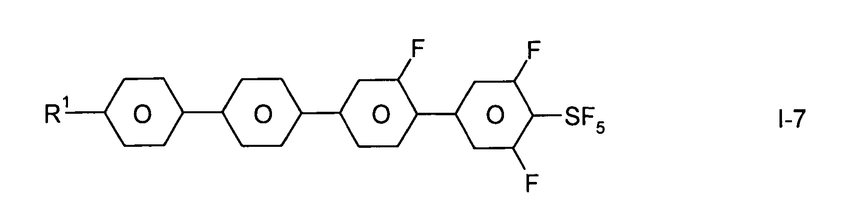 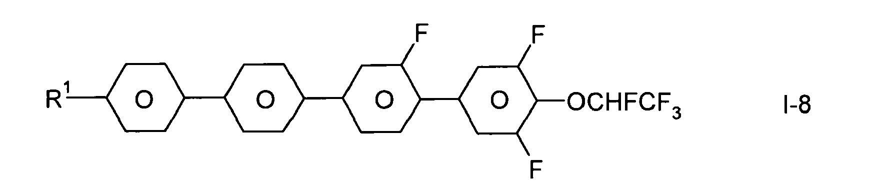 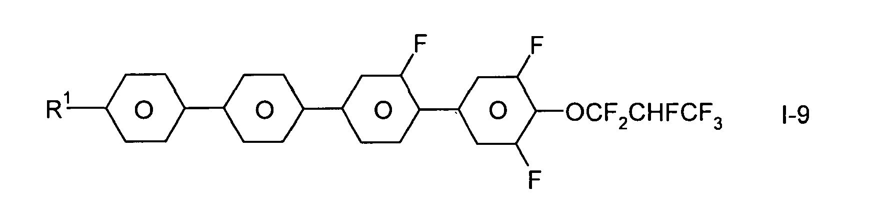 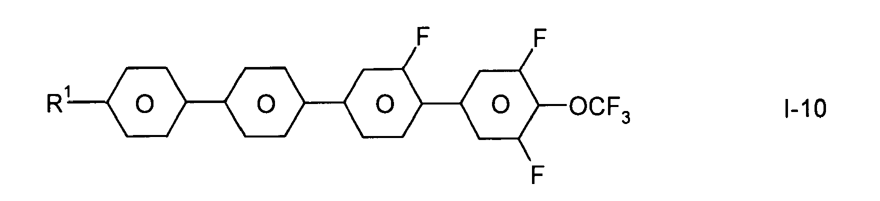 et
un ou plusieurs composés de la formule IA 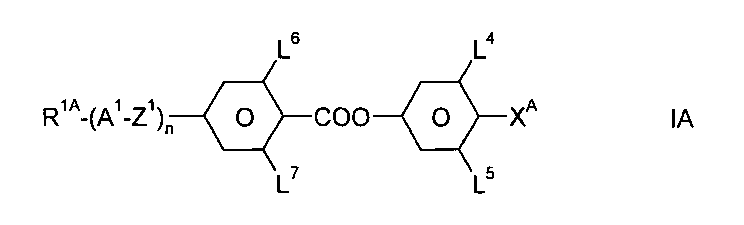 dans lesquelles
R¹ et R^{1A} chacun, indépendamment l'un de l'autre, représente un radical alkyle ou alcoxy halogéné ou non substitué ayant 1 à 15 atomes de C, où, en addition, un ou plusieurs groupes CH₂ dans ces radicaux peuvent chacun, indépendamment l'un de l'autre, être remplacés par -C≡C-, 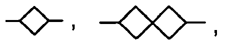 -CH=CH-, -O-, -CO-O-, -CF₂O-, -OCF₂-, ou -O-CO- de telle sorte que des atomes de O ne soient pas liés directement les uns aux autres,
X^{A} dans chaque cas, indépendamment l'un de l'autre, représente F, CI, CN, SF₅, SCN, NCS, radical alkyle halogéné, radical alkényle halogéné, radical alcoxy halogéné ou radical alkényloxy halogéné ayant jusqu'à 6 atomes de C,
A¹ représente
a) un radical 1,4-cyclohexénylène ou 1,4-cyclohexylène, dans lequel un ou deux groupes CH₂ non adjacents peuvent être remplacés par -O- ou -S-,
b) un radical 1,4-phénylène, dans lequel un ou deux groupes CH peuvent être remplacés par N,
c) un radical parmi le groupe pipéridine-1,4-diyle, 1,4-bicyclo[2.2.2]octylène, naphtalène-2,6-diyle, décahydronaphtalène-2,6-diyle, 1,2,3,4-tétrahydronaphtalène-2,6-diyle, phénanthrène-2,7-diyle, fluorène-2,7-diyle,
où les radicaux a), b) et c) peuvent être mono- ou polysubstitués par des atomes d'halogène,
Z¹ représente -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CF-, -CF=CH-, -CH=CH-, -C≡C- ou une liaison simple,
L⁴ à L⁷ chacun, indépendamment les uns des autres, représente H ou F, et
n représente 0, 1 ou 2.

2. Milieu cristallin liquide selon la revendication 1, **caractérisé en ce qu'**il comprend un ou plusieurs composés des formules IA-1 à IA-16 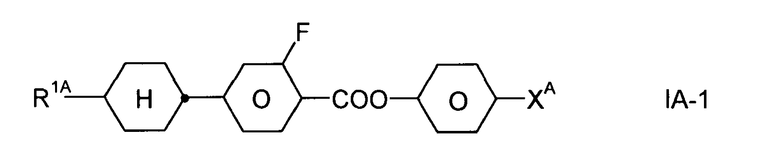 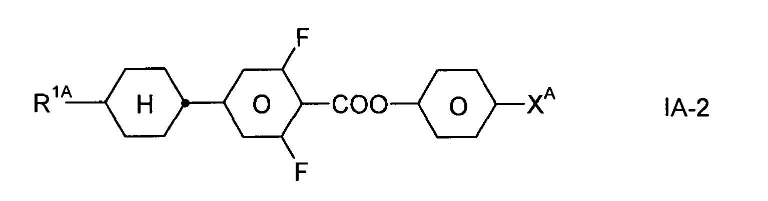 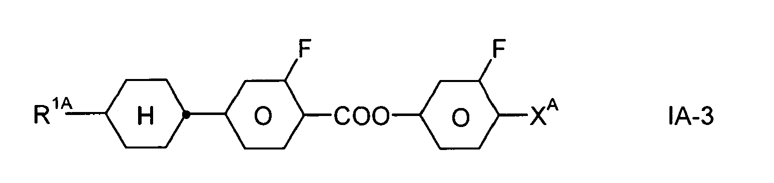 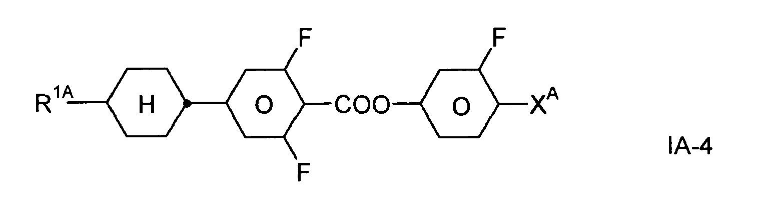 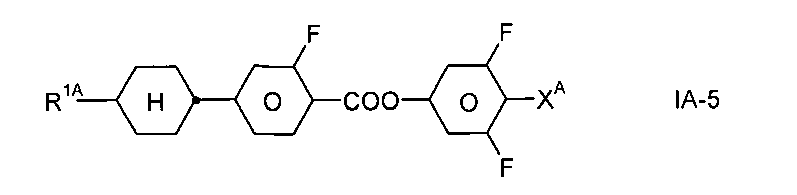 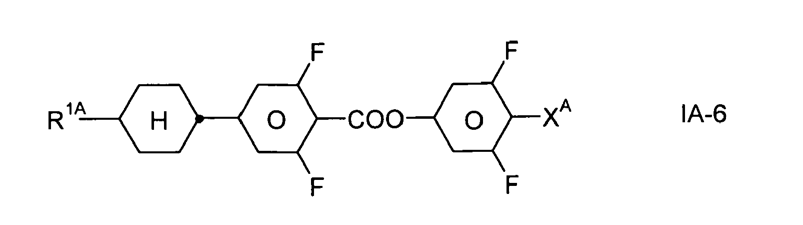 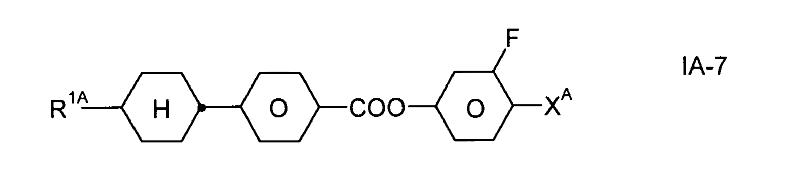 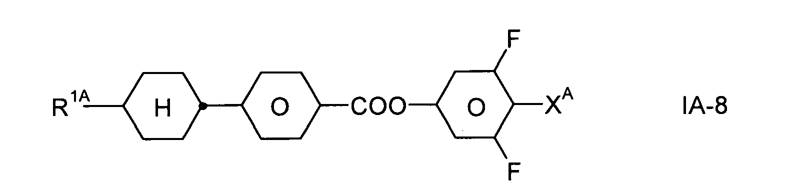 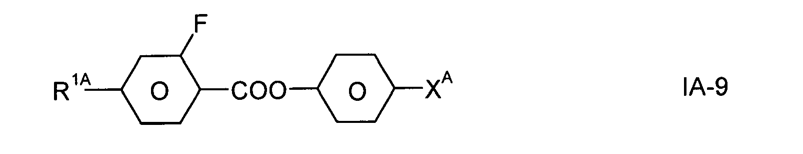 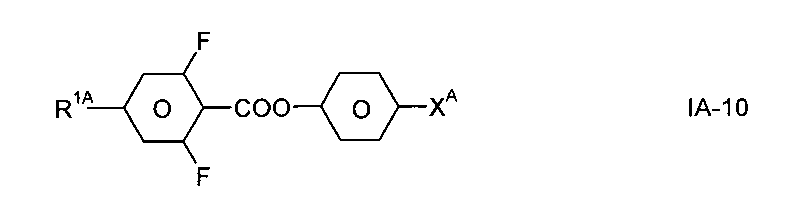 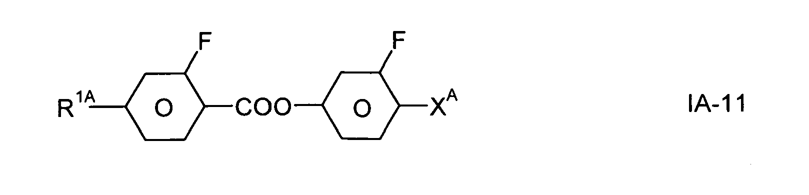 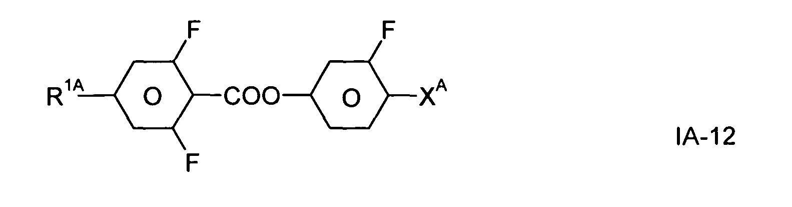 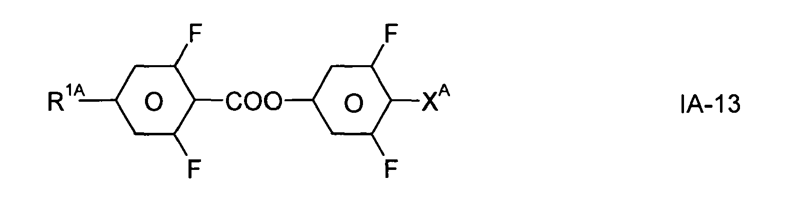 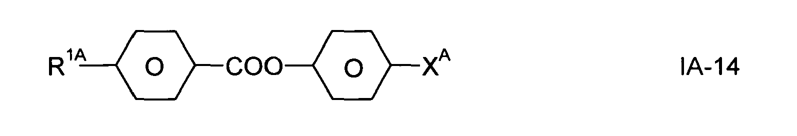 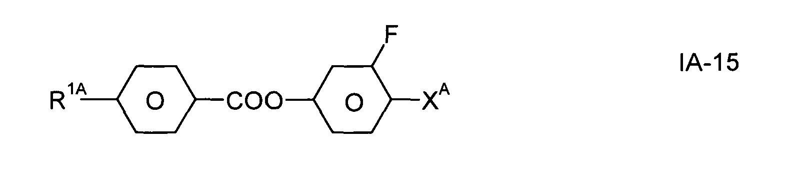 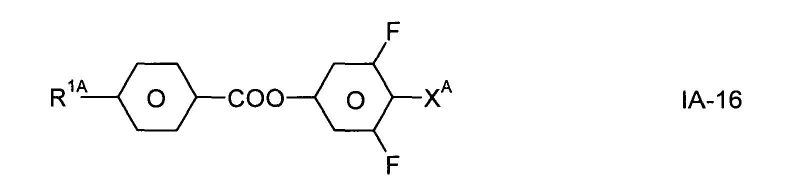 dans lesquelles
R^{1A} et X^{A} ont les significations indiquées dans la revendication 1.

3. Milieu cristallin liquide selon au moins l'une des revendications 1 à 2, **caractérisé en ce qu'**il comprend additionnellement un ou plusieurs composés choisis parmi le groupe constitué des formules générales II à VI 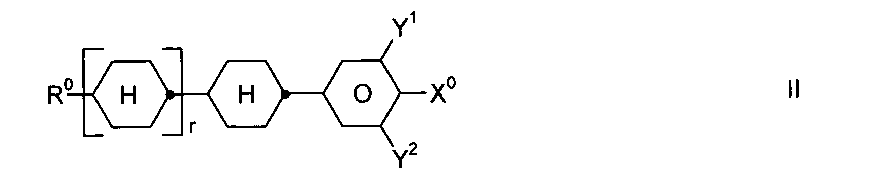 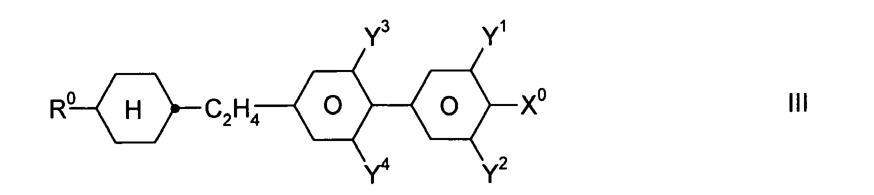 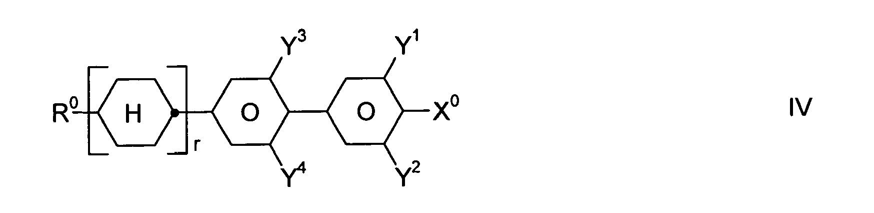 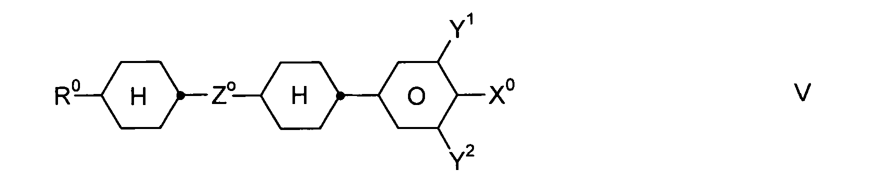 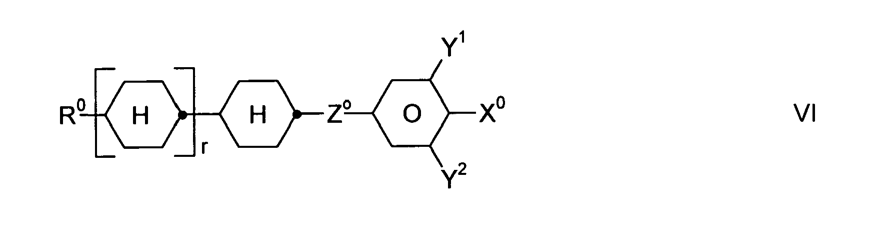 dans lesquelles
R⁰ représente alkyle, alcoxy, oxaalkyle, fluoroalkyle ou alkényle, chacun ayant jusqu'à 9 atomes de C,
X⁰ représente F, CI, alkyl halogéné, alkényle halogéné, oxaalkyle halogéné, alkényloxy halogéné ou alcoxy halogéné ayant jusqu'à 6 atomes de C,
Z⁰ représente -C₂F₄-, -CF=CF-, -CH=CH-, -C₂H₄-, -(CH₂)₄-, -OCH₂-, -CH₂O-, -CF₂O- ou -OCF₂-,
Y¹ à Y⁴ chacun, indépendamment les uns des autres H ou F,
r représente 0 ou 1.

4. Milieu cristallin liquide selon au moins l'une des revendications 1 à 3, **caractérisé en ce qu'**il comprend additionnellement un ou plusieurs composés de la formule E 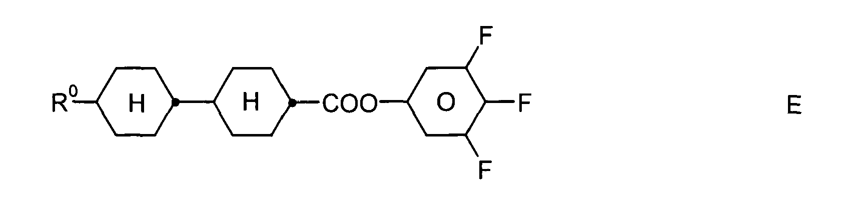 dans laquelle R⁰ a la signification indiquée dans la revendication 3.

5. Milieu cristallin liquide selon au moins l'une des revendications 1 à 4, **caractérisé en ce qu'**il comprend un ou plusieurs composés des formules IIa à IIg 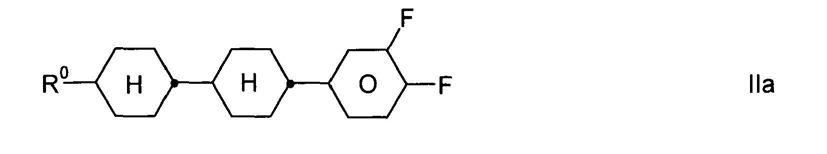 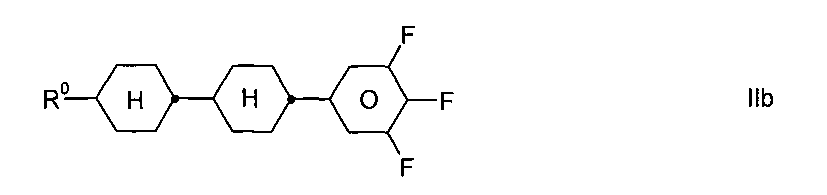 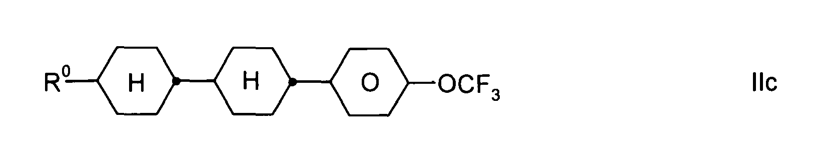 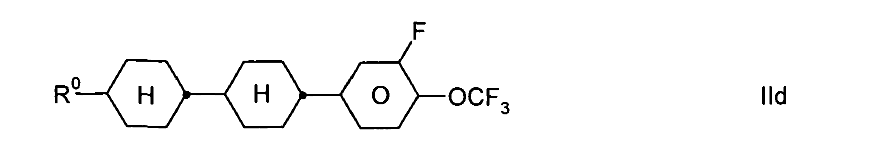 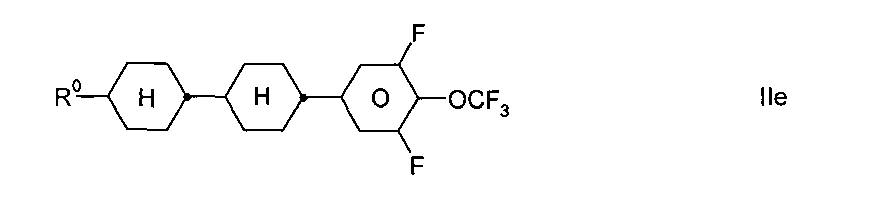 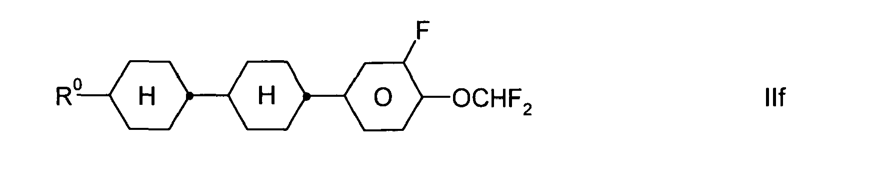 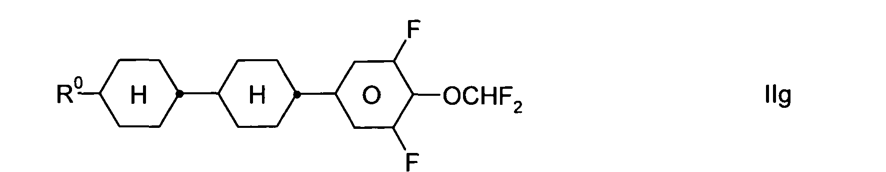 dans lesquelles R⁰ a la signification indiquée dans la revendication 3.

6. Milieu cristallin liquide selon l'une des revendications 1 à 5, **caractérisé en ce qu'**il comprend additionnellement un ou plusieurs composés dioxane des formules D-1 à D-4 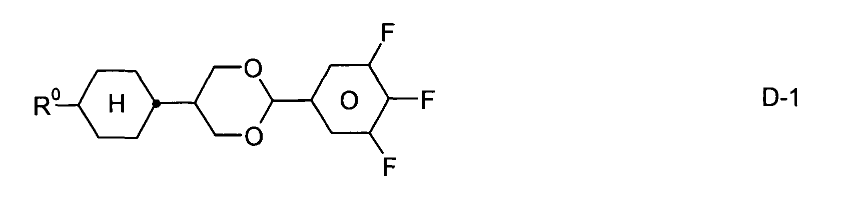 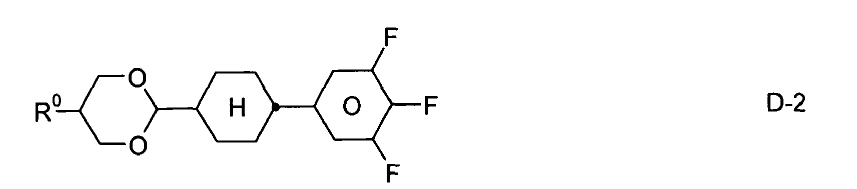 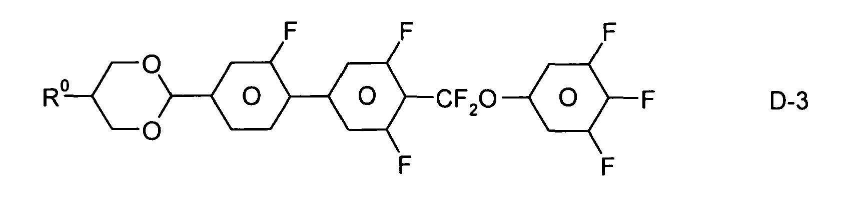 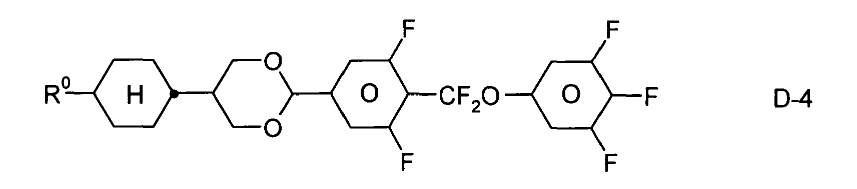 dans lesquelles
R⁰ a la signification indiquée dans la revendication 3.

7. Milieu cristallin liquide selon au moins l'une des revendications 1 à 6, **caractérisé en ce que** la proportion des composés des formules I-1 à I-10 dans le mélange dans son ensemble est 0.01 à 30% en poids.

8. Milieu cristallin liquide selon l'une des revendications 1 à 7, **caractérisé en ce que** la proportion des composés des formules I-1 à I-10 et IA dans le mélange dans son ensemble est au moins 10% en poids.

9. Utilisation du milieu cristallin liquide selon au moins l'une des revendications 1 à 8 à des fins électro-optiques.

10. Affichage à cristaux liquides électro-optique contenant un milieu cristallin liquide selon au moins l'une des revendications 1 à 8.
